# EUROPEAN PATENT APPLICATION

(11) **EP 4 694 531 A1**
(43) Date of publication of application: **11.02.2026**
(21) Application number: 23945357.4
(22) Date of filing: 14.07.2023
(51) Int. Cl.: H04W 74/08

(54) **TRANSMISSION CONTROL METHOD, APPARATUS, AND STORAGE MEDIUM**

(71) Applicant: GUANGDONG OPPO MOBILE TELECOMMUNICATIONS CORP., LTD., Dongguan, Guangdong 523860 (CN)
(72) Inventor: HONG, Feng, Dongguan, Guangdong 523860 (CN); LU, Liuming, Dongguan, Guangdong 523860 (CN); LUO, Chaoming, Dongguan, Guangdong 523860 (CN); HOU, Ronghui, Dongguan, Guangdong 523860 (CN)
(74) Representative: Grassi, Stefano
(86) International application number: PCT/CN2023/107507
(87) International publication number: WO 2025/015458

(57) **Abstract**

Provided in the embodiments of the present application are a transmission control method, a device, and a storage medium. The method comprises: a first non-access point device receiving first information sent by an access point device, wherein the first information is configured to indicate a first target wake time (TWT) service period (SP); in the first TWT SP, P2P transmission is preferentially performed over at least one P2P link; and the at least one link comprises a first P2P link between the first non-access point device and a second non-access point device.

## Description

### TECHNICAL FIELD

Embodiments of the disclosure relate to the field of mobile communication technologies, and particularly to a transmission control method and device, and a storage medium.

### BACKGROUND

At present, the Wireless Local Area Network (WLAN) industry is one of the fastest developing industries in the entire data communication field. As a supplement and extension of traditional wired local area networks, WLAN solutions have gained popularity among home network users, small and medium-sized office users, enterprise users and telecom operators due to their advantages such as flexibility, mobility, expandability and lower investment cost, and thus have been quickly applied.

At present, the Wireless Local Area Network (WLAN) industry is one of the fastest developing industries in the entire data communication field. As a supplement and extension of traditional wired local area networks, WLAN solutions have gained popularity among home network users, small and medium-sized office users, enterprise users and telecom operators due to their advantages such as flexibility, mobility, expandability and lower investment cost, and thus have been quickly applied.

The coordination coexistence of the Peer-to-Peer (P2P) network and the WLAN is one of the key indicators of the next generation WLAN. How to realize the integration of the P2P transmission and WLAN is an urgent problem to be solved.

### SUMMARY

Embodiments of the disclosure provide a transmission control method and device, and a storage medium.

A transmission control method provided in an embodiment of the disclosure includes the following operation.

A first non-Access Point (non-AP) device receives first information transmitted by an Access Point (AP) device. The first information is used for indicating a first Target Wake Time (TWT) Service Period (SP). During the first TWT SP, P2P transmission is prioritized on at least one P2P link. The at least one link includes a first P2P link between the first non-AP device and a second non-AP device.

A transmission control method provided in an embodiment of the disclosure includes the following operation.

An AP device transmits first information to a first non-AP device. The first information is used for indicating a first TWT SP. During the first TWT SP, P2P transmission is prioritized on at least one P2P link. The at least one link includes a first P2P link between the first non-AP device and a second non-AP device.

A first non-AP device provided in an embodiment of the disclosure includes a first communication unit.

The first communication unit is configured to receive first information transmitted by an AP device. The first information is used for indicating a first TWT SP. During the first TWT SP, P2P transmission is prioritized on at least one P2P link. The at least one link includes a first P2P link between the first non-AP device and a second non-AP device.

An AP device provided in an embodiment of the disclosure includes a second communication unit.

The second communication unit is configured to transmit first information to a first non-AP device. The first information is used for indicating a first TWT SP. During the first TWT SP, P2P transmission is prioritized on at least one P2P link. The at least one link includes a first P2P link between the first non-AP device and a second non-AP device.

A communication device provided in an embodiment of the disclosure includes a processor and a memory. The memory is configured to store a computer program, and the processor is configured to call the computer program stored in the memory and run the computer program, to cause the communication device to perform the above transmission control method.

A chip provided in an embodiment of the disclosure is configured to perform the above transmission control method.

Specifically, the chip includes a processor for calling a computer program from a memory and running the computer program, to cause a device installed with the chip to perform the above transmission control method.

A computer readable storage medium provided in an embodiment of the disclosure is configured to store a computer program that, when executed, causes a computer to perform above transmission control method.

A computer program product provided in an embodiment of the disclosure includes computer program instructions that, when executed, cause a computer to perform the above transmission control method.

A computer program provided in an embodiment of the disclosure, when being run on a computer, causes the computer to perform the above transmission control method.

According to the above technical solutions, an AP device indicates a first TWT SP to a first non-AP device, during the first TWT SP, P2P transmission is prioritized on at least one P2P link. In this way, a TWT SP for coordinating the P2P transmission is proposed, so that scheduling of the P2P transmission over the at least one P2P link by the AP is achieved, thereby improving the resource utilization.

### BRIEF DESCRIPTION OF THE DRAWINGS

The accompanying drawings, which are illustrated herein, provide a further understanding of the disclosure and constitute a part of this disclosure. The exemplary embodiments of the disclosure and their description are used to explain the disclosure and not to unduly limit the disclosure. In the drawings:
FIG. 1A is an optional diagram of an application scenario according to an embodiment of the disclosure.
FIG. 1B is an optional diagram of an application scenario according to an embodiment of the disclosure.
FIG. 1C is an optional diagram of an application scenario according to an embodiment of the disclosure.
FIG. 2 is an optional format diagram of a Per-Station (STA) Profile subelement according to an embodiment of the disclosure.
FIG. 3 is an optional diagram of a Restricted Target Wake Time (r-TWT) supporting P2P transmission according to an embodiment of the disclosure.
FIG. 4 is an optional diagram of a P2P transmission window according to an embodiment of the disclosure.
FIG. 5 is an optional diagram of Enhanced Distributed Channel Access (EDCA) parameter broadcast in an r-TWT mode according to an embodiment of the disclosure.
FIG. 6 is an optional diagram of a Tunneled Direct Link Setup (TDLS) setup procedure according to an embodiment of the disclosure.
FIG. 7 is an optional diagram of a MLD (MLD) establishing a TDLS direct link according to an embodiment of the disclosure.
FIG. 8 is an optional diagram of a TDLS direct link of an MLD according to an embodiment of the disclosure.
FIG. 9 is an optional diagram of transmission of a TDLS setup request frame of an MLD according to an embodiment of the disclosure.
FIG. 10 is an optional flowchart of transmission of a TDLS setup response frame of an MLD according to an embodiment of the disclosure.
FIG. 11 is an optional diagram of a TDLS direct link of an MLD according to an embodiment of the disclosure.
FIG. 12 is an optional diagram of individual TWT operations according to an embodiment of the disclosure.
FIG. 13 is an optional diagram of broadcast TWT operations according to an embodiment of the disclosure.
FIG. 14 is an optional diagram of frame transmission of trigger-enabled sharing mode 2 according to an embodiment of the disclosure.
FIG. 15 is an optional diagram of a TDLS setup procedure according to an embodiment of the disclosure.
FIG. 16 is an optional diagram of an application scenario according to an embodiment of the disclosure.
FIG. 17 is an optional flowchart of a transmission control method according to an embodiment of the disclosure.
FIG. 18 is an optional flowchart of a transmission control method according to an embodiment of the disclosure.
FIG. 19 is an optional flowchart of a Multi-P2P link according to an embodiment of the disclosure.
FIG. 20A is an optional diagram of trigger-enabled P2P transmission according to an embodiment of the disclosure.
FIG. 20B is an optional diagram of non-trigger-enabled P2P transmission according to an embodiment of the disclosure.
FIG. 21 is an optional flowchart of a transmission control method according to an embodiment of the disclosure.
FIG. 22 is an optional format diagram of an STA Control field according to an embodiment of the disclosure.
FIG. 23 is an optional format diagram of an STA Info field according to an embodiment of the disclosure.
FIG. 24 is an optional format diagram of a P2P link report field according to an embodiment of the disclosure.
FIG. 25 is an optional format diagram of a broadcast TWT recommendation subfield according to an embodiment of the disclosure.
FIG. 26 is an optional format diagram of a P2P peer subfield according to an embodiment of the disclosure.
FIG. 27 is an optional flowchart of a transmission control method according to an embodiment of the disclosure.
FIG. 28 is an optional flowchart of a MLD establishing a TDLS direct link according to an embodiment of the disclosure.
FIG. 29 is an optional diagram of trigger-enabled P2P transmission according to an embodiment of the disclosure.
FIG. 30 is an optional diagram of non-trigger-enabled P2P transmission according to an embodiment of the disclosure.
FIG. 31 is an optional diagram of non-trigger-enabled P2P transmission according to an embodiment of the disclosure.
FIG. 32 is an optional diagram of non-trigger-enabled P2P transmission according to an embodiment of the disclosure.
FIG. 33 is an optional format diagram of a P2P TWT EDCA Parameter Set element according to an embodiment of the disclosure.
FIG. 34 is an optional diagram of a Multi-P2P link according to an embodiment of the disclosure.
FIG. 35 is an optional structural diagram of a first non-AP device according to an embodiment of the disclosure.
FIG. 36 is an optional structural diagram of an AP device according to an embodiment of the disclosure.
FIG. 37 is a structural diagram of a communication device provided in an embodiment of the disclosure.
FIG. 38 is a structural diagram of a chip according to an embodiment of the disclosure.
FIG. 39 is a block diagram of a communication system provided in an embodiment of the disclosure.

### DETAILED DESCRIPTION

The technical solutions in the embodiments of the disclosure would be described below in conjunction with the accompanying drawings in the embodiments of the disclosure. It is apparent that the described embodiments are a part of the embodiments of the disclosure, rather than all of the embodiments. Based on the embodiments of the disclosure, all other embodiments obtained by those of ordinary skill in the art without creative effort fall within the scope of protection of the disclosure.

The technical solutions in embodiments of the disclosure can be applied to various communication systems, such as a Wireless Local Area Network (WLAN) system, a Wireless Fidelity (WiFi) system, other communication systems and the like. The frequency bands that the WLAN can support may include, but are not limited to, low frequency bands (2.4GHz, 5GHz, 6GHz), high frequency bands (60GHz).

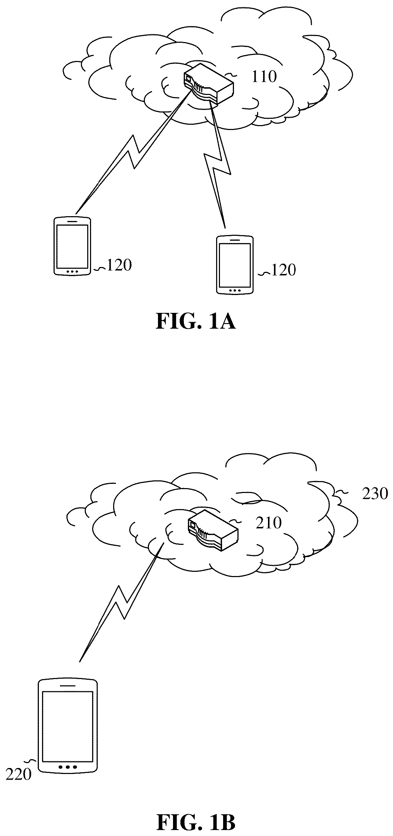

FIG. 1A is an example of a communication system architecture to which an embodiment of the disclosure applies.

As illustrated in FIG. 1A, the communication system 100 may include an AP 110, and STAs 120 accessing a network through the AP 110. In some scenarios, the AP 110 may be referred to as an AP STA, i.e., the AP 110 is also a type of STA in a sense. In some scenarios, the STA 120 may be referred to as a non-AP STA. In some scenarios, the STA 120 may include an AP STA and a non-AP STA. Communication in the communication system 100 may include: a communication between the AP 110 and the STA 120, or a communication between the STA 120 and the STA 120, or a communication between the STA 120 and a peer STA, where the peer STA may refer to a peer device communicating with the STA 120. For example, the peer STA may be an AP or a non-AP STA.

The AP 110 may be used as a bridge connecting a wired network and a wireless network, and its main function is to connect various wireless network clients together, and then connect the wireless network to Ethernet. The AP 110 may be a network device (e.g., a router) or a terminal device (e.g., a mobile phone) with a WiFi chip.

It should be noted that the role of the STA 120 in the communication system is not absolute. That is to say, the role of the STA 120 in the communication system may be switched between the AP and the STA. For example, in some scenarios, when the mobile phone is connected to the route, the mobile phone is an STA, and when the mobile phone is a hotspot for other mobile phones, the mobile phone acts as an AP.

In some embodiments, the AP 110 and the STA 120 may be devices applied in the Vehicle to Everything (V2X), Internet of Things (IoT) nodes, sensors and the like in the IoT, smart cameras, smart remote controllers, smart water meters and the like in a smart home, and sensors and the like in a smart city.

In some embodiments, the AP 110 may be a device supporting the 802.11be standard. The AP may be a device supporting various current and future 802.11 family WLAN standards such as 802.11ax, 802.11ac, 802.11n, 802.11g, 802.11b, and 802.11a. In some embodiments, the STA 120 may support the 802.11be standard. The STA may also support various current and future 802.11 family WLAN standards such as 802.11ax, 802.11ac, 802.11n, 802.11g, 802.11b and 802.11a.

In some embodiments, the AP 110 and/or the STA 120 may be arranged on land including indoor or outdoor areas, handheld, wearable or on-board, or may be arranged on the water (such as on a ship), or may be arranged in the air (such as on an airplane, a balloon, and a satellite).

In some embodiments, the STA 120 may be a mobile phone supporting WLAN/WiFi technologies, a tablet computer (or Pad), a computer with wireless transceiver function, a Virtual Reality (VR) device, an Augmented Reality (AR) device, a wireless device in industrial control, a set-top box, a wireless device in self-driving, an on-board communication device, a wireless device in remote medical, a wireless device in a smart grid, a wireless device in transportation security, a wireless device in a smart city, a wireless terminal device in a smart home, an on-board communication device, a wireless communication chip/Application Specific Integrated Circuit (ASIC)/System on Chip (SoC), or the like.

Exemplarily, the STA 120 may also be a wearable device. The wearable device may also be referred to as a wearable smart device, which is a general term of wearable devices developed by applying a wearable technology to intelligently design daily wearable objects, such as glasses, gloves, watches, clothing, shoes, and the like. The wearable device is directly worn on the body, or is a portable device integrated into a user's clothing or accessory. The wearable device is not only a hardware device, but also achieves powerful functions through software support, data interaction and cloud interaction. A generalized wearable smart device has full functions and a large size, and may not rely on a smart phone to implement full or part of the functions, such as a smart watch, or smart glasses, or the like; or only focuses on a certain type of application function, and is required to be used in cooperation with other devices such as a smart phone, such as various kinds of smart bracelets, smart jewelry, or the like, for monitoring physical signs.

It should be understood that FIG. 1A is merely an example of the disclosure, which should not be understood as a limitation to the disclosure. For example, FIG. 1A exemplarily illustrates only one AP and two STAs. In some embodiments, the communication system 100 may include multiple APs as well as other numbers of STAs, which would not be limited in embodiments of the present disclosure.

FIG. 1B is a diagram of an application scenario according to an embodiment of the disclosure.

As illustrated in FIG. 1B, the communication system 200 may include an Access Point (AP) MLD 210, a non-AP MLD 220. The AP MLD 210 is an electronic device capable of forming a WLAN 230 based on a transmitted signal, such as a router, a mobile phone having a hotspot function, or the like. The non-AP MLD 220 is an electronic device connected to the WLAN 230 formed by the AP MLD 210, such as a mobile phone, a smart washing machine, an air conditioner, an electronic lock, or the like. The non-AP MLD 220 communicates with the AP MLD 210 through the WLAN 230. The AP MLD 210 may be a soft AP MLD, a mobile AP MLD, or the like.

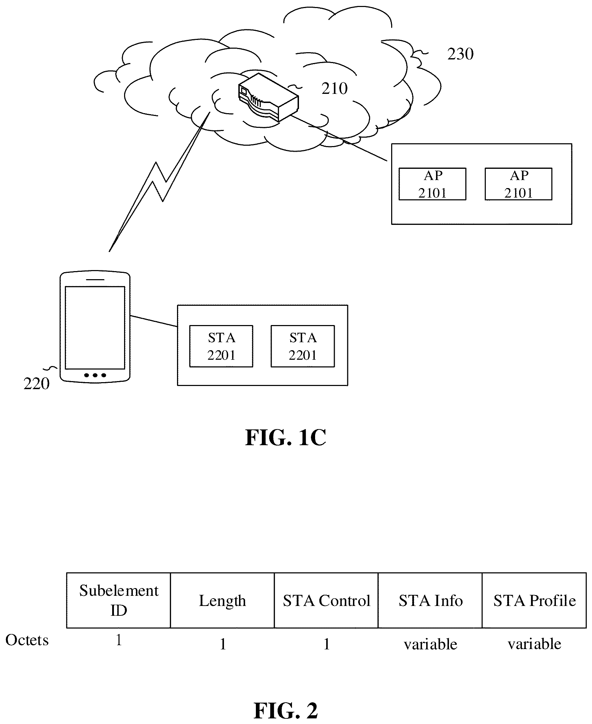

As illustrated in FIG. 1C, in the communication system of FIG. 1B, the AP MLD 210 is associated with at least two APs 2101, and the non-AP MLD 220 is associated with at least two STAs 2201. Each AP is connected to a different STA in the non-AP MLD 220 via a different link. An AP associated with AP MLD may also be referred to as an associated AP of the AP MLD. A STA associated with non-AP MLD may also be referred to as an associated STA of the non-AP MLD.

In embodiments of the disclosure, the AP MLD 210 and the non-AP MLD 220 may be terminal devices. The terminal device may refer to an access terminal, a User Equipment (UE), a user unit, a user station, a mobile station, a remote station, a remote terminal, a mobile device, a user terminal, a terminal, a wireless communication device, a user agent or a user apparatus. The access terminal may be a cellular telephone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle-mounted device, a wearable device, a terminal device in the 5G network, or a terminal device in a future-evolved Public Land Mobile Network (PLMN) network, or the like.

The communication system 200 illustrated in FIG. 1B may further include a network device, and the network device may be an access network device that communicates with the terminal device. The access network device may provide communication coverage for a particular geographic area and may communicate with terminal devices located within the coverage area.

FIG. 1B exemplarily illustrates one AP MLD and one non-AP MLD. Optionally, the communication system 200 may include multiple non-AP MLDs connected to the WLAN 230, which would not be limited in embodiments of the present disclosure.

It should be noted that FIGS. 1A, 1B and 1C only illustrate, by way of examples, the systems to which the present disclosure is applied. Of course, the methods illustrated in the embodiments of the present disclosure may also be applied to other systems. In addition, the terms "system" and "network" in the present disclosure may usually be used interchangeably. In the disclosure, the term "and/or" refers to only an association relationship for describing associated objects and indicates that three relationships may exist. For example, A and/or B may indicate three cases: i.e., only A exists, both A and B exist, and only B exists. Furthermore, character "/" in the disclosure usually indicates that previous and next associated objects form an "or" relationship. It should also be understood that the term "indication/indicate/indicating" mentioned in the embodiments of the disclosure may be a direct indication, or may be an indirect indication, or may indicate existence of an association relationship. For example, A indicates B, which may indicate that A directly indicates B, for example, B may be obtained by A; or may indicate that A indirectly indicates B, for example, A indicates C, and B may be obtained by C; or may indicate that an association relationship exists between A and B. It should also be understood that the term "corresponding/correspondence/correspond" mentioned in the embodiments of the present disclosure may indicate that there are direct or indirect correspondences between two objects, or may indicate that there is an association relationship between the two objects, or may have an indicating and being indicated relationship, a configuring and being configured relationship, or the like. It should also be understood that the terms "predefined " or "predefined rules" mentioned in the embodiments of the present disclosure may be implemented by pre-storing corresponding codes or tables or other means that may be used to indicate relevant information in devices (e.g., including terminal devices and network devices), specific implementations of which are not limited herein. For example, the "predefined" may refer to what is defined in protocol. It should also be understood that in the embodiments of the present disclosure, the "protocol" may refer to standard protocols in the communication field, and may include, for example, an LTE protocol, an NR protocol and related protocols applied in future communication systems, which are not limited in the present disclosure.

For convenience of understanding of the technical solutions of the embodiments of the disclosure, related technologies in the embodiments of the disclosure are described. The following related technologies may be used as alternative solutions and may be combined with the technical solutions of the embodiments of the disclosure in various ways, all of which belong to the scope of protection of the embodiments of the disclosure.

With the rapid development of wireless network technologies, a trend is becoming more and more obvious, that is, in various deployment scenarios, with the passage of time, for more and more cases, the phenomenon of performing P2P communication through WLAN is increasing. The accompanying problem is that the P2P communication and the usage of the infrastructure WLAN contend for media resources.

At present, the technology of performing P2P communication through WLAN is referred to as Tunneled Direct Link Setup (TDLS). The TDLS technology is transparent to an AP. Although the AP can obtain a setup situation of a TDLS direct link within a Basic Service Set (BSS) through a P2P report, the AP cannot know a resource usage of the TDLS direct link within the current BSS.

Herein, the BSS describes a group of communication devices, which may or may not include an AP, communicating with each other in a WLAN.

Therefore, there is an urgent need for a mechanism that enables the AP to schedule the transmission of the TDLS direct link within the BSS and to coordinate the allocation and usage of resources for the P2P network and WLAN. In related arts, schemes for coordinating the allocation and usage of resources for the P2P network and WLAN include the following first scheme to fourth scheme.

### First scheme

The proposal proposes to establish TDLS direct links on multiple links. The setup procedure of the multi-link TDLS direct link is consistent with the TDLS setup procedure. During the setup procedure, a TDLS setup request frame, a TDLS setup response frame and a TDLS setup confirm frame each includes a multi-link element carrying a Per-STA Profile subelement for an affiliated STA that is required to establish a TDLS direct link. The format of the subelement illustrated in FIG. 2 includes the following fields: a subelement ID field, a length field, a STA control field, a STA Info field and a STA profile field. The subelement ID field includes an identifier of the Per-STA Profile subelement, the length field includes a length of the Per-STA Profile subelement, the STA control field includes control information of a corresponding STA, and the STA profile field includes configuration information of the corresponding STA.

Each Per-STA Profile indicates a respective affiliated STA for which a TDLS direct link is required to be established, and the STA Info field carries a MAC address of the STA. By carrying the Per-STA Profile element, multiple TDLS direct links can be established simultaneously on one link.

### Second scheme

This scheme provides support for a delay-sensitive P2P traffic using r-TWT. The basic idea of the scheme is to establish an r-TWT SP, and then the AP uses Transmission Opportunity (TXOP) sharing mode 2 (i.e., the shared TXOP can be used for the P2P transmission), and carries a resource required for the P2P traffic through a TWT element when establishing the r-TWT SP. The resource required for the P2P traffic may include: a duration of the SP for the P2P traffic transmission and a Traffic Identifier (TID) of the delay-sensitive P2P traffic.

In the r-TWT SP, the AP shares the TXOP for the P2P transmission through a Multi-User Request to Send Transmission Status (MU-RTS TXS) trigger frame.

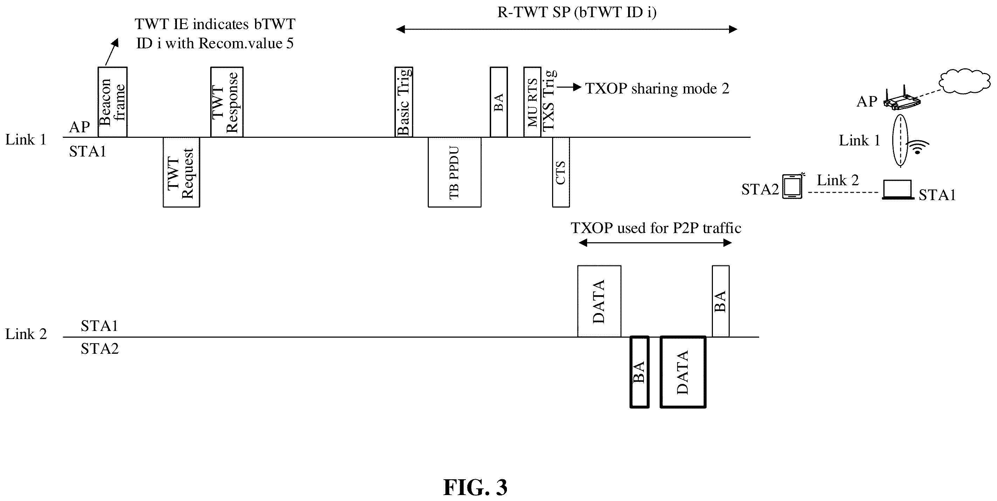

As illustrated in FIG. 3, a link between an AP and a STA1 is link 1, a link between the STA1 and a STA2 is link 2. The AP broadcasts a Beacon frame, where a TWT element in the Beacon frame indicates that the broadcast TWT (bTWT) is used for P2P transmission. After receiving the Beacon frame, the STA1 returns a TWT request frame to the AP to request joining the current bTWT. In this case, the AP transmits to the STA1 a TWT response frame as a response to the TWT request frame, for permitting the STA1 to join the bTWT. During the r-TWT SP, the AP transmits a Basic Trig frame to the STA 1, the STA transmits data to the AP through a Trigger Based (TB) Presentation Protocol Data Unit (PPDU) based on trigger of the Basic Trig frame, and the AP transmits a Block Ack (BA) frame to the STA1, thus a communication is firstly performed between the AP and the STA1. The AP may transmit to the STA1 the MU-RTS TXS trigger frame to trigger the sharing mode 2, and share the transmission opportunity of the AP with the STA1 for the P2P transmission. After receiving the MU-RTS TXS trigger frame, the STA1 returns a Clear-to-Send (CTS) frame to the AP. In this case, data frames are transmitted between the STA1 and the STA2 using the transmission opportunity shared by the AP, where the data receiving end returns the BA frame to the data transmitting end after receiving the data frame. A value of a broadcast TWT recommendation subfield in the TWT element is 5, this indicates that the bTWT is used for P2P transmission. A value of the broadcast TWT recommendation subfield in the TWT element of each of the TWT request frame and the TWT response frame is 5, and the STA joins the TWT based on the value of the broadcast TWT recommendation subfield in the TWT element being 5, and becomes a member STA of the r-TWT SP.

In embodiments of the disclosure, a member STA of the TWT SP may be understood as a TWT scheduled STA.

### Third scheme

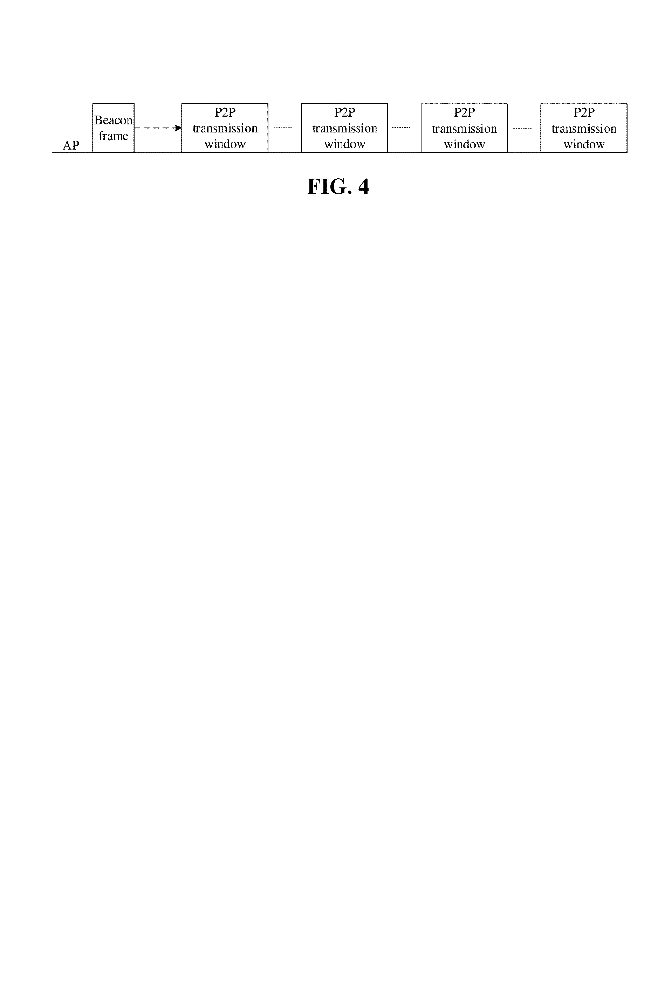

This scheme is a method to better support the P2P channel usage under WLAN, which enables an AP to schedule the transmission of the P2P traffic, so as to coordinate the resource usage of the BSS traffic and the P2P traffic. As illustrated in FIG. 4, the AP announces a P2P Transmission window in the beacon frame. Within the P2P Transmission window, the STA preferentially transmits the P2P traffic. In order to ensure the transmission of the P2P traffic, the AP provides a minimum support for the transmission of the BSS traffic.

Because the transmission of the P2P traffic in the current BSS is basically not managed by the AP, the goal of this proposal is to enable the AP to manage these unmanaged P2P transmissions, so that the resource utilization is higher, thereby improving the transmission efficiency of the BSS traffic.

### Fourth scheme

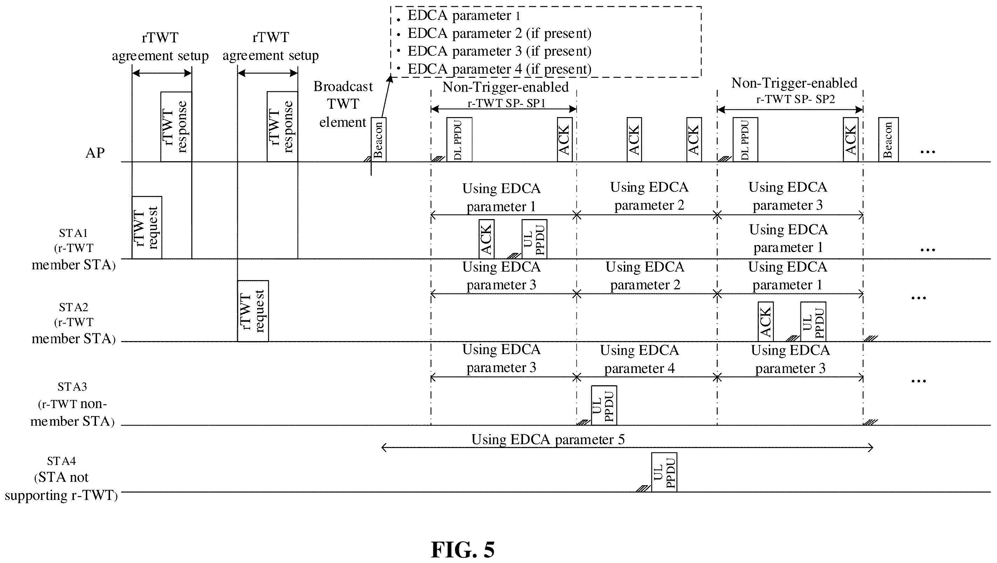

During the r-TWT SP, all STAs including the r-TWT scheduled STA (i.e., the member STA of the r-TWT SP) can contend for the TXOP, which will interfere with the transmission of the low-latency traffic. Therefore, a Restricted TWT EDCA parameter set element is carried in the beacon frame, to notify all STAs that within the non-trigger-enabled r-TWT SP, the STAs with different roles should use the EDCA parameters allocated by the Restricted TWT EDCA Parameter Set element when contending for the TXOP, this can enable the r-TWT scheduled STAs to have high-priority in the channel access right within the non-trigger-enabled r-TWT SP, as illustrated in FIG. 5.

In FIG. 5, STA1 and STA2 join the rTWT and become the r-TWT scheduled STAs by interacting with the AP through the rTWT request frame and the rTWT response frame, respectively, where the STA1 is a member STA of SP1 and the STA2 is a member STA of SP2. STA3 supports the r-TWT, but does not join the rTWT, thus the STA3 is an r-TWT unscheduled STA (i.e., not a member STA of a certain SP). The STA3 can be understood as a non-member STA of the SP1 and a non-member STA of the SP2. STA4 belongs to a STA that does not support the rTWT (i.e., non-r-TWT STA).

The AP broadcasts a beacon frame, where the beacon frame includes EDCA parameter 1 (EDCA parameter (rTWT-Scheduled-In-SP(s)-EDCA-Parameters) for the member STA during the SP or in the SP), and may also include EDCA parameter 2 (EDCA parameter (rTWT-Scheduled-Outside-SP(s)-EDCA-Parameters) for the member STA outside the SP), EDCA parameter 3 (EDCA parameter (rTWT-non-Scheduled-In-SP(s)-EDCA-Parameters) for the non-member STA in the SP), and EDCA parameter 4 (EDCA parameter (rTWT-non-Scheduled-Outside-SP(s)-EDCA-Parameters) for the non-member STA outside the SP). It should be noted that the EDCA parameter 2, the EDCA parameter 3, and the EDCA parameter 4 may not be included or may not be present in the beacon frame.

In the embodiments of the disclosure, rTWT SP 1 and rTWT SP 2 adopt non-triggered scheduling, that is, each station contend for the transmission opportunity through the EDCA parameter.

As illustrated in FIG. 5, within the SP1, the STA1 uses the EDCA parameter 1 to contend for the transmission opportunity, the STA2 and the STA3 use the EDCA parameter 3 to contend for the transmission opportunity, and the STA4 uses EDCA parameter 5 (EDCA parameters independent of rTWT SP(s)) to contend for the transmission opportunity. In this case, the STA 1 obtains the transmission opportunity through contention, and the STA1 performs transmission of uplink data (UL PPDU) or downlink data (DL PPDU) with the AP based on the transmission opportunity obtained through contention. Herein, a priority of the EDCA parameter 1 is greater than a priority of the EDCA parameter 3.

As illustrated in FIG. 5, outside the SP1 and outside the SP2, the STA1 and the STA2 use the EDCA parameter 2 to contend for the transmission opportunity, the STA3 uses the EDCA parameter 4 to contend for a transmission opportunity, and the STA4 uses the EDCA parameters independent of the rTWT SP(s) to contend for the transmission opportunity. In this case, the STA3 and the STA4 obtain the transmission opportunity through contention, and each performs transmission of uplink data with the AP. Herein, a priority of the EDCA parameter 4 is higher than a priority of the EDCA parameter 2.

As illustrated in FIG. 5, in the SP2, the STA1 and the STA3 use the EDCA parameter 3 to contend for the transmission opportunity, STA3 uses the EDCA parameter 1 to contend for the transmission opportunity, and the STA4 uses EDCA parameters independent of the rTWT SP(s) to contend for the transmission opportunity. In this case, the STA3 obtains the transmission opportunity through contention, and the STA3 performs transmission of uplink data (UL PPDU) or downlink data (DL PPDU) with the AP based on the transmission opportunity obtained through contention.

### TDSL

TDLS includes three parts: TDLS discovery, TDLS direct link setup and TDLS direct link teardown.

### TDLS discovery process

In the same BSS, an initiator transmits a TDSL Discovery Request frame through an AP, where the frame contains a MAC address of a responder. The responder receives the TDLS Discovery Request frame from the AP. If the responder supports the TDLS function, the responder shall transmit a TDSL Discovery Response frame to the initiator over a direct link.

In addition, the initiator may directly transmit an unsolicited TDLS Discovery Response frame to the responder over the direct link. The responder receives such an unsolicited TDLS Discovery Response frame and supports the TDLS function, then the responder shall respond with a TDLS Discovery Response frame over the direct link.

The role of the TDLS discovery: one is to enable a TDLS STA (STA that supports a TDLS function) to confirm whether another STA is a TDLS STA, where a TDLS STA that receives the TDLS Discovery Request frame or the unsolicited TDLS Discovery Response frame is required to reply with a TDLS Discovery Response frame to indicate support of the TDLS function; and the other one is to confirm whether another STA is in the same BSS as the TDLS STA itself.

### TDLS direct link setup procedure

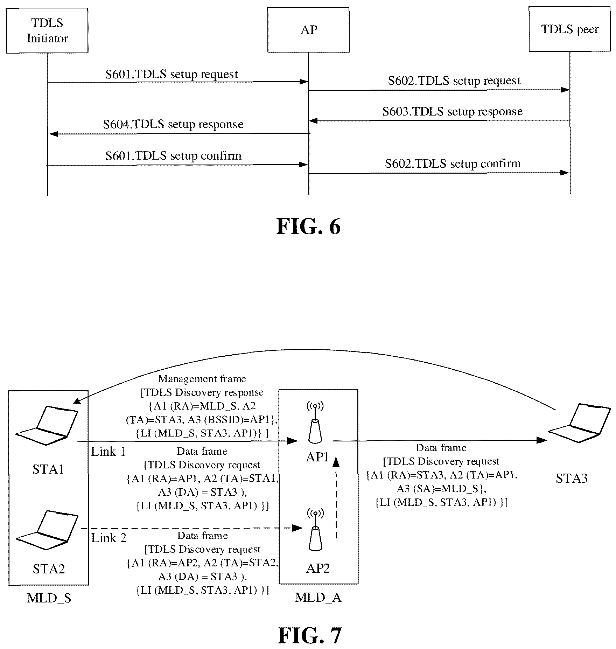

The TDLS direct link setup procedure is illustrated in FIG. 6. The TDLS STA for transmitting a TDLS setup request frame is referred to as an initiator, and the TDLS STA for receiving the TDLS setup request frame is referred to as a responder, i.e., a TDLS peer. The initiator transmits the TDLS setup request frame to the responder through the AP, where the TDLS setup request frame carries a BSSID of a BSS where the initiator is located. After receiving the TDLS setup request frame, the responder shall behave differently in the following five different cases.

In the first case: the responder accepts the TDLS setup request.

The responder shall transmit a TDLS setup response frame to the initiator through the AP, where a status code carried in the frame is success.

In the second case: the responder rejects the TDLS setup request.

If the BSSID in the TDLS setup request frame received by the responder is different from the BSSID of a BSS where the responder is located, the responder must reject the TDLS setup request, and the responder shall transmit a TDLS setup response frame to the initiator through the AP, where a status code carried in the frame is request_declined.

In the third case: before receiving the TDLS setup request frame, the responder as an initiator transmits a TDLS setup request frame and has not received a response from another responder, and in this case, if a source address in the TDLS setup request frame is smaller than the MAC address of the responder itself, the responder should terminate the TDLS setup initiated by the responder itself, and then transmit the TDLS setup response frame in the first case or the second case.

In the fourth case: before receiving the TDLS setup request frame, the responder as an initiator transmits a TDLS setup request frame and has not received a response from another responder, and in this case, if a source address in the TDLS setup request frame is greater than the MAC address of the responder itself, the responder shall discard the TDLS setup request frame and shall not transmit the TDLS setup response frame.

In the fifth case: if a TDLS direct link already exists between the responder and the initiator, the responder terminates the existing TDLS direct link and respond with a TDLS setup response frame.

### TDLS direct link teardown

In general, the TDLS STA can transmit a TDLS teardown frame over the TDLS direct link at any time, where the reason code in the frame is set to TDLS_UNSPECIFIED_REASON. If the peer cannot receive information from the TDLS direct link, the TDLS STA can transmit a TDLS teardown frame through the AP, where the reason code in the frame is set to TDLS_PEER_UNREACHEABLE. When the TDLS STA transmits the TDLS teardown frame or receives the TDLS teardown frame, the TDLS direct link is terminated.

If the TDLS STA wants to leave the current BSS, it shall transmit, to all peer STAs of the TDLS direct link, TDLS teardown frames with the reason code set to LEAVING_NETWORK_DEAUTH.

The above TDSL link setup procedure refers to setup of a TDLS direct link between non-MLDs. Next, the TDSL link setup procedures in other cases are introduced.

In a first case: setup of TDLS direct link between Multi-Link Device (MLD) and non-MLD (STA).

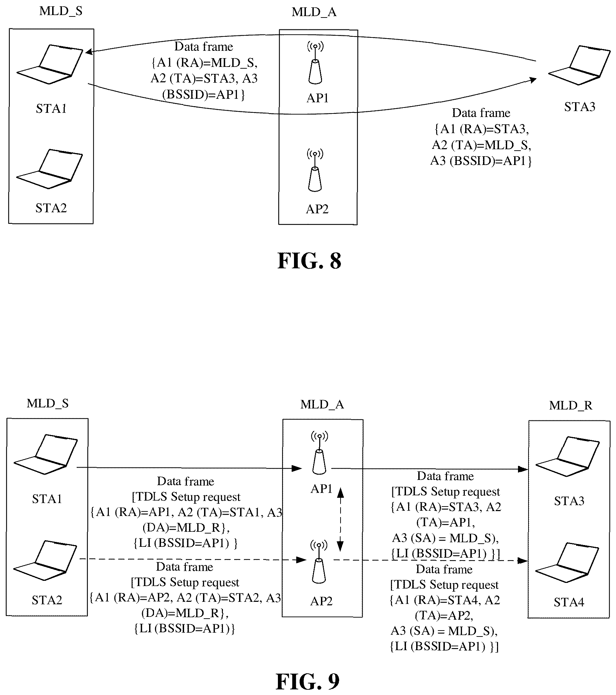

As illustrated in FIG. 7, MLD_S wants to establish a TDLS direct link with STA3. In the TDLS discovery phase, STA1 in MLD_S transmits a data frame to AP1 in MLD_A over the link 1, where the data frame is a TDLS setup discovery request frame carrying the following contents: A1 indicating the Receiver Address (RA) is AP1, A2 indicating the Transmitter Address (TA) is STA1, A3 indicating the Destination Address (DA) is STA3, and link information is (MLD_S, STA3, AP1). The STA1 in the MLD_S transmits a data frame to AP2 in the MLD_A over the link 2, where the data frame is a TDLS setup discovery request frame carrying the following contents: the A1 indicating the RA is AP2, the A2 indicating the TA is STA2, the A3 indicating the DA is the STA3, and the link information is (MLD_S, STA3, AP1). The TDLS discovery request frames transmitted by the STA1 and the STA2 are used for requesting a setup of a link (MLD_S, STA3, AP1). The AP1 forwards both discovery request frames to the STA3, and the STA3 checks Link Information (LI) element in the discovery request frames, where the LI element contains three addresses: <MLD_S, STA3, AP1>, indicating that the MLD_S wants to establish a TDLS direct link with the STA3 in a BSS where the AP1 is located. After receiving the discovery request frames, the STA3 transmits a management frame to the STA1 over the direct link between the MLD_S and the STA3, where the management frame is a TDLS discovery response frame. It should be noted that if the LI contains the AP2 whose BSSID is different from the BSSID of the BSS where the STA3 is located, the STA3 does not transmit the discovery response frame to the STA2. The finally established TDLS direct link is illustrated in FIG. 8.

In the direct link illustrated in FIG. 8, when the STA1 transmits the data frame to the STA3, in the data frame: the TA is the MLD_S, the RA is the STA3, and the BSSID is the AP1. When the STA3 transmits the data frame to the STA1, in the data frame: the TA is the STA3, the RA is the MLD_S, and the BSSID is the AP1.

In a second case: setup of TDLS direct link between MLDs.

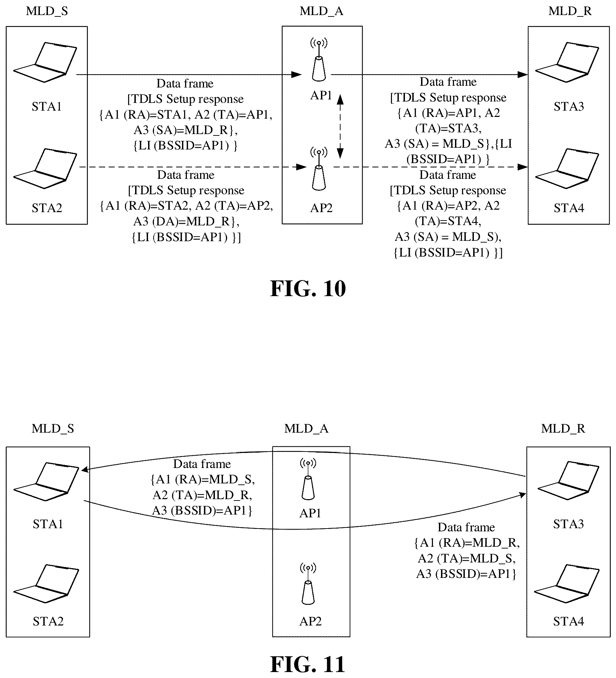

As illustrated in FIGS. 9 and 10, MLD_S may transmit a data frame as a TDLS setup request frame over all links (a link between STA1 and STA3 via AP1, and a link between STA2 and STA4 via AP2), and similarly, the MLD_R may transmit a data frame as a TDLS setup response frame over all links, but ultimately a TDLS direct link can be established on only one link. In the LI element in FIGS. 9 and 10, BSSID=AP1, indicating that the TDLS direct link between the MLD_S and the MLD_R is established only within the BSS of the AP1. The finally established TDLS direct link is illustrated in FIG. 11.

### Target wake time (TWT)

The TWT is divided into an individual TWT, a broadcast TWT and a restricted TWT.

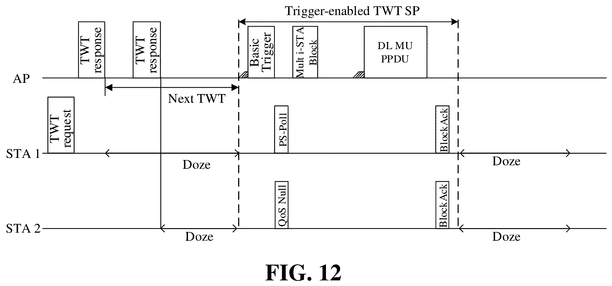

The individual TWT: the non-AP STA1 transmits a TWT request frame to the AP. The AP may choose to accept, reject or propose further negotiation, and inform the non-AP STA1 of the result through a TWT response. If the AP also needs to transmit downlink traffic to another STA during an individual TWT SP, the AP may also transmit an unsolicited TWT response frame to the non-AP STA2. During the individual TWT SP, the non-AP STA1 and the non-AP STA2 wake up to perform frame interaction with the AP. As illustrated in FIG. 12, the AP broadcasts a Basic Trigger frame, the non-AP STA1 returns a Power Save Poll (PS-Poll) frame to the AP and the non-AP STA1 returns a Quality of Service (QoS) Nul frame to the AP, indicating that they are able to perform data transmission, and the AP replies with a Multi-STA Block Ack frame. In this case, the AP may transmit a downlink Multi User (MU) PPDU (DL MU PPDU) frame to each of the non-AP STA1 and the non-AP STA1. After receiving the PPDU frame, each of the non-AP STA1 and the non-AP STA1 returns a BA frame to the AP. In FIG. 12, the AP, the STA1 and the STA2 clearly know the TWT SP. During a non-TWT SP, the AP, the STA1 and the STA2 are in a Doze state for power saving. When the TWT SP arrives, the AP, the STA1 and the STA2 wake up to provide services.

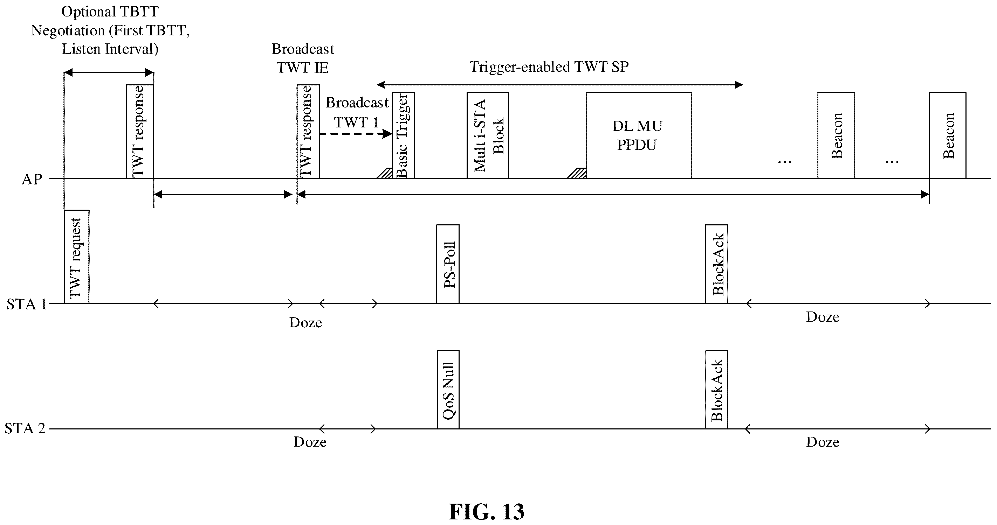

The broadcast TWT: as illustrated in FIG. 13, the non-AP STA negotiates with the AP through a TWT request frame and a TWT response frame to determine the broadcast TWT SP, or the AP itself may determine the broadcast TWT SP. After the broadcast TWT is established, the AP should carry the broadcast TWT element in a beacon frame, a probing response frame or a (re)association frame to inform other non-AP STAs in the BSS of an existence of the broadcast TWT. As illustrated in FIG. 13, the non-AP STA receives the beacon frame and parses broadcast TWT information from the beacon frame, and if necessary, the non-AP STA wakes up at the start of the broadcast TWT SP, and waits to receive the basic trigger frame from the AP. During the broadcast TWT SP, the AP may actively transmit downlink traffic as illustrated in FIG. 13, and may also schedule the non-AP STA to transmit uplink traffic. Within or outside the broadcast TWT SP, it is recommended that the non-AP STA shall not contend for the transmission opportunity through the EDCA mechanism.

The restricted TWT: the restricted TWT is mechanism established to support periodic and low-latency traffic. The setup procedure of the restricted TWT is the same as that of the broadcast TWT. The restricted TWT Traffic Info subfield is added to a broadcast TWT parameter set field and a new value of 4 is added to the broadcast TWT Recommendation field to indicate that the current broadcast TWT is the restricted TWT. The TID of the low-latency traffic supported by the current restricted TWT is indicated in restricted TWT Traffic Info. After the Restricted TWT is established, the AP will broadcast the restricted TWT SP, so as to prevent other non-AP STAs from transmitting frames within the restricted TWT SP.

### Triggered TXOP sharing procedure

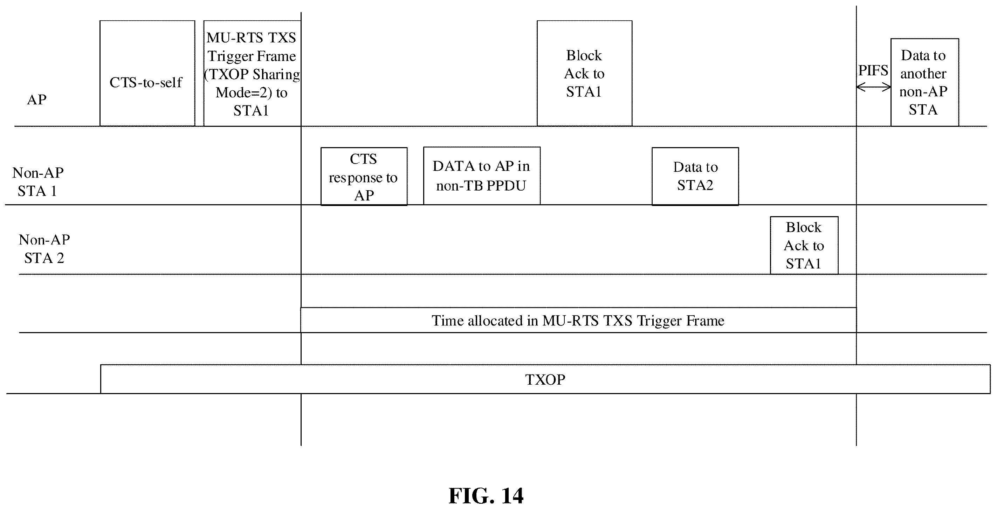

The Triggered TXOP sharing procedure enables an AP to allocate part of the TXOP obtained through contention to an associated non-AP STA. As illustrated in FIG. 14, the STA1 negotiates with the STA2 to determine the TWT SP, and the AP broadcasts a TWT element. After obtaining the TXOP through contention, the AP allocates part of the TXOP to the non-AP STA1 through the MU-RTS TXS Trigger frame indicating a TXOP sharing mode 2. The non-AP STA1 returns a CTS frame to the AP, and the non-AP STA1 may perform PPDU transmission with the AP with the TXOP and may also perform P2P data transmission with the non-AP STA2 within the TXOP.

The Triggered TXOP sharing procedure has two modes. In the mode 1, the non-AP STA can perform data transmission with only the AP within the allocated TXOP. In the TXOP sharing mode 2, the non-AP STA can perform data transmission with both the AP and another non-AP STA within the allocated TXOP.

The multi-link setup method provided in the embodiments of the disclosure proposes how to establish multiple TDLSs on MLDs.
1. Multiple TDLS direct links are established on one link simultaneously.
2. A BSS restriction is got rid of, allowing STAs in different non-AP MLDs to establish the TDLS even when they are not in the same BSS.

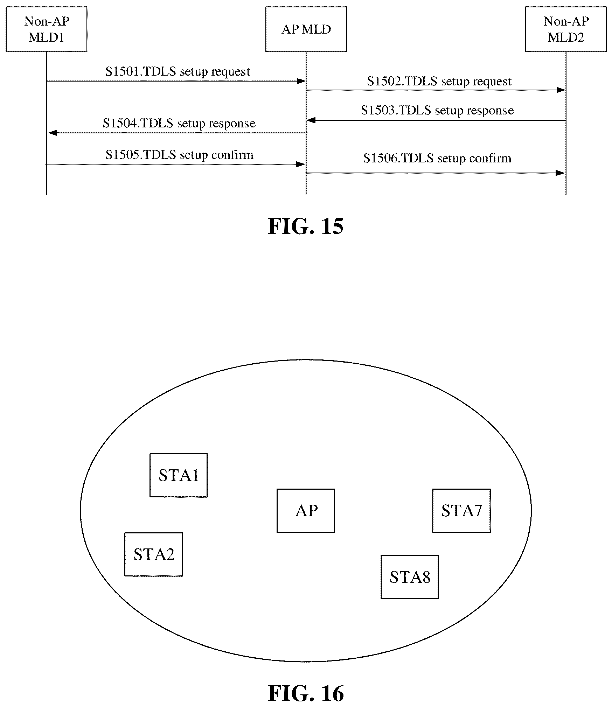

Herein, as illustrated in FIG. 15, at the operation S1501, the non-AP MLD1 transmits a TDLS setup request frame to the AP MLD. At the operation S1502, the AP MLD transmits the TDLS setup request frame to a non-AP MLD2. At the operation S1503, the non-AP MLD2 transmits a TDLS setup response frame to the AP MLD. At the operation S1504, the AP MLD transmits the TDLS setup response frame to the non-AP MLD1. At the operation S1505, the non-AP MLD1 transmits a TDLS setup confirm frame to the AP MLD. At the operation S1506, the AP MLD transmits the TDLS setup confirm frame to the non-AP MLD2.

The TDLS setup request frame, the TDLS setup response frame and the TDLS setup confirm frame carry Per-STA information, and specify the link(s) that can be used to establish the TDLS.
1. The TDLS setup request frame transmitted by the non-AP MLD1 may carry three links.
2. After receiving the request frame, the non-AP MLD2 selects from the three links one or more links on which the TDLS can be established, and informs the non-AP MLD1 through the TDLS setup response frame.
3. The non-AP MLD1 makes a final confirmation of the link(s) determined in the response frame, and informs the non-AP MLD2 through the TDLS setup confirm frame.

In related arts, because the operations of the TDLS discovery, TDLS direct link setup, and TDLS direct link teardown in the TDLS mechanism are transparent to the AP, the AP cannot know the resource usage of the TDLS direct link in the current BSS, and the AP cannot schedule the TDLS direct link to improve the resource utilization.

In the scenario illustrated in FIG. 16, under the current TDLS mechanism, the setup process of a TDLS direct link between STA1 and STA2 and the setup process of a TDLS direct link between STA7 and STA8 are independent of each other, and it can be calculated whether simultaneous data transmissions over two TDLS direct links would cause mutual interference. Assuming that the calculation result for the two TDLS direct links in FIG. 16 is that no interference occurs, the situations are as follows.
1. STA7 and STA8 cannot perform WLAN transmissions because the AP transmitting/receiving data may interfere with the P2P transmission.
2. STA7 and STA8 can perform the P2P transmission because the two TDLS direct link transmissions do not interfere with each other.
3. r-TWT can be only shared for a single P2P transmission, which causes low resource utilization.

Then, a case with the highest resource utilization should be that P2P transmissions are performed on two TDLS direct links at the same time.

The transmissions of two pairs of P2P traffic are completed during a single time period, and a time period in which transmission cannot be performed in WLAN is used for the P2P transmission. In this way, the total time of the P2P traffic transmission is reduced macroscopically, so that the time for the Infrastructure BSS transmission is increased, thereby improving the resource utilization.

It is apparent that the current TDLS mechanism cannot realize such scheduling because the non-AP STA cannot know whether other TDLS direct links exist in the BSS. Although the AP can know an existence of two TDLS direct links, the AP does not know the resource usage of the two TDLS direct links, thus the scheduling cannot also be realized.

Theoretically, the broadcast TWT technology can be used. It is assumed that the STA1 and the STA2 determine, through negotiation, to perform transmission over the TDLS direct link in a specific time period, and request the broadcast TWT SP with the time period from the AP. After this, the AP broadcasts scheduling information of the broadcast TWT, and the STA7 and the STA8 are sure to receive the scheduling information. As long as the STA7 and the STA8 also join the broadcast TWT and perform the TDLS direct link transmission in the broadcast TWT SP. However, this cannot realize the above optimal scheduling due to the following reasons.

First, the STA7 and the STA8 know existence of the broadcast TWT at present, but do not know that the broadcast TWT involves a scheduling situation for the TDLS direct link between the STA1 and the STA2, and thus deliberately staggers the same time period when requesting the broadcast TWT SP for the TDLS direct link.

Second, the AP can know that simultaneous transmissions over the two TDLS direct links would not cause mutual interference, but the AP cannot align the SP of the STA7 and the STA8 with the broadcast TWT SP of the STA1 and the STA2 when the STA7 and the STA8 request setup of the broadcast TWT, because the AP cannot know the purpose of STA7 and the STA8 requesting the broadcast TWT.

Third, the Triggered TXOP sharing mechanism cannot be implemented because the AP does not know when the TDLS STA has traffic to be transmitted. If the TXOP obtained through contention is shared every time, which is not worth the cost.

For convenience of understanding of the technical solutions of the embodiments of the disclosure, the technical solutions of the disclosure will be described in detail below with reference to specific embodiments. The above related technologies may be used as alternative solutions and may be combined with the technical solutions of the embodiments of the disclosure in various ways, all of which belong to the scope of protection of the embodiments of the disclosure. The embodiments of the disclosure include at least some of the following contents.

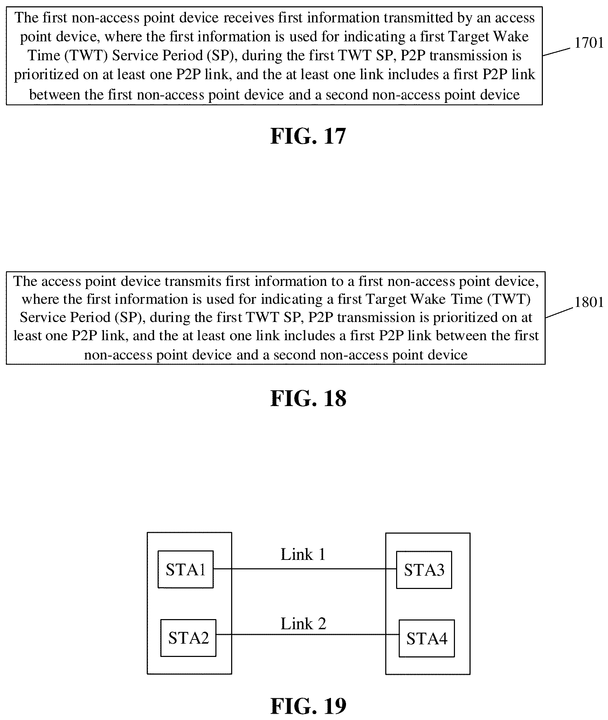

As illustrated in FIG. 17, a transmission control method provided by an embodiment of the disclosure is applied to a first non-access point device, and the method includes the following operation 1701.

At the operation S1701, the first non-access point device receives first information transmitted by an access point device. The first information is used for indicating a first Target Wake Time (TWT) Service Period (SP). During the first TWT SP, P2P transmission is prioritized on at least one P2P link. The at least one link includes a first P2P link between the first non-access point device and a second non-access point device.

As illustrated in FIG. 18, a transmission control method provided by an embodiment of the disclosure is applied to an access point device, and the method includes the following operation 1801.

At the operation S1801, the access point device transmits first information to a first non-access point device. The first information is used for indicating a first TWT SP. During the first TWT SP, P2P transmission is prioritized on at least one P2P link. The at least one link includes a first P2P link between the first non-access point device and a second non-access point device.

Hereinafter, the transmission control method illustrated in FIG. 17 or FIG. 18 provided by the embodiments of the disclosure will be further described.

The access point device, the first non-access point device and the second non-access point device belong to the same BSS (i.e., a first BSS), and P2P link(s) are established between the first non-access point device and the second non-access point device. The access point device may determine the first TWT SP and transmit the first information indicating the first TWT SP to the first non-access point device.

It is understood that one of the first non-access point device and the second non-access point device is a link initiator of the first P2P link, and the other one of the first non-access point device and the second non-access point device is a link responder of the first P2P link. If the first non-access point device is the link initiator of the first P2P link, the second non-access point device is the link responder of the first P2P link. If the second non-access point device is the link initiator of the first P2P link, the first non-access point device is the link responder of the first P2P link.

The access point device may transmit the first TWT SP to the second non-access point device in addition to transmitting the first TWT SP to the first non-access point device.

During the first TWT SP, the access point device schedules at least one P2P link (i.e., one P2P link or multiple P2P links) to preferentially perform the P2P transmission. In this way, during the first TWT SP, the P2P transmission is prioritized on the at least one P2P link. Herein, the at least one P2P link includes the first P2P link.

It is understood that the first P2P link is any P2P link in the at least one P2P link. In the at least one P2P link, different P2P links are links between different pairs of two non-access point devices.

In the embodiments of the disclosure, the TWT is used for the P2P, so the TWT may also be understood as a P2P TWT.

The access point device transmits the first information to the first non-access point device in the P2P TWT setup procedure.

It is understood that the first TWT SP may be an Individual TWT or a Broadcast TWT.

If the first TWT is the independent TWT, different P2P links correspond to different TWT SPs. In this case, different P2P links in the at least one P2P link correspond to individual TWT SPs, respectively.

If the first TWT is the broadcast TWT, different P2P links may correspond to the same TWT SP. In this case, the TWT SP corresponding to the at least one P2P link is the first TWT SP.

In the embodiments of the disclosure, the first TWT SP indicates a first channel and a first duration, for indicating that P2P transmission over the first P2P link between the first non-access point device and the second non-access point device is performed on the first channel within the first duration.

In the embodiments of the disclosure, at least one member STA of the first TWT SP performs the P2P transmission on the first channel within the first duration.

In the embodiments of the disclosure, during the first TWT SP, the P2P transmission over the at least one P2P link is performed on the first channel. Moreover, at least one P2P link may exist on a second channel different from the first channel for transmission.

In the embodiments of the disclosure, the access point device indicates the first TWT SP to the first non-access point device, and the P2P transmission is prioritized on the at least one P2P link during the first TWT SP, thereby proposing a TWT SP for coordinating the P2P transmission and realizing scheduling of the P2P transmission on the P2P link by the AP.

It can be understood that the access point device indicates the first TWT SP to the first non-access point device, controls the access point device and the first non-access point device to be in a TWT SP mode based on the first TWT SP, and implements P2P transmissions on multiple P2P links in the TWT SP mode.

It can be understood that the access point device in the embodiments of the disclosure may be an access point or an affiliated AP of an AP MLD.

In some embodiments, the first TWT SP is included in a first frame transmitted by the access point device to the first non-access point device, where the first frame includes at least one of: a TWT setup response frame, a beacon frame, an association frame or a reassociation frame, or a probe response frame.

If the first non-access point device is the link initiator of the P2P link, the first frame is a TWT setup response frame.

If the first non-access point device is the link responder of the P2P link, the first frame is one of: the beacon frame, the association frame or the reassociation frame, or the probe response frame.

In the embodiments of the disclosure, in the P2P TWT setup procedure, the link initiator (referred to as the initiator for short) of the P2P link transmits a TWT setup request frame to the access point device (i.e., AP). The AP determines the first TWT SP based on the TWT setup request frame, and transmits a TWT setup response frame carrying the first information to the initiator. In this case, the initiator is a member STA of the first TWT SP, and the setup of the P2P TWT between the initiator and the AP is completed. After the setup of the P2P TWT between the initiator and the AP, the AP carries the first information in a beacon frame, a probe response frame, an association frame or a reassociation frame, and broadcasts the first information to the link responder (referred to as the responder for short) of the P2P link. The responder receives the first information broadcasted by the AP and determines whether to join the P2P TWT. If not joining, the responder stores the first TWT SP and the responder is not a member STA of the first TWT SP. If joining, the responder is required to transmit a TWT setup request frame to the AP and receive a TWT setup response frame transmitted by the AP, thereby completing the setup of the P2P TWT between the responder and the AP, and the responder is also referred to as a member STA of the first TWT SP.

In the embodiments of the disclosure, whether the responder is or is not a member STA of the first TWT SP, the responder can perform the P2P transmission with the initiator during the first TWT SP.

In some embodiments, the first TWT SP is included in a first TWT element of the first frame.

In the embodiments of the disclosure, the first TWT element may be understood as a TWT element corresponding to the first P2P link, for carrying TWT information related to the first P2P link.

In some embodiments, the first TWT element further includes at least one of: first indication information for indicating that the first TWT SP is used for P2P link(s), a parameter of a peer device of the first P2P link; or channel information of the first P2P link.

The parameter of the peer device of the first P2P link can be understood as an address parameter of the responder, such as a MAC address and an association identifier (AID) of the responder.

The channel information of the first P2P link is used for indicating a channel used for the P2P transmission on the first P2P link.

In the embodiments of the disclosure, the first TWT element includes second information in addition to the first information, where the second information includes one of: first indication information, a parameter of a peer device (i.e., a responder) of the first P2P link, or channel information of the first P2P link.

The first indication information is used for indicating that the currently established TWT is a P2P TWT for P2P link, which can be understood that the currently determined first TWT SP is used for P2P link or P2P transmission.

It is understood that a channel indicated by the channel information of the first P2P link is a first channel of the first TWT SP.

In the embodiments of the disclosure, the second information in the first TWT element may be carried in a TWT element of a TWT setup request transmitted by the initiator, thus the second element is provided by the initiator to the AP.

If the responder transmits a TWT setup request frame to the AP, a TWT element carried in the TWT setup request frame is filled with the contents of the TWT element transmitted by the initiator.

In an example, the initiator is the STA1 and the responder is the STA2, and the TWT element of the TWT setup request frame transmitted by the STA1 to the AP includes second information. The second information includes the following information: first indication information and address information of the STA2. After the AP determines the first TWT SP, the TWT element of the TWT setup response frame transmitted to the STA1 by the AP carries the first information and the second information. The TWT element of the beacon frame broadcast by the AP includes the first information and the second information. After receiving the beacon frame, the STA2 recognizes that the beacon frame is transmitted to itself based on the address information of the STA2 in the TWT element, thereby determining whether to request to join the first TWT SP. If joining, the STA2 transmits a TWT setup request frame whose TWT element includes the second information to the AP, and receives a TWT setup response frame whose TWT element includes the second information transmitted by the AP.

In some embodiments, the first indication information is included in a request type subfield of a TWT parameter information field of the first TWT element.

In the embodiments of the disclosure, the first TWT element includes the following fields: an Element ID field, a length field, a Control field, and a TWT parameter information field. The size of the TWT parameter information field is variable, representing a parameter of the current first P2P link. The TWT parameter information field includes the request type subfield, and the first indication information may be existing information or newly added information in the request type subfield.

In some embodiments, the first indication information is Broadcast TWT recommendation information with a value set to a first value in the request field. The first value is predefined by a protocol or a set value.

In the embodiments of the disclosure, the broadcast TWT recommendation information is used for indicating a type of the current first TWT SP.

In an example, the first value is 5. If the value of the broadcast TWT recommendation information is 5, it indicates that the current TWT is a P2P TWT (i.e., used for P2P transmission), and the determined TWT SP is a P2P TWT SP used for the P2P transmission.

In an example, the first value is 6. If the value of the broadcast TWT recommendation information is 6, it indicates that the current TWT is a P2P TWT (i.e., used for P2P transmission), and the determined TWT SP is a P2P TWT SP used for the P2P transmission.

In some embodiments, a condition that the first TWT element includes the parameter of the peer device of the first P2P link and/or the channel information of the first P2P link includes that: the first TWT element includes the first indication information.

In a case where the first TWT element includes the first indication information, the first TWT element further includes the parameter of the peer device of the first P2P link and/or the channel information of the first P2P link. It can be understood that the parameter of the peer device of the first P2P link and/or the channel information of the first P2P link only exist in the P2P TWT.

In some embodiments, a parameter of the second non-access point device is contained in a peer subfield of a TWT parameter information field of the first TWT element.

In some embodiments, the channel information of the first P2P link is contained in a channel subfield of a TWT parameter information field of the TWT element.

In some embodiments, when at least two P2P links are established between the first non-access point device and the second non-access point device, and the first frame is a TWT setup response frame, the first frame includes at least two TWT elements. One of the at least two TWT elements is used for one P2P link, and the first TWT element is used for the first P2P link in the at least two P2P links.

In this case, the first non-access point device and the second non-access point device belong to a non-AP MLD or a STA MLD.

The first non-access point device is affiliated with at least two first affiliated STAs, the second non-access point device is affiliated with at least two second affiliated STAs, and one P2P link exists between one of the first affiliated STAs and one of the second affiliated STAs. At least two P2P links exist between the first non-access point device and the second non-access point device, the first frame transmitted by the access point device to the first non-access point device includes at least two TWT elements, and different TWT elements correspond to different P2P links.

It can be understood that with the change of the number of the TWT elements in the first frame, the number of the TWT elements in the TWT setup request frame transmitted by the first non-access point device to the access point device changes accordingly, and the TWT parameter information field in the TWT element indicates a parameter of the current P2P link.

In an example, as illustrated in FIG. 19, STA MLD1 is affiliated with STA1 and STA2, STA MLD2 is affiliated with STA3 and STA4, P2P link 1 is established between the STA1 and the STA2, and P2P link 2 is established between the STA3 and the STA4. In the scenario illustrated in FIG. 18, the TWT setup request frame transmitted by the STA MLD1 or the STA MLD2 to the AP includes TWT element 1 and TWT element 2, and the first frame transmitted by the AP to the STA MLD1 or the STA MLD2 includes the TWT element 1 and the TWT element 2, where the TWT element 1 corresponds to the P2P link 1 and the TWT element 2 corresponds to the P2P link 2.

In some embodiments, in a case where at least two P2P links are established between the first non-access point device and the second non-access point device, the first TWT element further includes a first TID of the first P2P link.

It can be understood that one TWT element includes a TID of one corresponding P2P link.

In some embodiments, the first TID is contained in a restricted TWT downlink or uplink TID bitmap subfield of a TWT parameter information field of the first TWT element.

In the embodiments of the disclosure, the restricted TWT downlink or uplink TID bitmap subfield of the TWT parameter information field of the TWT element is used to indicate a TID of a corresponding P2P link.

In an example, the restricted TWT downlink bitmap subfield of the TWT parameter information field of the first TWT element indicates the traffic from the initiator to the responder, and the restricted TWT uplink bitmap subfield of the TWT parameter information field of the first TWT element indicates the traffic from the responder to the initiator.

In an example, the restricted TWT downlink bitmap subfield of the TWT parameter information field of the first TWT element indicates the traffic from the initiator to the responder, and the restricted TWT uplink bitmap subfield of the TWT parameter information field of the first TWT element indicates the traffic from the responder to the initiator.

In some embodiments, the TWT parameter information field in the first TWT element is used to indicate whether the restricted TWT uplink bitmap subfield of the TWT parameter information field of the first TWT element is used to indicate the TID of the P2P link.

In an example, a DL TID Bitmap Valid and an UL TID Bitmap Valid in the TWT parameter information field of the TWT element are used to indicate whether the restricted TWT uplink bitmap subfield of the TWT parameter information field of the TWT element is used to indicate the TID of the P2P link.

For example, the values of the DL TID Bitmap Valid and the UL TID Bitmap Valid in the TWT parameter information field of the TWT element are both the second value, which indicate that the restricted TWT uplink bitmap subfield of the TWT parameter information field of the TWT element is used to indicate the TID of the P2P link. The values of the DL TID Bitmap Valid and the UL TID Bitmap Valid in the TWT parameter information field of the TWT element are not both the second value, which indicate that the restricted TWT uplink bitmap subfield of the TWT parameter information field of the TWT element is not used to indicate the TID of the P2P link.

In some embodiments, the first TWT SP is determined based on a first communication requirement, the first communication requirement includes a communication requirement of the first P2P link, where the first P2P link is a P2P link between the first non-access point device and the second non-access point device.

In the embodiments of the disclosure, the access point device determines the first TWT SP based on at least the communication requirement of the first P2P link, which enables the determined first TWT SP to be determined based on the communication requirement of the first P2P link, thus the first TWT SP is associated with the communication requirement of the first P2P link, thereby improving the resource utilization efficiency.

In some embodiments, the communication requirement of the first P2P link is a resource for the first P2P link.

The resource for the first P2P link may be understood as an available resource for the first P2P link, including: time domain resource(s) and/or frequency domain resource(s) for the first P2P link, thus the first TWT SP corresponding to the first P2P link is related to the time domain resource and/or the frequency domain resource for the first P2P link in time domain and/or frequency domain, thereby improving the resource utilization rate of the BSS system.

In some embodiments, the first communication requirement further includes a communication requirement of a first BSS, where the first BSS is a BSS to which the first non-access point device belongs.

The communication requirement of the first BSS characterizes the communication requirement of transmission between the AP and the STA in the first BSS. The access point device determines the first TWT SP corresponding to the first P2P link based on the available resource for the first P2P link and the communication requirement of the first BSS.

In some embodiments, the communication requirement of the first BSS is a resource used by the first BSS.

The access point device determines the first TWT SP based on the communication requirement of the first P2P link and the communication requirement of the first BSS.

The first TWT SP fully or partially overlaps with the time domain resources of the first P2P link in time domain. The channel of the first TWT SP is a channel of the first P2P link. The first TWT SP and the first P2P link are the same in frequency domain resources, that is, the first P2P link uses the first channel of the first TWT SP.

The first TWT SP overlaps or does not overlap with the frequency domain resources of the first BSS in frequency domain, that is, the channel of the first TWT SP is the same as or different from the channel used by the traffic of the first BSS.

In some embodiments, when a transmission on the first P2P link and a transmission on a second P2P link do not interfere with each other, the first TWT SP overlaps with a second TWT SP corresponding to the second P2P link in time domain and/or frequency domain. The second P2P link is a P2P link between a third non-access point device and a fourth non-access point device.

The first TWT SP and the second TWT SP are individual TWT SPs, and one TWT SP corresponds to one P2P link, where the first TWT SP corresponds to the first P2P link and the second TWT SP corresponds to the second P2P link. If transmissions on the first P2P link and the second P2P link do not interfere with each other, the access point device may configure the first TWT SP and the second TWT SP to overlap in time domain and/or frequency domain. It is understood that the overlap of the first TWT SP and the second TWT SP may be understood as a complete overlap or an alignment. During the first TWT SP, the first P2P link is preferentially scheduled for priority transmission, and during the second TWT SP, the second P2P link is preferentially scheduled for priority transmission.

If the first TWT SP and the second TWT SP overlap in time domain but do not overlap in frequency domain, it can be understood that the P2P transmissions over the first P2P link and the second P2P link are the same in time domain but are different in frequency domain. In this case, the access point device preferentially schedules the first P2P link for the P2P transmission during the first TWT SP and preferentially schedules the second P2P link for the P2P transmission during the second TWT SP, and P2P transmissions over the first P2P link and the second P2P link are performed in the same time period but on different channels.

If the first TWT SP and the second TWT SP overlap in frequency domain but do not overlap in time domain, they may be considered as two TWT SPs with the same channel, and P2P transmissions over the first P2P link and the second P2P link are the same in frequency domain but are different in time domain. In this case, the access point device preferentially schedules the first P2P link for the P2P transmission during the first TWT SP and preferentially schedules the second P2P link for the P2P transmission during the second TWT SP, and P2P transmissions over the first P2P link and the second P2P link are performed in different time periods but on the same channel.

If the first TWT SP and the second TWT SP overlap in time domain and frequency domain, they may be considered as two TWT SPs with the same time domain and the same channel, and P2P transmissions over the first P2P link and the second P2P link are the same in time domain and frequency domain. In this case, the access point device preferentially schedules the first P2P link for the P2P transmission during the first TWT SP and preferentially schedules the second P2P link for the P2P transmission during the second TWTSP, and P2P transmissions over the first P2P link and the second P2P link are performed in different time period and on the same channel.

It can be understood that in a case where P2P transmissions over the first P2P link and the second P2P link are the same in the time domain, even if the first P2P link and the second P2P link respectively correspond to different TWT SPs, P2P transmissions over the two P2P links are performed in the same time period.

In the embodiments of the disclosure, the access point device determines whether interference exists between the transmission on the first P2P link and the transmission on the second P2P link. If no interference exists between the transmission on the first P2P link and the transmission on the second P2P link, the access point device configures the first TWT SP and the second TWT SP to have the same channel and/or the same first duration. If interference exists between the transmission on the first P2P link and the transmission on the second P2P link, the access point device configures the first TWTSP and the second TWT SP to have different channels and/or different first durations.

In some embodiments, if a transmission on the first P2P link and a transmission on a second P2P link do not interfere with each other, the first TWT SP is a TWT SP corresponding to the second P2P link, where the second P2P link is a P2P link between a third non-access point device and a fourth non-access point device.

In this case, the first TWT SP is a broadcast TWT SP, and one TWT SP corresponds to one or more P2P links, where the first TWT SP corresponds to the first P2P link and the second P2P link. If the transmission on the first P2P link and the transmission on the second P2P link do not interfere with each other, the access point device may configure to determine the existing TWT SP corresponding to the second P2P link as the first TWT SP.

In a case where the first TWT SP corresponds to the first P2P link and the second P2P link, the access point device may preferentially schedule the first P2P link and the second P2P link to perform respective P2P transmissions through the first TWT SP.

It is understood that the first P2P link and the second P2P link are two P2P links in the at least one P2P link. In a case where the at least one P2P link includes at least two P2P links, the at least two P2P links correspond to the same TWT SP.

In the embodiments of the disclosure, the access point device determines whether interference exists between the transmission on the first P2P link and the transmission on the second P2P link. If no interference exists between the transmission on the first P2P link and the transmission on the second P2P link, the access point device configures the first TWT SP as the TWT SP of the second P2P link. If interference exists between the transmission on the first P2P link and the transmission on the second P2P link, the access point device configures the first P2P link and the second P2P link to correspond to different TWT SPs.

In some embodiments, whether the transmission on the first P2P link and the transmission on the second P2P link interferes with each other is determined based on the first communication requirement and a second communication requirement, where the second communication requirement is a communication requirement of the second P2P link.

Herein, the first communication requirement includes the communication requirement of the first P2P link, and may further include the communication requirement of the first BSS.

After receiving the TWT setup request frame transmitted by the first non-access point device or the second access point device, the access point device determines whether interference exists between the transmission on the first P2P link and the transmission on the second P2P link based on the first communication requirement and the second communication requirement.

It should be understood that the factor for the access point device to determine whether interference exists between the transmission on the first P2P link and the transmission on the second P2P link may also include at least one of the following information about the first P2P link and the second P2P link: operating frequency band, operating channel, MAC address or BSSID of the responder, transmit power of the responder on the P2P link, connection setup time, or current state of the P2P link (including in use, disconnected, or the like).

In some embodiments, the communication requirement of the second P2P link is a resource for the second P2P link.

For the communication requirement of the first P2P link in the first communication requirement, the communication requirement of the first P2P link is reported to the access point device by the first non-access point device.

In some embodiments, based on the transmission control method illustrated in FIG. 17, the method further includes the following operation.

The first non-access point device transmits a link report frame to the access point device, where the link report frame includes second indication information, and the second indication information is used for indicating the communication requirement of the first P2P link.

In some embodiments, based on the transmission control method illustrated in FIG. 18, the method further includes the following operation.

The access point device receives a link report frame transmitted by the first non-access point device, where the link report frame includes second indication information, and the second indication information is used for indicating the communication requirement of the first P2P link.

If the first non-access point device is the initiator, the transmission opportunity of the link report frame includes one of: after the P2P link is established or before the first non-access point device transmits the TWT link setup request frame; or, after the first non-access point device transmits the TWT link setup request frame.

If the first non-access point device transmits the link report frame to the access point device before transmitting the TWT link setup request frame, the first non-access point device may actively transmit the link report frame to the access point device.

If the first non-access point device transmits the link report frame to the access point device after transmitting the TWT link setup request frame, the access point device receives the TWT link setup request frame and may transmit a link report request frame to the first non-access point device, and the first non-access point device may transmit the link report frame to the access point device in response to the received link report request frame.

If the first non-access point device is the responder, the transmission opportunity of the link report frame includes: after the P2P link is established or before the first non-access point device transmits the TWT link setup request frame.

The transmission opportunity of the link report frame includes: before the first non-access point device transmits the TWT link setup request frame.

Herein, after completing the P2P link setup procedure, the first non-access point device may actively transmit the link report frame carrying the communication requirement of the first link to the access point device.

For the communication requirement of the first BSS in the first communication requirement, the access point device may obtain the resource usage within the first BSS through a Channel State Information (CSI) report, and determine the communication requirement of the first BSS.

The access point device may obtain the communication requirement of the second P2P link from the third non-access point device or the fourth non-access point device. The specific obtaining method is the same as the obtaining method of the access point device obtaining the communication requirement of the first link, and will not be elaborated herein.

In some embodiments, the second indication information is contained in an event report field of an event report element of the link report frame.

The link report frame may also be understood as a P2P link report frame. The event report field in the event report element of the P2P link report frame carries a P2P Available Window List field, and the content of the P2P Available Window List field is the second indication information corresponding to the first P2P link.

In some embodiments, the first P2P link is a first TDLS direct link.

If the first P2P link is the first TDLS direct link, P2P transmission is prioritized on the at least one TDLS direct link during the first TWT SP.

In the embodiments of the disclosure, if the first P2P link is the first TDLS direct link, the first non-access point device and the second non-access point device perform a TDLS direct link setup procedure through the access point device to establish the first TDLS direct link.

The flow of a TDLS direct link setup procedure for establishing the first TDLS direct link includes that: the initiator transmits a TDLS setup request frame to the access point device; the access point device transmits the TDLS setup request frame to the responder; the responder transmits a TDLS setup response frame to the access point device; the access point device transmits the TDLS setup response frame to the initiator; the initiator transmits a TDLS setup confirm frame to the access point device; and the access point device transmits the TDLS setup confirm frame to the responder.

For the flow of the TDLS direct link setup procedure for establishing the first TDLS direct link

In some embodiments, the first non-access point device receives or transmits a TDLS setup confirm frame, where the TDLS setup confirm frame includes third indication information for indicating the communication requirement of the first P2P link.

For the access point device, the access point device receives or transmits a TDLS setup confirm frame, where the TDLS setup confirm frame includes third indication information for indicating the communication requirement of the first P2P link.

If the first non-access point device is the initiator, the first non-access point device transmits the TDLS setup confirm frame to the access point device.

If the first non-access point device is the responder, the first non-access point device receives the TDLS setup confirm frame transmitted by the access point device.

The TDLS setup confirm frame carries the third indication information indicating the communication requirement of the first P2P link.

In some embodiments, the third indication information is carried in a first Per-STA Profile element of the TDLS setup confirm frame.

In some embodiments, the first non-access point device receives or transmits a TDLS setup request frame, where the TDLS setup request frame includes fourth indication information indicating a communication requirement, for the first P2P link, of an initiator of the first P2P link.

For the access point device, the access point device receives or transmits a TDLS setup request frame, where the TDLS setup request frame includes fourth indication information indicating a communication requirement, for the first P2P link, of an initiator of the first P2P link.

If the first non-access point device is the initiator, the first non-access point device transmits the TDLS setup request frame to the access point device.

If the first non-access point device is the responder, the first non-access point device receives the TDLS setup request frame transmitted by the access point device.

In some embodiments, the fourth indication information is carried in a first Per-STA Profile element of the TDLS setup request frame.

In some embodiments, the first non-access point device transmits or receives a TDLS setup response frame, where the TDLS setup response frame contains fifth indication information, and the fifth indication information is used for indicating a communication requirement, for the first P2P link, of a responder of the first P2P link.

For the access point device, the access point device transmits or receives a TDLS setup response frame, where the TDLS setup response frame contains fifth indication information, and the fifth indication information is used for indicating a communication requirement, for the first P2P link, of a responder of the first P2P link.

If the first non-access point device is the initiator, the first non-access point device receives the TDLS setup response frame transmitted by the access point device.

If the first non-access point device is the responder, the first non-access point device transmits the TDLS setup response frame to the access point device.

In some embodiments, the fifth indication information is carried in a first Per-STA Profile element of the TDLS setup response frame.

In some embodiments, a STA information field of the first Per-STA profile element includes an available window subfield, where the available window subfield includes indication information indicating a corresponding resource.

For the first Per-STA Profile element including the second indication information, the third indication information, or the fourth indication information, the STA information field of the first Per-STA Profile element includes the available window subfield carrying corresponding indication information.

For the first Per-STA Profile element in the TDLS setup confirm frame, the third indication information is carried in its available window subfield.

For the first Per-STA Profile element in the TDLS setup request frame, the fourth indication information is carried in its available window subfield.

For the first Per-STA Profile element in the TDLS setup response frame, the fifth indication information is carried in its available window subfield.

In the embodiments of the disclosure, the available window (P2P Available Window) subfield is added into the STA information (STA Info) field of the Per-STA Profile element, where the P2P Available Window indicates time-frequency resource information available for the P2P transmission.

In some embodiments, if the second frame including the first Per-STA Profile element is used for establishing at least two P2P links, the second frame includes at least two Per-STA Profile elements, one of the at least two Per-STA profile elements is used for one P2P link, the at least two Per-STA profile elements include the first Per-STA profile element corresponding to the first P2P link.

An available window list (i.e., P2P Available Window List) subfield is added into the STA Info field of the Per-STA Profile element. The P2P Available Window List subfield may include one or more P2P Available Windows, and each of the one or more P2P Available Windows indicates respective time-frequency resource information available for the P2P transmission.

In some embodiments, the first non-access device and/or the second non-access device are member STAs of the first TWT SP.

In the embodiment of the disclosure, the initiator may be a member STA of the first TWT SP, and the responder may be or may not be a member STA of the first TWT SP.

If the first non-access device is the initiator, the first non-access device is a member STA of the first TWT SP, and the second non-access device may be or may not be a member STA of the first TWT SP.

If the second non-access device is the initiator, the second non-access device is a member STA of the first TWT SP, and the first non-access device may be or may not be a member STA of the first TWT SP.

In some embodiments, if the at least one P2P link includes at least two second P2P links, transmissions on the at least two P2P links do not interfere with each other.

In some embodiments, transmissions on different P2P links in the at least two P2P links overlap in time domain and/or frequency domain.

In the embodiments of the disclosure, during the first TWT SP, the access point device can schedule at least two P2P links for P2P transmission, and the transmissions on different P2P links in the at least two P2P links overlap in time domain and/or frequency domain, thereby improving resource utilization on the basis of ensuring the P2P link transmission.

In some embodiments, a transmission opportunity used by the first P2P link for P2P transmission includes one of: a transmission opportunity is shared by the access point device (First case); or a transmission opportunity is obtained by the first non-access point device through contention (Second case).

First case: trigger-enabled scheduling (i.e., trigger mode)

For the first case, it can be considered as a trigger-enabled scheduling. The first non-access point device does not contend for a transmission opportunity, but the access point device contends for a transmission opportunity. After obtaining a transmission opportunity through contention, the access point device shares this transmission opportunity for the first P2P link.

In the embodiments of the disclosure, the access point device may share part or all of the transmission opportunity obtained through contention for the first P2P link.

In the first case, after obtaining the transmission opportunity obtained through contention, the access point device simultaneously schedules at least one P2P link for P2P transmission during the first TWT SP by using a TXOP sharing mode, and the P2P transmissions over these P2P links do not interfere with each other in a case where the P2P transmissions are performed simultaneously.

In some embodiments, when the transmission opportunity used by the first P2P link for the P2P transmission is shared by the access point device to the first non-access point device, and the first non-access point device is a member STA of the first TWT SP, the transmission control method illustrated in FIG. 17 further includes the following operation.

The first non-access point device receives a first trigger frame transmitted by the access point device during the first TWT SP, where the first trigger frame is used for instructing the first non-access point device to perform the P2P transmission.

For the access point device, when the transmission opportunity used by the first P2P link for the P2P transmission is shared by the access point device to the first non-access point device, and the first non-access point device is a member STA of the first TWT SP, on basis of the transmission control method illustrated in FIG. 18, the method further includes that: the access point device transmits a first trigger frame to the first non-access point device during the first TWT SP, where the first trigger frame is used for instructing the first non-access point device to perform the P2P transmission.

The access point device transmits the first trigger frame to the first non-access point device to schedule the first non-access point device to perform P2P transmission on the first P2P link. After receiving the first trigger frame, the first non-access point device replies to the access point device with a response frame indicating that the first access point device is capable of performing the P2P transmission on the first P2P link. The response frame may be a CTS frame.

In the embodiments of the disclosure, the access point device transmits a first trigger frame to an initiator of each P2P link in the at least one P2P link, to schedule the initiator to perform the P2P transmission on the corresponding P2P link.

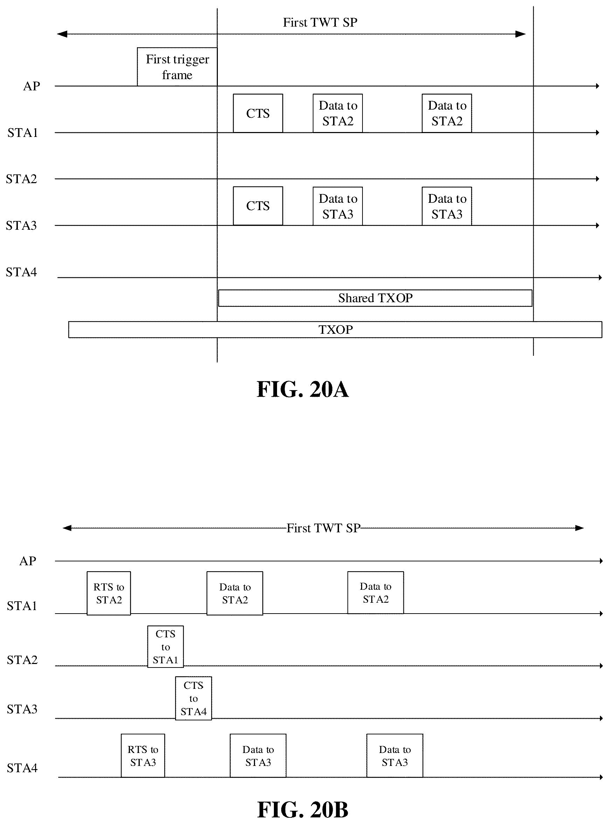

In an example, as illustrated in FIG. 20A, a link between STA1 and STA2 is link 1 and the STA1 is an initiator of the link 1, and a link between STA3 and STA4 is link 2 and the STA3 is an initiator of the link 1. After obtaining a transmission opportunity through contention within the first TWT SP, the AP transmits a first trigger frame to each of the STA1 and the STA3. After receiving the first trigger frame, each of the STA1 and the STA3 replies to the AP with a CTS frame. After replying to the AP with the CTS frame, the STA1 performs P2P transmission (transmits data frames to the STA2) with the STA2 on the link 1. After replying to the AP with the CTS frame, the STA3 performs P2P transmission (transmits data frames to the STA4) with the STA4 on the link 2.

In some embodiments, the first trigger frame includes a Multi-User Request to Send Transmission Status Trigger (MU-RTS TXS Trigger) frame.

The access point device transmits the MU-RTS TXS Trigger frame to the at least one non-access point device including the first non-access point device, thereby triggering the at least one non-access point device to perform the P2P transmission on the respective P2P link.

In some embodiments, the first trigger frame includes at least one user information field, where the user information field includes sixth indication information. The sixth indication information is used for indicating one member STA of the first TWT SP.

The first trigger frame includes at least one user information field. The user information field includes an indication of a member STA of the first TWT SP as a transmission opportunity sharing target, that is, one user information field is used for indicating one transmission opportunity sharing target. In a case where the first trigger frame includes at least one user information field, at least one transmission opportunity sharing target is indicated.

In some embodiments, the sixth indication information includes the following address information of the corresponding member STA: AID12, where the AID12 indicates an AID of the transmission opportunity sharing target.

In some embodiments, the user information field may further include eighth indication information for indicating an allocation duration. The allocation duration may be understood as a duration of a transmission opportunity allocated by the AP and shared to a corresponding non-access point device.

It is understood that the duration indicated by the eighth indication information is less than or equal to the first TWT SP.

For the scenario illustrated in FIG. 20A, assuming that the TWT is an individual P2P TWT, when a P2P TWT SP of the STA1 and the STA2 and a P2P TWT SP of the STA7 and the STA8 overlap, the AP obtains a TXOP through contention, which can theoretically be shared to the STA1 and the STA7. As illustrated in FIG. 20, the STA1 and the STA7 are triggered simultaneously to perform the P2P transmission through the MU-RTS TXS trigger frame. The Triggered TXOP sharing Mode field in the MU-RTS TXS trigger frame indicates that the current TXOP sharing mode is for P2P, in this case, the MU-RTS TXS trigger frame carries two User Info fields for indicating the STA1 and the STA7 respectively. In this case, although the STA1 and the STA7 are member STAs of different P2P TWT SPs, the STA1 and the STA7 can be scheduled in the same time period. In the scenario illustrated in FIG. 20A, assuming that the TWT is a broadcast P2P TWT, the AP obtains a TXOP through contention, and then simultaneously triggers the STA1 and the STA7 to perform the P2P transmission through the MU-RTS TXS trigger frame, in this case, the STA1 and the STA7 are member STAs of the same P2P TWT SP.

For the first case, in some embodiments, during the first TWT SP, at least one of the following is met: a member STA of the first TWT SP does not contend for a transmission opportunity; a non-member STA of the first TWT SP is free to contend for a transmission opportunity, or contends for a transmission opportunity using a first channel access parameter, or is in a silent state during a first interval announced by the access point device, where the first interval partially or fully overlaps with the first TWT SP in time domain; or the access point device contends for a transmission opportunity using a second channel access parameter, where a priority of the second channel access parameter is higher than a priority of the first channel access parameter.

In the embodiments of the disclosure, the channel access parameter may be an EDCA parameter, where the first channel access parameter may be an EDCA parameter 2 (i.e., an EDCA parameter used for a non-member STA within the SP), and the second channel access parameter may be independent of the EDCA access parameter of the TWT SP.

In the trigger-enabled scheduling: for the access point device, the access point device contends for the transmission opportunity, and the access point device contends for the transmission opportunity based on the second channel access parameter.

Optionally, the access point device contends for the transmission opportunity on the first channel of the first TWT SP.

For the member STA of the first TWT SP, the member STA of the first TWT SP does not contend for the transmission opportunity. After obtaining the transmission opportunity through contention, the access point device shares the transmission opportunity to the member STA of the first TWT SP.

For the non-member STA of the first TWT SP, the non-member STA of the first TWT SP contends for the transmission opportunity with the access point device or does not contend for the transmission opportunity with the access point device. If the non-member STA of the first TWT SP contends for the transmission opportunity with the access point device, the non-member STA of the first TWT SP may contend for the transmission opportunity in a free contention manner, or may contend for the transmission opportunity using the first channel access parameter, where the priority of the first channel access parameter is lower than the priority of the second channel access parameter. It is understood that the channel access parameter refers to the EDCA parameter, and the priority of the EDCA parameter of the access point device is higher than the priority of the EDCA parameter of the non-member STA of the first TWT SP. If the non-member STA of the first TWT SP does not contend for the transmission opportunity with the access point device, the access point device may announce a first interval, the non-member STA of the first TWT SP is in a silent state within the first interval, where the first interval fully or partially overlaps with the first TWT SP in time domain.

Second case: non-trigger-enabled scheduling (i.e., non-trigger mode)

For the second case, it can be considered as non-trigger-enabled scheduling. Each of the at least one member STA of the first TWT SP contends for a transmission opportunity, and performs the P2P transmission on the transmission opportunity obtained through contention.

In the second case, after obtaining the transmission opportunity through contention, each member STA of the first TWT SP performs P2P transmission on the P2P link between the member STA and the peer, and the P2P transmissions on these P2P links do not interfere with each other when the P2P transmissions are performed simultaneously.

In an example, as illustrated in FIG. 20B, a link between STA1 and STA2 is link 1 and the STA1 is an initiator of the link 1, and a link between STA3 and STA4 is link 2 and the STA4 is an initiator of the link 1. Within the first P2P TWT SP, the STA1 and the STA4 contend for transmission opportunity. After obtaining the transmission opportunity through contention, the STA1 and the STA4 transmit a RTS frame to the peer STA2 and the peer STA3, respectively. After the STA2 replies to the STA1 with a CTS frame, the STA2 performs P2P transmission with the STA1 on the link 1 (the STA1 transmits data frames to the STA2). After the STA3 replies to the STA4 with a CTS frame, the STA3 performs P2P transmission with the STA4 on the link 2 (the STA4 transmits data frames to the STA2).

In some embodiments, when the transmission opportunity used by the first P2P link for the P2P transmission is obtained by the first non-access point device through contention, during the first TWT SP, at least one of the following is met: a member STA of the first TWT SP contends for a transmission opportunity using a third channel access parameter; or a non-member STA of the first TWT SP is free to contend for a transmission opportunity, or contends for a transmission opportunity using a first channel access parameter, or is in a silent state during a first interval announced by the access point device, where the first interval partially or fully overlaps with the first TWT SP in time domain, and a priority of the third channel access parameter is higher than a priority of the first channel access parameter.

In the non-trigger-enabled scheduling: for the member STA of the first TWT SP, the member STA of the first TWT SP contends for the transmission opportunity using the third channel access parameter.

For the non-member STA of the first TWT SP, the non-member STA of the first TWT SP contends for the transmission opportunity with the member STA of the first TWT SP or does not contend for the transmission opportunity with the member STA of the first TWT SP. If the non-member STA of the first TWT SP contends for the transmission opportunity with the member STA of the first TWT SP, the non-member STA of the first TWT SP may contend for the transmission opportunity in a free contention manner or contend for the transmission opportunity using the first channel access parameter, where the priority of the first channel access parameter is lower than that of the third channel access parameter. It is understood that the channel access parameter refers to an EDCA parameter, the priority of the EDCA parameter of the member STA of the first TWT SP is higher than the priority of the EDCA parameter of the non-member STA of the first TWT SP, and the member STA of the first TWT SP preferentially obtains the transmission opportunity through contention. If the non-member STA of the first TWT SP does not contend for the transmission opportunity with the member STA of the first TWT SP, the access point device may announce a first interval, the non-member STA of the first TWT SP is in a silent state within the first interval, where the first interval fully or partially overlaps with the first TWT SP in time domain.

In the embodiments of the disclosure, the third channel access parameter may be an EDCA parameter 1 (i.e., an access parameter used for the member STA within the SP).

In the non-trigger mode, the member STA of the P2P TWT SP contends for the TXOP using a high-priority parameter within the P2P TWT SP, thereby initiating the P2P transmission, while the non-P2P TWT member STA does not contend for the TXOP or contends for the TXOP using a low-priority parameter.

In some embodiments, the member STA and the non-member STA of the first TWT SP contend for a transmission opportunity on the first channel of the first TWT SP.

In some embodiments, when the transmission opportunity used by the first P2P link for the P2P transmission is obtained by the first non-access point device through contention, a channel used by the first P2P link between the first non-access point device and the second non-access point device is a secondary channel of a first BSS, transmission of traffic of the first BSS exists on a primary channel of the first BSS, and the first BSS is a BSS to which the first non-access point device belongs.

In the embodiments of the disclosure, the member STA of the first TWT SP contends for the transmission opportunity on the secondary channel, thereby performing P2P transmission on the secondary channel, and the non-access point device that transmits BSS traffic contends for the transmission opportunity on the primary channel, thereby performing transmission of BSS traffic on the primary channel, which enable the P2P transmission and the BSS transmission coexist.

Hereinafter, the resource scheduling method provided by the embodiments of the disclosure will be further described.

Therefore, the embodiments of the disclosure propose a P2P TWT mode, in which an AP allocates a P2P TWT SP, and within the P2P TWT SP, the AP schedules multiple pairs of P2P traffic for simultaneous transmission to achieve an optimal scheduling method. In order to determine the P2P TWT SP, the AP is required to perform link measurements. After the P2P TWT SP is determined, the AP is required to ensure the smooth execution of the transmission plan.

The resource scheduling method provided by the embodiments of the disclosure relates to the following four aspects: a P2P TWT setup procedure and a frame element design of a single link device in a first aspect, a P2P TWT setup procedure and a frame element design of a MLD in a second aspect, a scheduling manner and a frame element design of P2P traffic transmission in a third aspect, and a channel access rule within a P2P TWT SP in a fourth aspect.

Hereinafter, each aspect will be described separately.

The first aspect: the P2P TWT setup procedure and the frame element design of the single link device

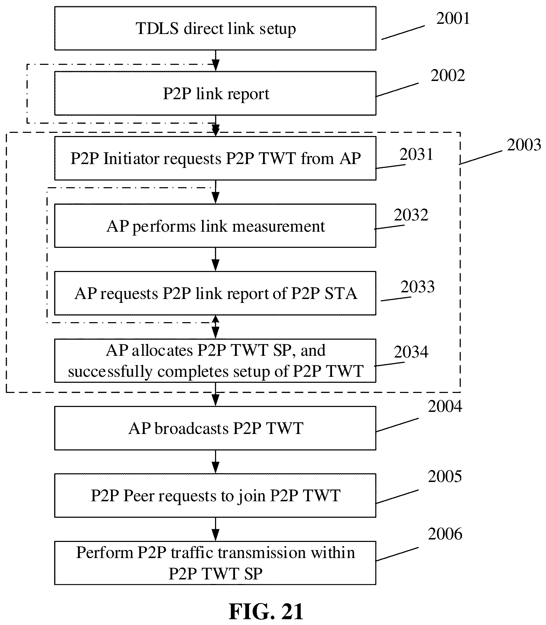

As illustrated in FIG. 21, the TDLS direct link setup and the P2P TWT setup procedure include the following operations S2101 to S2106.

At the operation S2101, a TDLS direct link is established.

The P2P STAs establish the TDLS direct link using the TDLS setup procedure. When the P2P STA transmits the TDLS setup request/response/confirm frame during the setup procedure, the P2P STA should carry resource information available for the P2P in the frame, where the request frame and the response frame carry resource information available for the P2P of the respective P2P STA, and the confirm frame carries resource information available for the P2P of both P2P STAs, that is, the intersection of resource information in the request frame and resource information in the response frame.

At the operation S2102, the P2P STA transmits a P2P link report to the AP.

After completing the TDLS direct link setup, the P2P STA can actively transmit a P2P link report to the AP, where the P2P link report frame carries relevant information of the TDLS direct link. The operation S2002 is optional.

At the operation S2103, a P2P TWT is established.

As illustrated in FIG. 21, the operation S2103 includes the following sub-operations S2131 to S2134.

At the sub-operation S2131, a P2P initiator requests a P2P TWT from the AP.

The P2P STA transmits a TWT setup request frame to the AP to request a setup of the P2P TWT.

At the sub-operation S2132, the AP performs link measurement.

The AP may obtain resource usage within the BSS, basic information of the P2P link, and location information of the STA through a CSI report, a P2P link report, a Location Civic report, and/or the like. Through the obtained information, the AP negotiates a most suitable P2P TWT SP with the P2P STA.

It should be noted that the AP does not initiate the link measurement after receiving the TWT setup request frame, instead, the AP may perform the link measurement at other times depending on the specific implementation. If the AP has obtained the link measurement information, the AP may not perform the link measurement after receiving the TWT setup request frame. Similarly, the AP may transmit a P2P link report request frame to the P2P STA after receiving the TWT setup request frame, to request the P2P STA to transmit the P2P link report, and depending on the implementation, the AP may not request the P2P STA to transmit the P2P link report.

At the sub-operation S2133, the AP allocates the P2P TWT SP to the P2P STA.

The AP transmits, through the TWT setup response frame, the P2P TWT SP and the P2P TWT setup status to the P2P STA requesting the setup of the P2P TWT.

At the operation S2104, the AP broadcasts the P2P TWT.

After the P2P TWT is established, the AP carries a TWT element containing P2P TWT information in the Beacon frame, the (re)association frame, and the probe response frame.

At the operation S2105, the P2P peer request to join the P2P TWT.

After receiving the frame carrying the TWT element containing the P2P TWT information, the P2P peer can confirm whether to join the current P2P TWT based on the information in the TWT element. If joining, the P2P peer only is required to transmit a TWT setup request frame to the AP, the TWT element in the TWT setup request frame is filled based on the content in the TWT element broadcasted by the AP.

After the P2P peer joins the P2P TWT, the setup of the P2P TWT is completed.

At the operation S2106, the P2P STA transmits the P2P traffic within the P2P TWT SP.

There are two manners for scheduling the P2P STA to perform the traffic transmission within the P2P TWT SP.

The first manner is trigger-enabled scheduling. The AP simultaneously schedules multiple pairs of P2P links for transmission within the P2P TWT SP using the TXOP sharing mode. Simultaneous transmissions over these P2P links do not interfere with each other.

The second manner is non-trigger-enabled scheduling. Within the P2P TWT SP, the P2P STA actively contends for the channel and preferentially schedules the P2P traffic transmission within the TXOP. If there are multiple pairs of P2P links that do not interfere with each other, the TXOPs of the P2P STAs of these P2P links may overlap, thereby implementing simultaneous transmission of the multiple pairs of the P2P links within the P2P TWT SP.

Hereinafter, the operations illustrated in FIG. 21 will be described in detail.

For the operation S2101, the implementation of the operation S2101 is based on the TDLS direct link setup procedure illustrated in FIG. 6, and the frame used is a TDLS setup request/response/confirm frame.

In the TDLS direct link setup procedure, the TDLS STA is required to carry time-frequency resource information available for the P2P transmission in the TDLS setup request/response/confirm frame. The TDLS setup request/response/confirm frame transmitted by the TDLS STA is required to carry one or more Per-STA Profile elements.

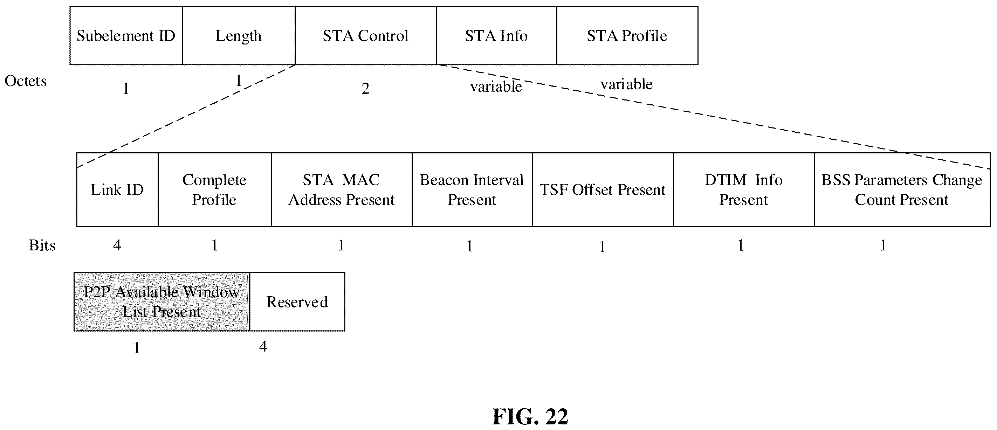

As illustrated in FIG. 22, a P2P Available Window List Present bit is added into the STA Control field of the Per-STA Profile element to indicate whether a P2P Available Window List sub-field is present in the STA Info field. As illustrated in FIG. 22, the Per-STA Profile element includes the following fields: a 1-byte Subelement ID field, a 1-byte Length field, a 2-byte STA Control field, a STA Info field with a variable byte length, and a STA Profile field with a variable byte length. The STA Control field includes the following subfields: a 4-bit Link ID subfield, a 1-bit Complete Profile subfield, a 1-bit STA MAC Address Present subfield, a 1-bit Beacon Interval Present subfield, a 1-bit Timing Synchronization Function (TSF) Offset Present subfield, a 1-bit Delivery Traffic Indication Message (DTIM) Info Present subfield, a 1-bit BSS Parameters Change Count Present subfield, a 1-bit P2P Available Window List Present subfield and a 4-bit Reserved subfield. Herein, the Subelement ID field indicates an ID of the element, and the Length field indicates a length of the element. The STA Control field contains some control information, in which the Link ID subfield is used to uniquely identify a link on which the STA is located; the Complete Profile subfield indicates whether the element carries complete configuration information, if the Complete Profile subfield has a value of 1, it indicates that the element carries complete configuration information, otherwise, it indicates that the element carries partial information, where the complete information or partial information is carried in the STA Profile field; the STA MAC Address Present subfield indicates whether a MAC address of the STA is contained in the STA Info field, where a value of 1 indicates that the MAC address of the STA is contained in the STA Info field, otherwise, the MAC address of the STA is not contained in the STA Info field; the Beacon Interval Present subfield indicates whether a Beacon Interval subfield is contained in the STA Info field, where a value of 1 indicates that the Beacon Interval subfield is contained in the STA Info field, otherwise, the Beacon Interval subfield is not contained in the STA Info field; the TSF Offset Present subfield indicates whether a TSF Offset subfield is contained in the STA Info field, where a value of 1 indicates that the TSF Offset subfield is contained in the STA Info field, otherwise, the TSF Offset subfield is not contained in the STA Info field, and where the value of the TSF Offset Present subfield is 1 only when the AP transmits the Per-STA Profile element; the DTIM Info Present subfield indicates whether a DTIM Info subfield is contained in the STA Info field, where a value of 1 indicates that the DTIM Info subfield is contained in the STA Info field, otherwise, the DTIM Info subfield is not contained in the STA Info field; the BSS Parameters Change Count Present subfield indicates whether a BSS Parameter Change Count subfield is contained in the STA Info field, where a value of 1 indicates that the BSS Parameter Change Count subfield is contained in the STA Info field, otherwise, the BSS Parameter Change Count subfield is not contained in the STA Info field; and the P2P Available Window List Present subfield indicates whether a P2P Available Window List subfield is contained in the STA Info field, where a value of 1 indicates that the P2P Available Window List subfield is contained in the STA Info field, otherwise, the P2P Available Window List subfield is not contained in the STA Info field.

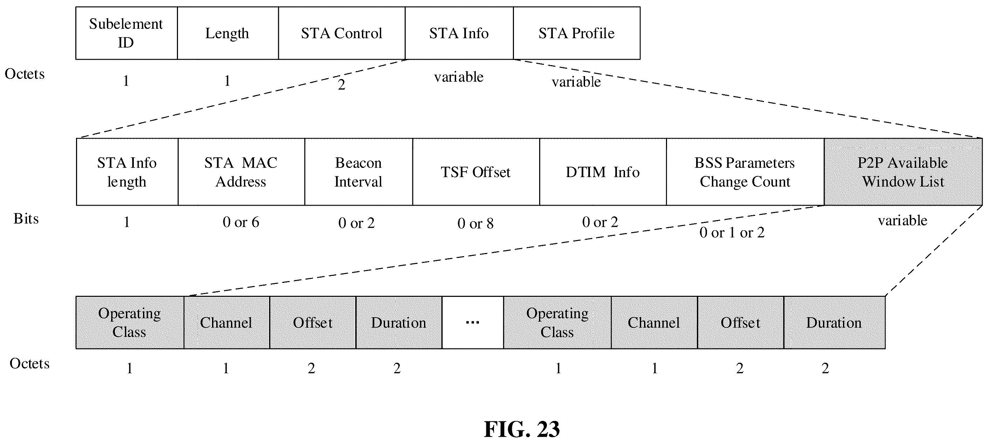

As illustrated in FIG. 23, the P2P Available Window List subfield is added into the STA Info field of the Per-STA Profile element. The P2P Available Window List subfield may include one or more P2P Available Windows, each P2P Available Window indicates respective time-frequency resource information available for the P2P transmission. The P2P Available Window in the TDLS setup request frame indicates time-frequency resource information available for P2P transmission by a TDLS initiator. Similarly, the P2P Available Window in the TDLS setup response frame indicates time-frequency resource information available for P2P transmission by a TDLS responder. The P2P Available Window in the TDLS setup confirm frame indicates time-frequency resource information jointly available for P2P transmission by both the TDLS initiator and the TDLS responder, that is, an intersection of the time-frequency resource information available for the P2P transmission carried in the TDLS setup request and response frames.

As illustrated in FIG. 23, the STA Info field includes the following subfields: 1-bit STA Information Length subfield, 0-bit or 6-bit STA MAC Address subfield, 0-bit or 2-bit Beacon Interval subfield, 0-bit or 8-bit TSF Offset subfield, 0-bit or 2-bit DTIM Information subfield, 0-bit or 1-bit or 2-bit BSS Parameters Change Count subfield, and a P2P Available Window List subfield with a variable bit length. The STA Info field contains some parameter information, where the STA Info Length subfield indicates a length of the STA Info field; the STA MAC Address subfield indicates a MAC address of the STA; the Beacon Interval subfield indicates a Beacon Interval of a BSS in which the STA is located; the TSF Offset subfield indicates an offset relative to a TSF timer of the AP; the DTIM Info subfield indicates DTIM information containing DTIM Count and DTIM Period; the BSS Parameters Change Count subfield indicates the number of times the BSS parameters are changed; and the P2P Available Window List subfield contains 0 or multiple P2P Available Window fields.

As illustrated in FIG. 23, each P2P Available Window has four parts: a 1-bit Operating Class, a 1-bit Channel, a 1-bit Offset, and a 2-bit Duration. The Operating Class indicates an operation class of the current P2P Available Window. The Channel indicates a channel number of the P2P Available Window. Different Operating Classes may have different channel ranges and allocation methods. The radio Channel resources where the P2P Available Window is located can be determined based on a combination of the channel and the Operating Class. The Offset indicates a starting time of the P2P Available Window, and is an offset whose value is a remainder of the TSF divided by the beacon interval. The Duration indicates a duration of the P2P Available Window, and a default unit of the Duration is one Time Unit (TU).

### For the operation S2102

The P2P link report is reported to the AP by both STAs that establish or tear down the P2P link. The P2P STA may actively report the P2P link report or wait for the AP to transmit a report request frame before reporting.

The P2P link report provides the non-AP STA with a mechanism for the non-AP STA to report a P2P link event to the AP. When the P2P link is established or terminated, the P2P STA records the P2P link event, which can be simply divided into a setup event and a teardown event. When the P2P link is established, the P2P STA records the setup event, and when the P2P link is terminated, the P2P STA records the teardown event and deletes the setup time of the corresponding P2P link.

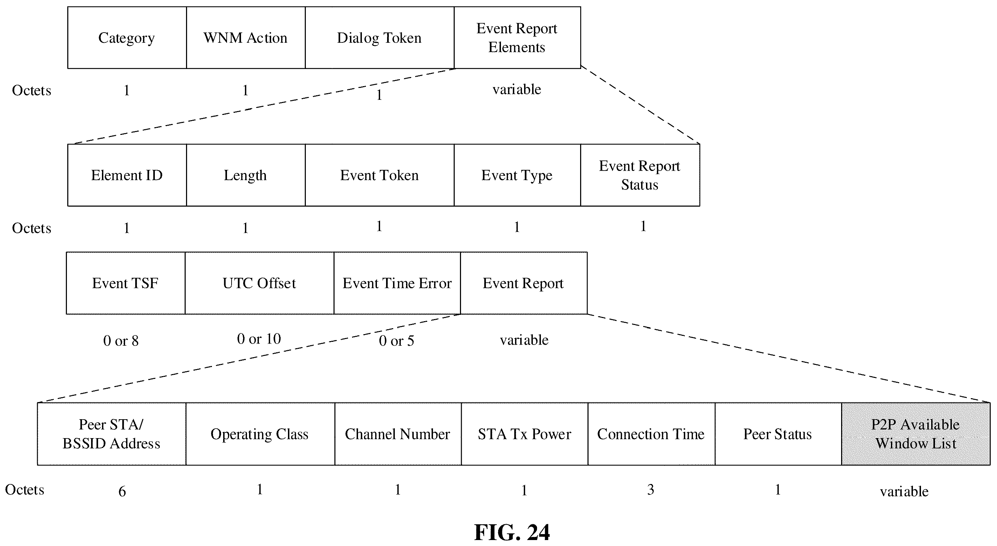

After the TDLS direct link is established, the TDLS initiator and/or the TDLS responder can optionally transmit a P2P link report frame to the AP, where the event report field of the event report element of the P2P link report frame carries a P2P Available Window List field. The function of the P2P Available Window List field is consistent with the foregoing description, and is not elaborated herein. Information (i.e., the intersection of time-frequency resource information that available for the P2P transmission by both TDLS STAs) carried in the P2P Available Window List field is consistent with that in the TDLS setup confirm frame. The format of the P2P link report field is illustrated in FIG. 24, including the following fields: a 1-byte Category field, a 1-byte Wireless Network Management (WNM) Action field, a 1-byte Dialog Token field, and an Event Report Elements field with a variable byte length. The Category field indicates a category of the current frame. The WNM Action field indicates a WNM type of the current frame. The Dialog Token field identifies the current session. The Event Report Elements field carries event report information.

As illustrated in FIG. 24, the Event Report Elements field includes the following subfields: a 1-byte Element ID subfield, a 1-byte length subfield, a 1-byte Event Token subfield, a 1-byte Event Type subfield, a 1-byte Event Report Status subfield, a 0-byte or 8-byte Event TSF subfield, a 0-byte or 10-byte Coordinated Universal Time (UTC) Offset subfield, a 0-byte or 5-byte Event Time Error subfield, and an Event Report subfield with a variable byte length. The Element ID subfield indicates an ID of the current element for identifying the element. The Length subfield indicates a length of the current element. The Event Token subfield identifies the current event. The Event Type subfield indicates a type of the current event. The Event Report Status subfield indicates a status of the event report. If the Event TSF subfield is present, it indicates that the STA records a TSF value of the event. If the UTC Offset subfield is present, it indicates UTC time when the TSF is 0. If the Event Time Error subfield is present, it indicates a standard offset of the UTC. The Event Report subfield contains a report for a specified event.

As illustrated in FIG. 24, the Event Report includes the following information: a 6-bit Peer STA/BSSID Address, a 1-bit Operating Class, a 1-bit Channel Number, a 1-bit STA transmission power (STA Tx Power), a 3-bit Connection Time (Connection Time), a 1-bit Peer Status, and a P2P Available Window List with a variable bit length. The Peer STA/BSSID Address indicates the MAC address of the STA if the P2P link is within the BSS, and indicates the BSSID of the Independent Basic Service Set (IBSS) if the P2P link is within an IBSS. The Operating Class indicates the operation class of the P2P link. The Channel Number indicates the channel on which the P2P link is located. The STA Tx Power indicates the transmission power of the STA on the P2P link. The Connection Time indicates the connection time in a unit of a second, and is required to be combined with the Peer Status to make a meaning. The Peer Status indicates the status of the P2P link, where a value of the Peer Status being 0 indicates that the P2P link has been terminated, and in this case, the Connection Time indicates a duration of the P2P link; the value of the Peer Status being 1 indicates that the P2P link is still working, and in this case, the Connection Time indicates the time difference form the setup of the P2P link to the event report; the value of the Peer Status being 2 indicates that the P2P link has been terminated and the P2P link is within the IBSS, and in this case, the Connection Time indicates a duration for which the STA becomes a member of the IBSS; the value of the Peer Status being 3 indicates that the P2P link is still working and the P2P link is within the IBSS, and in this case, the Connection Time indicates the time difference from the STA becoming the member of the IBSS to the event report. The frame format of the P2P Available Window List is illustrated in FIG. 23.

Optionally, after the setup of the TDLS direct link, the TDLS initiator and/or the TDLS responder may choose not to actively transmit the P2P link report frame. During the P2P TWT setup, when receiving a P2P TWT request frame from the P2P STA, the AP may actively transmit a P2P link event request frame to the P2P STA to request the P2P STA to transmit the P2P link report frame.

### For the sub-operation S2031 in the operation S2103

After the TDLS direct link is established, the P2P STA should request the AP to establish the P2P TWT. The P2P STA transmits a TWT setup request frame to the AP, where the TWT element carried in the TWT setup request frame contains parameters of the TWT expected by the P2P STA. The AP replies to the P2P STA with a TWT setup response frame, if the AP agrees, the TWT setup response frame carries the TWT element including the TWT parameters in the TWT setup request frame, and if the AP rejects, the TWT element is not carried in the TWT setup response frame. The setup of the P2P TWT is a negotiation process.

During the P2P TWT setup, the P2P STA is required to provide some necessary information to the AP, thus the TWT element is required to at least: indicate that the TWT currently being established through negotiation is a P2P TWT (the first point); carry identification information (i.e., MAC address and AID) of the P2P Peer (the second point).

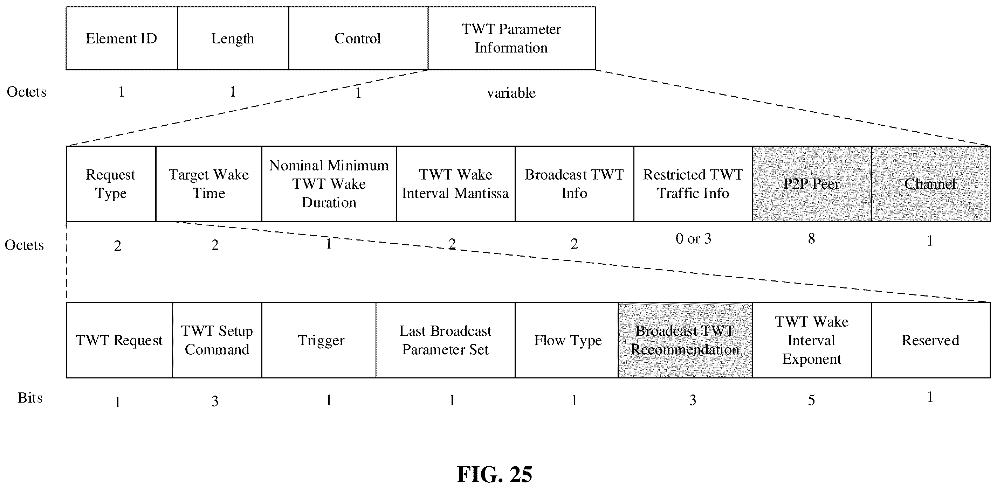

For the first point, a value of 5 is added to the Broadcast TWT Recommendation in the Request Type subfield of the TWT parameter information field of the TWT element, to indicate that the current broadcast TWT is the P2P TWT. The format of the modified TWT element is illustrated in FIG. 25, and the definition of the Broadcast TWT Recommendation is illustrated in Table 1.

**Table 1: Example of definition of Broadcast TWT Recommendation**

| Value of Broadcast TWT Recommendation | | Description |
|---|---|---|
| | 0 | No restrictions on frame transmission within the broadcast TWT SP |
| | 1 | Restrictions imposed on frame transmission of the scheduled TWT STA within the broadcast TWT SP |
| | 2 | Restrictions imposed on frame transmission of the scheduled TWT STA within the broadcast TWT SP |
| | 3 | No restriction on frame transmission within the broadcast TWT SP, unless the AP transmits a TIM frame or a Fast Initial Link Setup (FILS) discovery frame containing a TIM element at the beginning of the TWT SP |
| | 4 | Indicates that the current broadcast TWT is a restricted TWT |
| | 5 | Indicates that the current broadcast TWT is a P2P TWT |
| | 6-7 | Reserved |

As illustrated in FIG. 25, the TWT element includes the following fields: a 1-byte Element ID field, a 1-byte Length field, a 1-byte Control field, and a TWT parameter information field with a variable byte length. The Element ID field indicates the ID of the element for uniquely identifying the element. The Length field indicates the length of the element. The Control field contains some control information. The TWT parameter information field contains TWT parameter information. As illustrated in FIG. 25, the TWT parameter information field includes the following subfields: a 1-byte Request Type subfield, a 2-byte TWT subfield, a 1-byte Nominal Minimum TWT Wake Duration subfield, a 2-byte TWT Wake Interval Mantissa subfield, a 1-byte Broadcast TWT Info subfield, and a 0-byte or 3-byte Restricted TWT Traffic information subfield. The Target Wake Time subfield indicates the wake time of the current TWT. The Nominal Minimum TWT Wake Duration subfield indicates the minimum duration of the TWT SP. The TWT interval is calculated based on the TWT Wake Interval Mantissa subfield together with the TWT Wake Interval Exponent. The Broadcast TWT Info subfield contains information of the broadcast TWT. The Restricted TWT Traffic subfield indicates TID traffic indication information of the r-TWT.

The Request Type subfield includes the following information: a 1-bit TWT Request, a 2-bit TWT Setup Command, a 1-bit Trigger, a 3-bit Last Broadcast Parameter Set, a 1-bit Flow Type, a 3-bit Broadcast TWT Recommendation, a 5-bit TWT Wake Interval Exponent, and a 1-bit reserved. The Request Type subfield indicates the request type of the element. The TWT Request field indicates the role of the current STA, where if the STA is a TWT request STA, the TWT Request field is set to 1, otherwise, the TWT Request field is set to 0. The TWT Setup Command subfield indicates the TWT command. The Trigger subfield indicates whether the established TWT is trigger-enabled, where if the Trigger subfield is set to 1, it means that the TWT is trigger-enabled, otherwise, the TWT is non-trigger-enabled. The Last Broadcast Parameter Set subfield indicates whether the broadcast parameter set is the last one of the broadcast TWT element. The Flow Type subfield indicates whether the TWT is an announced TWT, where a value of 1 indicates that the TWT is an announced TWT, otherwise, the TWT is an unannounced TWT. The Broadcast TWT Recommendation subfield indicates the type of the current broadcast TWT. The TWT Wake Interval Exponent subfield indicates the exponent of the current TWT wake interval, for calculating the TWT interval together with the TWT Wake Interval Mantissa subfield.

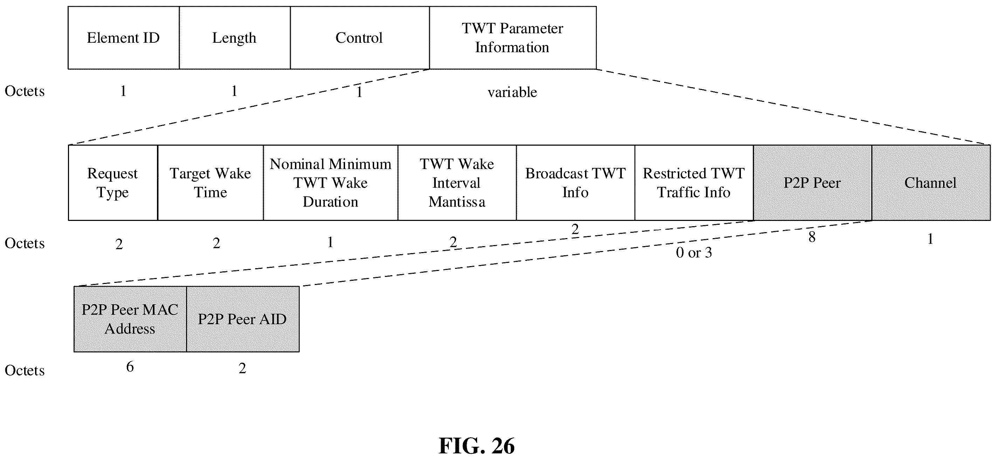

For the second point, a P2P Peer subfield is added to the TWT parameter information of the TWT element, where the P2P Peer subfield is present only in the P2P TWT and contains the MAC address and AID of the P2P Peer. The format of the P2P Peer subfield is illustrated in FIGS. 25 and 26. The TWT parameter information includes an 8-bit P2P Peer subfield, where the P2P Peer subfield uniquely identifies the P2P Peer, and the P2P Peer subfield includes a 6-byte P2P Peer MAC Address and a 2-bit P2P Peer AID, where the former is the MAC address of the P2P Peer, and the latter is the AID value of the P2P Peer.

In addition to these two points, as illustrated in FIGS. 25 and 26, a 1-byte Channel subfield is added to the TWT parameter information field. The Channel subfield is present only in the P2P TWT, and is used for indicating the channel used for the P2P transmission of the link corresponding to the current TWT element.

The AP can obtain the channel model and the position information of respective STAs in the BSS through the CSI report. When receiving the P2P TWT setup request from the P2P STA, the AP selects the optimal P2P TWT SP based on the current channel model, the position information of the P2P STAs, and the resource information in the P2P link report, and the AP carries the final P2P TWT SP through the TWT element carried in the TWT response frame, for transmitting to the P2P STA that initiates the TWT setup.

It should be noted that FIGS. 22 to 26 are examples of frame structures of different frames, and fields in each frame may be split or other fields may be added on the basis of the above structure. Further, the size of each field is only an example, and the size of each field may be changed depending on actual needs.

### For the sub-operation S203 in the operation S2103

After the P2P STA negotiates with the AP to establish the P2P TWT, the AP carries the TWT element in the beacon frame, the probe response frame and/or the (re)association frame; and when the P2P Peer receives the frame containing the TWT element, the P2P Peer parses the frame and obtains its own identification information from P2P Peer in the frame.

### For the operation S2105

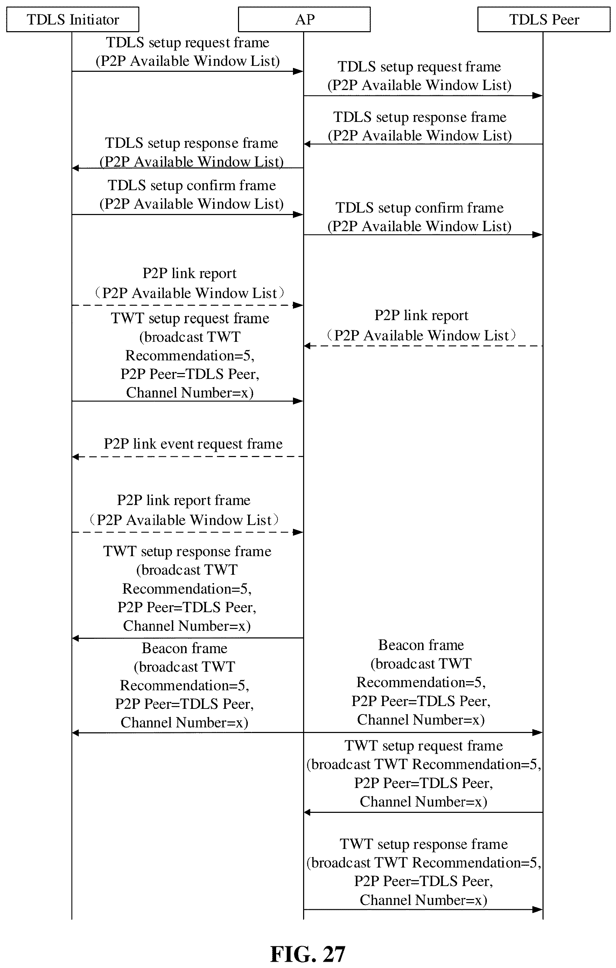

In the last operation, the P2P Peer requests to join the P2P TWT from the AP, which is consistent with the existing broadcast TWT mechanism. The P2P STA transmits the P2P traffic within the P2P TWT SP. Finally, the complete P2P TWT setup procedure is illustrated in FIG. 27.

The TDLS initiator transmits a TDLS setup request frame carrying a P2P Available Window List to the AP, and the AP forwards the received TDLS setup request frame to the TDLS peer, where the P2P Available Window List indicates resources used by the TDSL initiator for the TDLS link.

The TDLS peer transmits a TDLS setup response frame carrying a P2P Available Window List to the AP, and the AP transmits the received TDLS setup response frame to the TDLS initiator, where the P2P Available Window List indicates resources used by the TDSL peer for the TDLS link.

The TDLS initiator transmits a TDLS setup confirm frame carrying a P2P Available Window List to the AP, and the AP forwards the received TDLS setup confirm frame to the TDLS peer, where the P2P Available Window List indicates the negotiated resource for the TDLS link.

Optionally, after establishing the TDLS link, the TDLS initiator or the TDLS peer transmits a P2P link report frame carrying a P2P Available Window List to the AP, where the P2P Available Window List indicates the negotiated resource for the TDLS link.

The TDLS initiator transmits a TWT setup request frame to the AP, where the TWT element carried in the TWT setup request frame includes the following information: broadcast TWT recommendation information (i.e., the first indication information) with a value of 5, a parameter of the P2P peer, and a channel number. The first indication information is used for indicating that the established TWT is a TWT for the P2P, the parameter of the P2P peer indicates the P2P peer, and the channel number indicates a channel of the TDLS link.

After receiving the TWT setup request frame from the TDLS initiator, if the AP does not receive the P2P link report, the AP may transmit a P2P link event request frame to the TDLS initiator, and the TDLS initiator transmits a P2P link report frame to the AP in response to the P2P link event request frame, where the P2P link report frame contains a P2P Available Window List indicating the negotiated resource for the TDLS link.

The AP determines the TWT SP based on the received resource for the TDLS link and returns a TWT setup response frame to the TDLS initiator, where the TWT setup response frame carries the TWT SP and the TWT element, and then the TDLS initiator joins the TWT to become a member STA of the TWT SP.

The AP broadcasts a Beacon frame carrying the TWT element. After receiving the Beacon frame, the TDLS peer determines that the Beacon frame is transmitted to itself, and determines whether to join the TWT, if joining, transmits a TWT setup request frame carrying the TWT element to the AP, and the AP returns a TWT setup response frame carrying the TWT element to the TDLS peer, and then the TDLS peer joins the TWT to become a member STA of the TWT.

It can be understood that when establishing the TWT, after the TDLS initiator (belonging to the P2P link initiator) joins the TWT, the TDLS peer (belonging to the P2P link responder) may or may not join the TWT.

The second aspect: the P2P TWT setup procedure and the frame element design of the MLD

For the TDLS direct link setup of the MLD, the related standard merely defines a rule for the MLD to establish the TDLS direct link on one link. The embodiments of the disclosure involve setup of the P2P TWT. In order to describe the setup of the P2P TWT for the MLD, it is necessary to involve the TDLS direct link setup procedure of the MLD.

### 1) Setup of TDLS direct link

The embodiments of the disclosure provide a feasible multi-link TDLS direct link setup. Similar to the single link device establishing the TDLS direct link, it is proposed that the setup of the direct link by the MLD is consistent with the setup of the TDLS direct link by the single link device, where one or more Per-STA Profile subelements are carried in the TDLS setup request/response/confirm frame, and each Per-STA Profile subelement indicates one affiliated STA of the TDLS STA MLD that is required to establish TDLS direct link.

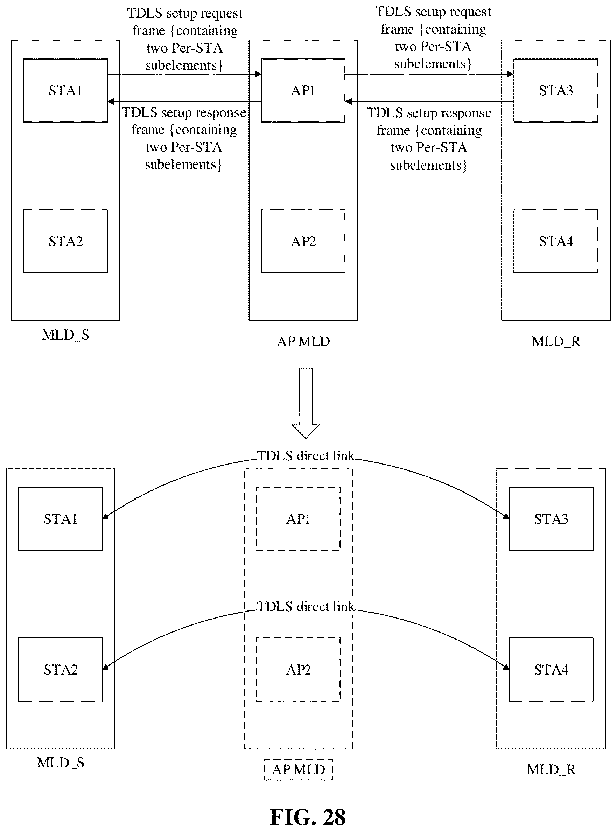

As illustrated in FIG. 28, when the MLD establishes the TDLS direct link, multiple TDLS direct links are established on one link. In the FIG. 28, after receiving the TDLS setup response frame, the STA1 is required to reply with the TDLS setup confirm frame containing two Per-STA subelements.

### 2) P2P link report

After the TDLS direct link is established, the TDLS Initiator MLD and the TDLS Peer MLD need to actively transmit the P2P link reports to the AP MLD. What is different from the single link device is that the MLD may establish multiple TDLS direct links simultaneously, thus as illustrated in FIG. 28, the TDLS setup request frame transmitted by the MLD_S to the MLD_R is required to carry multiple P2P link report fields, each of which indicates the TDLS direct link setup status and available information of one non-AP STA. The TDLS setup response frame transmitted by the MLD_R to the MLD_S is required to carry multiple P2P link report fields, each of which indicates the TDLS direct link setup status and available information of one non-AP STA. Thus the following two TDLS links are established: a TDLS direct link between the affiliated STA1 of the MLD_S and the affiliated STA3 of the MLD_R, and a TDLS direct link between the affiliated STA2 of the MLD_S and the affiliated STA4 of the MLD_R.

Alternatively, the TDLS Initiator MLD and the TDLS Peer MLD may not actively transmit the P2P link report, and the AP MLD may obtain the report through a P2P link request.

### 3) Setup of P2P TWT

A problem, i.e., TID mapping, exists when the MLD establishes multiple TDLS direct links simultaneously, and the embodiments of the disclosure propose a solution for the problem.

When the TDLS STA MLD requests the AP MLD to establish the P2P TWT, the procedure is consistent with that of the single link device, but information contained in the frames is slightly different. In the embodiments of the disclosure, a restricted TWT Traffic Info subfield is used. If the current broadcast TWT is a P2P TWT, then first, each TWT element indicates one link, the TWT parameter information field in the TWT element indicates a parameter of the current link; second, the value of the Broadcast TWT Recommendation is 5. The TWT parameter information field is also required to contain P2P Peer and Channel, and values of both the DL TID Bitmap Valid and UL TID Bitmap Valid in Traffic Info Control are all 1. The Restricted TWT DL/UL TID Bitmap in each TWT element indicates the TID on the corresponding TDLS direct link. In this case, the DL no longer indicates the downstream traffic, but indicates the traffic from the TDLS Initiator STA to the TDLS Response STA. Accordingly, the UL indicates the traffic from the TDLS Response STA to the TDLS Initiator STA.

### 4) Broadcast TWT scheduling information

After the P2P MLD negotiates with the AP MLD to establish the P2P TWT, the AP MLD carries the TWT element in the beacon frame, the probing response frame and/or the (re)association frame. When the P2P Peer MLD receives the frame containing the TWT element, the P2P Peer parses the frame and obtains its own identification information from P2P Peer in the frame.

### 5) P2P Peer MLD joins P2P TWT

In the last operation, the P2P Peer MLD requests to join the P2P TWT from the AP MLD, which is consistent with the existing broadcast TWT mechanism. The P2P MLD transmits the P2P traffic in the P2P TWT SP.

The third aspect: the scheduling manner and the frame element design of the P2P traffic transmission

After the P2P TWT is established, the P2P STA is required to execute a specific transmission plan. The embodiments of the disclosure propose two feasible scheduling manners: the first manner is trigger-enabled scheduling, and the other manner is non-trigger-enabled scheduling.

### 1) trigger-enabled

After the P2P TWT is established, the P2P STA is required to execute a specific transmission plan, and the P2P STA is scheduled to perform the P2P traffic transmission by AP-triggered manner. There may be multiple P2P links sharing the same P2P TWT SP, and these P2P links do not interfere with each other. In this case, the AP is required to simultaneously schedule multiple P2P STAs to perform transmissions within the same P2P TWT SP, so it is necessary to define a new TXOP sharing mode, which is specifically used for the P2P traffic transmission and is necessary to specify which P2P STAs share TXOP.

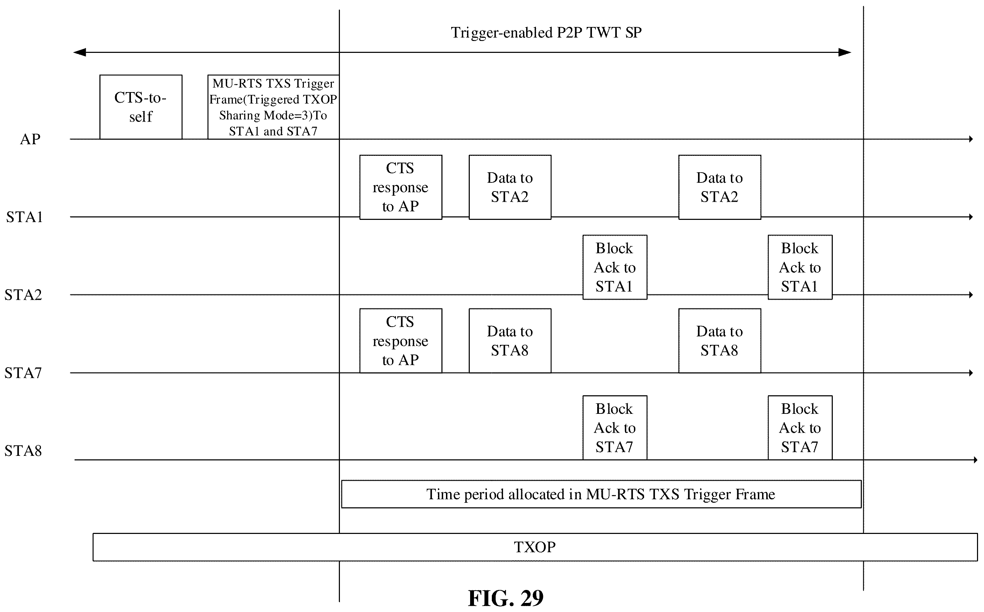

As illustrated in FIG. 29, a value of 3 is added to the Triggered TXOP Sharing Mode subfield in the Common Info field carried by the MU RTS TXS Trigger frame, for indicating that the current TXOP is shared with the P2P STA for P2P traffic transmission. Table 2 illustrates the values of the Trigger TXOP Sharing Mode subfield.

**Table 2 Example of values of Triggered TXOP Sharing Mode subfield**

| Value of Triggered TXOP Sharing Mode | | Description |
|---|---|---|
| | 0 | TXOP sharing is not enabled |
| | 1 | Within a shared TXOP, non-AP STA can only perform transmission to AP |
| | 2 | Within a shared TXOP, non-AP STA may perform transmission to both AP and non-AP STA |
| | 3 | Within a shared TXOP, non-AP STA can only perform transmission to non-AP STA |

The MU-RTS TXS Trigger frame is required to carry one or more User Info fields, where the User Info field is used to indicate the STA. If the value of the Triggered TXOP Sharing Mode is 3, the User Info field is used to indicate the target STA for TXOP Sharing, where AID12 indicates the AID of the target STA for TXOP Sharing, and the duration allocated by the Allocation Duration shall not exceed the P2P TWT SP.

As illustrated in FIG. 29, when the TWT SP is a trigger-enabled TWT SP, the AP contends for the TXOP within the P2P TWT SP through CTS-to-self. After obtaining the TXOP through contention, the AP notifies it to member STAs of the TWT SP and allocates resources to the member STAs using the MU-RTS TXS Trigger frame. The STA1 and the STA7 are member STAs of the TWT SP, thus the AP schedules the STA1 and the STA7 to perform P2P transmissions. The STA1 and the STA7 each firstly transmits the CTS to the AP in response to received MU-RTS TXS Trigger frame, and then performs transmission of the P2P traffic within the duration allocated by the MU-RTS TXS Trigger frame, where a P2P transmission is performed between the STA1 and the ST2, and a P2P transmission is performed between the STA7 and the STA8. The STA2 returns a BA frame to the STA1 after receiving traffic or data on the P2P link, and the STA8 returns a BA frame to the STA7 after receiving traffic or data on the P2P link.

### 2) non-trigger-enabled

The non-trigger-enabled scheduling refers to a rule in which the member STA of the current P2P TWT SP actively contends for a channel within the P2P TWT SP, and if a TXOP is obtained through contention, the P2P traffic is preferentially transmitted. An non-member STA of the P2P TWT should not contend for the TXOP within the P2P TWT SP as much as possible, or in order to ensure that the member STA of the P2P TWT has a priority transmission opportunity within the P2P TWT SP, the EDCA parameter of the member STA may be set to has a higher priority, which belongs to the specific implementation of the device.

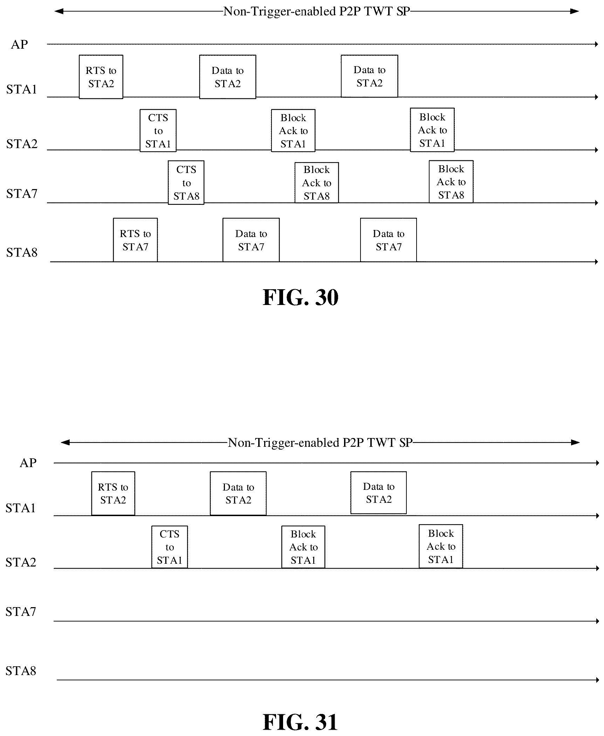

As illustrated in FIG. 30, for the non-trigger-enabled TWT SP, at the starting time of the P2P TWT SP, the STA1 starts to contend for the TXOP. After obtaining the transmission opportunity through contention, the STA1 transmits an RTS frame to the STA2. The STA2 replies to the STA1 with a CTS frame, and then the STA1 can preferentially schedule the P2P traffic for transmission within the TXOP.

Because the transmissions on the two P2P links (a link between the STA7 and the STA8, and a link between the STA1 and the STA2) do not interfere with each other, the STA8 also contends for the TXOP at the starting time of the P2P TWT SP, thus the STA8 has a chance to obtain the TXOP through contention and preferentially schedule the P2P traffic transmission within the TXOP.

Because the non-trigger-enabled scheduling manner itself has a characteristic that resources cannot be fully utilized efficiently, there is a case where the P2P TWT SP cannot be fully utilized. As illustrated in FIG. 30, at the initial part of the P2P TWT SP, the member STA of the P2P TWT is contending for the channel, which causes that the initial part of the P2P TWT SP cannot be used for effective P2P transmission. Further, the length of the TXOP may not be able to occupy all the remaining P2P TWT SP, which causes that the resources at the end of the P2P TWT SP cannot be used for effective P2P transmission. As illustrated in FIG. 31, it is also possible that within the P2P TWT SP, there is a situation where only one P2P link obtains the TXOP through contention.

Because the working channel for the P2P link is specified in the TWT element, there may be P2P traffic transmission using other channels, in which case there may be traffic transmission of the BSS on the primary working channel of the BSS.

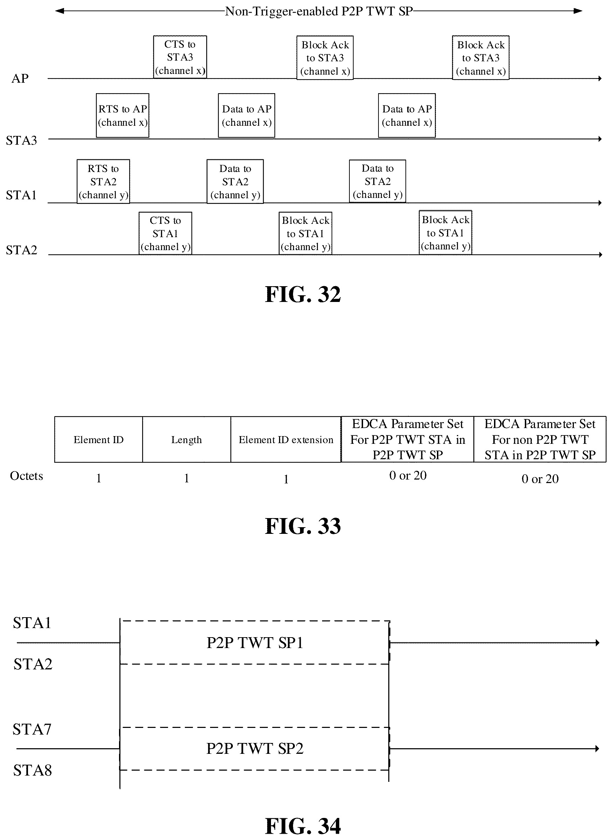

As illustrated in FIG. 32, the STA1 contends for the channel y on a channel y where the P2P TWT SP is located, while the STA3 contends for the channel on a primary channel (i.e., channel x) of the BSS, then they schedule the traffic transmission within the corresponding TXOP. Herein, the STA1 schedules the P2P traffic for transmission on the channel y where the P2P TWT SP is located, while the STA3 schedules the BSS traffic for transmission on the primary channel.

The fourth aspect: the channel access rule within the P2P TWT SP

According to the scheduling manner for the P2P traffic transmission within the P2P TWT SP, the channel access rule within the P2P TWT SP can be roughly divided into two types, where a first type refers to a channel access rule within the trigger-enabled P2P TWT SP, and a second type refers to a channel access rule within the non-trigger-enabled P2P TWT SP.

The channel access for the access point and the non-access point STA during the P2P TWT SP follows the channel access rule of r-TWT in IEEE 802.11be, to enable the access point to preferentially obtain the TXOP during the trigger-enabled P2P TWT SP and schedule the P2P STA as a member STA to perform P2P transmission with the pre-scheduled Peer STA, or enable the P2P STA as a member STA to preferentially obtain the TXOP and perform P2P transmission with the pre-scheduled Peer STA during the non-trigger-enabled P2P TWT SP. Specifically, the channel access rule within the P2P TWT SP optionally follows that: for the non-trigger-enabled P2P TWT SP, the member STA of the current P2P TWT contends for the TXOP using a high-priority EDCA parameter, and the non-member STA of the current P2P TWT contends for the TXOP using a low-priority EDCA parameter.

Accordingly, the AP carries a P2P TWT EDCA Parameter Set element in the beacon frame to inform all the STAs of EDCA parameters used to contend for the TXOP within the P2P TWT. The format of the P2P TWT EDCA Parameter Set element is illustrated in FIG. 33, where the element includes a 1-byte element ID field, a 1-byte length field, a 1-byte Element ID extension field, a 0-byte or 20-byte EDCA Parameter Set For P2P TWT STA in P2P TWT SP field, and a 0-byte or 20-byte EDCA Parameter Set For non P2P TWT STA in P2P TWT SP field. The EDCA Parameter Set For P2P TWT STA in P2P TWT SP field indicates EDCA parameters used for the member STAs of the P2P TWT to contend for the TXOP within the P2P TWT SP. The EDCA Parameter Set For non P2P TWT STA in P2P TWT SP field indicates EDCA parameters used for the non-member STAs of the P2P TWT to contend for the TXOP within the P2P TWT SP. The P2P TWT STA may be understood as a member STA of the P2P TWT SP, and the non P2P TWT STA may be understood as a non-member STA of the P2P TWT SP.

The EDCA Parameter Set For P2P TWT STA in P2P TWT SP field and the EDCA Parameter Set For Non-P2P TWT STA in P2P TWT SP field are optional. If the P2P TWT EDCA Parameter Set element includes the EDCA Parameter Set For P2P TWT STA in P2P TWT SP field, a size of the field is 20 bytes, otherwise, a size of the field is 0 byte. If the P2P TWT EDCA Parameter Set element includes the EDCA Parameter Set For non P2P TWT STA in P2P TWT SP field, a size of the field is 20 bytes, otherwise, a size of the field is 0 byte.

### 1) Channel access rule within trigger-enabled P2P TWT SP

Within the trigger-enabled P2P TWT SP, a member STA of the current trigger-enabled P2P TWT SP should not contend for the channel within the P2P TWT SP, the non-member STA of the current trigger-enabled P2P TWT SP freely contends for the channel within the P2P TWT SP or adopts a low-priority EDCA parameter to contend for the channel, or the AP announces quiet interval information overlapping with part or all of the P2P TWT SP, to enable the non-member STA to be in a silent state during the corresponding quiet interval.

For the trigger-enabled P2P TWT, when the AP contends for the channel during the trigger-enabled P2P TWT SP using implementation-specific prioritized TXOP acquisition methods, for example, a high-priority EDCA parameter may be employed.

After obtaining the TXOP through contention, the AP shares the TXOP with the member STA of the current trigger-enabled P2P TWT SP through the TXOP Sharing mode. The member STA may schedule the P2P traffic for transmission on the P2P link, after receiving the MU-RTS TXS trigger frame.

### 2) Channel access rule within non-trigger-enabled P2P TWT SP

For the non-trigger-enabled P2P TWT, the non-member STA of the P2P TWT SP freely contends for the channel within the P2P TWT SP or adopts a low-priority EDCA parameter to contend for the channel, or the AP announces quiet interval information overlapping part or all of the P2P TWT SP, to enable the non-member STA to be in a silent state during the corresponding quiet interval.

Optionally, within the non-trigger-enabled P2P TWT SP, all STAs including the member STAs of the current non-trigger-enabled P2P TWT SP and non-member STAs of the current non-trigger-enabled P2P TWT SP may freely contend for the channel. In order to ensure that the member STAs of the current non-trigger-enabled P2P TWT SP have a greater probability to transmit the P2P traffic, there may be two incentive methods.

**In** the first incentive method, the AP carries the P2P TWT EDCA Parameter Set element in the beacon frame, to inform the member STAs of the non-trigger-enabled P2P TWT SP and the non-member STAs of the current non-trigger-enabled P2P TWT SP about EDCA parameters used to contend for the TXOP.

In the second incentive method, after the non-member STA of the current non-trigger-enabled P2P TWT SP obtains the TXOP through contention, the non-member STA transmits an RTS frame to the AP to prepare to transmit BSS traffic. The AP may determine whether to reply with a CTS frame depending on the situation. For example, when the current non-trigger-enabled P2P TWT SP is about to end, the AP may reply with the CTS frame, and when the current non-trigger-enabled P2P TWT SP has just started, the AP may not reply with the CTS frame.

The transmission control method provided by the embodiments of the disclosure can be implemented by including, but not limited to, the following first embodiment and second embodiment.

### First embodiment

The scenario of the first embodiment is illustrated in FIG. 16, the STA1, the STA2, the STA7, and the STA8 are all within the same BSS, and meet the conditions for the TDLS direct link setup, and the operating frequency band is assumed to be 2.4 GHz. The procedure of the STA1 and the STA2 establishing the TDLS direct link and the P2P TWT, and the procedure of the STA7 and the STA8 establishing the TDLS direct link and the P2P TWT are sequentially described.
1) The STA1 and the STA2 establish the TDLS direct link and the P2P TWT, where the STA1 is a TDLS Initiator and the STA2 is a TDLS Peer.

First, the STA1 transmits a TDLS setup request frame to the AP, where the TDLS setup request frame is a data frame. The TDLS setup request frame carries one Per-STA Profile element, where the value of P2P Available Window List Present in the STA Control of the Per-STA Profile element is set to 1, indicating that the STA1 has a P2P Available Window List. The P2P Available Window List includes multiple P2P Available Windows, for indicating time-frequency resource information available for the P2P transmission by the STA1.

The AP forwards the TDLS setup request frame to the STA2. The STA2 accepts the request for setup of the TDLS direct link, and responds to the AP with a TDLS setup response frame. The TDLS setup response frame is also a data frame, and the TDLS setup response frame carries one Per-STA Profile element, where the P2P Available Window List Present bit in STA Control of the Per-STA Profile element is 1. The P2P Available Window List includes multiple P2P Available Windows, for indicating time-frequency resource information available for the P2P transmission by the STA2.

The AP forwards the TDLS setup response frame to the STA1, and the STA1 finally replies to the STA2 through the AP with a TDLS setup confirm frame. The P2P Available Window List in the TDLS setup confirm frame indicates that the time-frequency resource information available for the P2P transmission should be the intersection of the resource information carried in the TDLS setup request frame of the STA1 and the resource information carried in the TDLS setup response frame of the STA2.

The setup of the TDLS direct link between the STA1 and the STA2 is completed. The STA1 and the STA2 use the P2P link event report to report information of the TDLS direct link to the AP. The information includes: a working frequency band, a working channel, a MAC address or BSSID of the TDLS peer STA, a transmission power on the TDLS direct link, a connection setup time and current status (including in use, disconnected, or the like) of the TDLS direct link, and a P2P Available Window List available for the TDLS direct link.

Next, the STA1 transmits a TWT setup request frame to the AP to request setup of a P2P TWT. In the P2P TWT setup request frame, 1) the value of the Broadcast TWT Recommendation is 5, indicating that the requested TWT is a P2P TWT; 2) the value of the P2P Peer is: <MAC address of STA2, AID of STA2>.

After receiving the TWT setup request frame, the AP needs to determine a P2P TWT SP. Thus, the AP needs to know the channel information within the BSS and the resource usage information of the STA1 and the STA2, that is, the AP will perform the link measurement. The means used for AP to perform the link measurement include but are not limited to: a CSI report, a Location Civic report, a P2P Link event report and a Sounding technology. The specific procedure of AP performing the link measurement is described in the following section of the STA7 and the STA8 establishing the TDLS direct link and the P2P TWT.

The AP determines the optimal P2P TWT SP according to the algorithm based on the CSI report, the Location Civic report, the P2P link report and the resource situation provided by the STA1, and carries the final P2P TWT SP in the TWT parameter information field of the TWT element in a TWT setup response frame.

It should be noted that the determination of the P2P TWT SP is a negotiation process. So far, the setup of the P2P TWT is completed.

Finally, the AP carries the TWT element in the beacon frame and broadcasts the P2P TWT in the BSS. The STA2 is required to receive the beacon frame, thereby obtaining the information of the P2P TWT, and requests to join the P2P TWT by transmitting a TWT setup request frame to the AP.

The AP receives the TDLS setup request frame and replies to the STA2 with a TDLS setup response frame. The TWT setup command in the TDLS setup response frame is set to accept TWT, and the STA2 successfully joins the P2P TWT.

2) The STA7 and the STA8 establish the TDLS direct link and the P2P TWT, where the STA7 is a TDLS Initiator and the STA8 is a TDLS Peer.

First, the STA7 transmits a TDLS setup request frame to the AP, to request to establish a TDLS direct link with the STA8. The P2P Available Window List in the TDLS setup request frame is set based on the STA7 itself. The AP forwards the TDLS setup request frame to the STA8, and the STA8 accepts the request for setup of the TDLS direct link and transmits the TDLS setup response frame to STA7 through the AP. Finally, the STA7 replies to the STA8 with a TDLS setup confirm frame through the AP. The time-frequency resource information available for the P2P transmission indicated by the P2P Available Window List in the TDLS setup confirm frame should be the intersection of the resource information carried in the TDLS setup request frame of the STA7 and the resource information carried in the TDLS setup response frame of the STA8.

The setup of the TDLS direct link between the STA7 and the STA8 is completed. The STA7 and the STA8 use the P2P link event report to report the information of the TDLS direct link to the AP.

Next, the STA7 transmits a P2P TWT setup request frame to the AP, to request setup of a P2P TWT. In the P2P TWT setup request frame, 1) the value of the Broadcast TWT Recommendation is 5, indicating that the requested TWT is a P2P TWT; 2) the value of the P2P Peer is: <MAC address of STA8, AID of STA8>.

After receiving the frame, the AP is required to determine a P2P TWT SP, and thus performs the link measurement. The specific procedure of AP performing the link measurement includes the following operations.

The AP obtains the channel model within the BSS through the CSI report. The CSI report field is contained in the CSI frame, and the AP may request the non-AP STA to perform relevant channel measurement using a mechanism of Null Data Packet Announcement (NDPA) & Null Data Packet (NDP). The non-AP STA stores the measurement result in the CSI frame and transmits the CSI frame to the AP as a response to the NDPA & NDP. Further, the AP may use a regular sounding PPDU to request the non-AP STA to transmit a CSI report. It is only necessary to set the CSI/Steering subfield in the High Efficiency (HT) Control field of the sounding PPDU or the NDP to 1, which indicates requesting the non-AP STA to transmit the CSI report. The function of the CSI/Steering subfield is to specify the feedback type of the non-AP STA.

It should be noted that the AP does not necessarily request the CSI report of the non-AP STA until the P2P TWT setup request frame is received, and the AP may request the CSI report of the non-AP STA through the sounding PPDU or the NDP at other times. By collecting CSI reports from multiple STAs, the AP can obtain a comprehensive view of multi-link propagations and channel characteristics on the same channel. The AP may analyze and process these CSI reports to infer the channel model and characteristics, such as link loss, multi-link delay, phase variation, and/or channel fading. The AP may perform operations, such as beamforming, radio resource allocation, and/or interference management, based on the inferred channel model.

The non-AP STA can only generate a corresponding CSI report after performing the measurement, and the non-AP STA may perform the measurement using the sounding PPDU. Specifically, the AP requests the STA7 and the STA8 to perform sounding with the STA1 and the STA2 using the NDPA&NDP frame, and the STA7 and the STA8 transmit the results to the AP through the CSI reports. After receiving the request from the AP, the STA7 and STA8 request the STA1 and the STA2 to transmit the sounding PPDUs. After receiving the sounding PPDUs, the STA7 and the STA8 may calculate the corresponding channel information and transmit the channel information to the AP through the CSI reports.

The location information of the non-AP STA within the BSS is obtained through the Location Civic report. The Location Civic report is a type of radio measurement report. A STA may request to obtain the location information of another STA by transmitting a radio measurement request frame to the another STA. It is necessary to set the value of the Measurement type in the measurement request element of the radio measurement request frame to 11, which indicates the requested location civic information. When receiving the location civic request, the receiver needs to contain the coordinate information of the receiver itself and a reference point in the location civic report and transmit the Location Civic report to the initiator through a radio measurement report frame. Similarly, the AP does not necessarily request the Location Civic report until the P2P TWT request frame is received.

Therefore, the AP may obtain the relative position information (which may be coordinates or other geographic information) between the non-AP STA and the AP itself through the location civic. Therefore, the AP can also know the position information of the non-AP STAs within the BSS, and thus can calculate the distance between any two of the non-AP STAs.

Specifically, the AP knows the channel model within the BSS through the CSI report, calculates the distances between the STA1, the STA2, the STA7 and the STA8 through the Location Civic report, and knows the transmission power of the TDLS direct link between the STA1 and the STA2, the transmission power of the TDLS direct link between the STA7 and the STA8, and the resource information available for the P2P of the two TDLS direct links through the P2P Link event report. Now, the AP is required to calculate whether the transmission on the TDLS direct link between the STA1 and the STA2 and the transmission on the TDLS direct link between the STA7 and the STA8 interfere with each other according to an algorithm, and allocate an SP for the P2P TWT of STA7 and the STA8 based on the calculation result. The simplest algorithm is to calculate the received power. The received power is related to the channel model and the distance between STAs. For example, the AP calculates the received power of the data signal transmitted by the STA1 when the data signal reaches the STA7 or the STA8 based on the transmit power of the STA1, the distances between the STA1 and each of the STA7 and the STA8, and the channel model. If the received power is less than a threshold, it indicates that the STA1 transmitting data will not affect the STA7 and the STA8. Similarly, the AP can calculate the influence of the STA2 on the STA7 and the STA8, the influence of the STA7 on the STA1 and the STA2, and the influence of the STA8 on the STA1 and the STA2.

Assuming that it is calculated that the transmission on the TDLS direct link between the STA1 and the STA2 does not affect the transmission on the TDLS direct link between the STA7 and the STA8, the AP can align the two pairs of P2P TWT SPs, thereby reducing the resource occupation. The final allocation result is illustrated in FIG. 34.

Similarly, finally, the AP carries the TWT element in the beacon frame and broadcasts the P2P TWT within the BSS. The STA 8 is required to receive the beacon frame to obtain the information of the P2P TWT, and requests to join the P2P TWT by transmitting a TWT setup request frame to the AP.

The AP receives the TDLS setup request frame and replies to the STA8 with a TDLS setup response frame. The TWT setup command in the TDLS setup response frame is set to accept TWT, and the STA8 successfully joins the P2P TWT.

After the setup of the P2P TWT is completed, a specific transmission plan is required to be executed. There are two transmission plans: trigger-enabled and non-trigger-enabled, and a device can choose the transmission plan based on its own service requirement. After the P2P TWT is established, the beacon frame transmitted by the AP further carries the P2P TWT EDCA Parameter Set element. Within the P2P TWT SP, if the STA will contend for the TXOP, the STA needs to use the EDCA parameter of the corresponding role allocated in the beacon frame.

### Second embodiment

In the multi-link scenario illustrated in FIG. 28, STA1 and STA3 are associated with AP1, STA2 and STA4 are associated with AP2. It is assumed that the operating frequency band of the AP1 is 2.4 GHz, the operating frequency band of the AP2 is 5 GHz, MLD_S is a TDLS Initiator STA MLD, and MLD_R is a TDLS Response STA MLD.

First, the STA1 affiliated with the MLD_S transmits a TDLS setup request frame to an AP MLD, where the TDLS setup request frame is a data frame and carries two Per-STA Profile elements.
1. The first Per-STA Profile element contains basic information of the STA1, where P2P Available Window List Present and P2P Available Window List are reasonably set based on the resource information of the STA1 itself.
2. The second Per-STA Profile element contains basic information of the STA2, where P2P Available Window List Present and P2P Available Window List are reasonably set based on the resource information of the STA2 itself.

The AP MLD forwards the TDLS setup request frame to the STA3 affiliated with the MLD_R. The MLD_R accepts the request for setup of the TDLS direct links, and then responds to the AP MLD with a TDLS setup response frame. The TDLS setup response frame is a data frame and carries two Per-STA Profile elements, where P2P Available Window List Present and P2P Available Window List are reasonably set based on the resource information of the MLD_R itself.

The AP MLD forwards the response frame to the MLD_S. The STA1 finally replies to the STA3 with a TDLS setup confirm frame through the AP. The content of the P2P Available Window List in the TDLS setup confirm frame is the intersection of resource information indicated by both TDLS parities in the TDLS setup request and response frames. The setup of two TDLS direct links between the MLD _S and the MLD_R is completed.

Next, the STA1 affiliated with the MLD_S transmits a P2P TWT setup request frame to the AP, to request setup of the P2P TWT. The P2P TWT setup request frame contains two TWT elements, each of which indicates a respective link and contains a Broadcast TWT Parameters Set field.

The Broadcast TWT Parameters Set field contained in each TWT element further includes a P2P Peer subfield.

The value of Broadcast TWT Recommendation in each TWT element is 5.

The Broadcast TWT Parameters Set field contained in each TWT element optionally contains a restricted TWT Traffic Info subfield. Assuming that the values of DL TID Bitmap Valid and UL TID Bitmap Valid in the subfield are 1, then the Restricted TWT DL/UL TID Bitmap will indicate the TID on the corresponding TDLS direct link.

After receiving the P2P TWT request frame, the AP MLD is required to determine the P2P TWT SP. Like the single-link device, the optimal P2P TWT SP allocation can be determined based on a specific algorithm using the CSI report, the Location Civic report, the P2P link report and information provided by the MLD_S, and carry the final P2P TWT SP through the TWT parameter information field in the TWT element of a P2P TWT response frame.

The P2P TWT response frame transmitted by the AP MLD carries a restricted TWT Traffic Info subfield to indicate the allocation of the TID. Because the AP is associated with the MLD_S and the MLD_R, the AP knows the TID allocation of the MLD_S and the MLD_R in the WLAN, and writes the uplink TID information of the MLD_S into the Restricted TWT UL TID Bitmap and the uplink TID information of the MLD_R into the Restricted TWT DL TID Bitmap based on the TID allocation information.
1. Perspective of the MLD_S: Restricted TWT UL TID Bitmap indicates the traffic corresponding to the TID that the MLD_S can transmit on the corresponding TDLS direct link, and Restricted TWT DL TID Bitmap indicates the traffic corresponding to the TID that the MLD_S can receive on the corresponding TDLS direct link.
2. Perspective of MLD_R: Restricted TWT UL TID Bitmap indicates the traffic corresponding to the TID that the MLD_R can receive on the corresponding TDLS direct link, and Restricted TWT DL TID Bitmap indicates the traffic corresponding to the TID that the MLD_R can transmit on the corresponding TDLS direct link.

The P2P TWT is established.

Finally, the AP will carry the TWT element in the beacon frame, and broadcast the P2P TWT within the BSS. The MLD_R receives the beacon frame, requests to join the P2P TWT by transmitting a TWT setup request frame to the AP MLD. The AP MLD receives the TDLS setup request frame, and replies to the MLD_R with a TDLS setup response frame, where the TWT setup command in the TDLS setup response frame is set to accept TWT, thus the setup of the P2P TWT is completed.

After the setup of the P2P TWT is completed, a specific transmission plan is required to be executed, and the transmission plan is specifically implemented by a device. Within the P2P TWT SP, if the STA will contend for the TXOP, the STA needs to use the EDCA parameter of the corresponding role allocated in the beacon frame.

The transmission control method provided in the embodiments of the disclosure proposes a new TWT-based mode for coordinating the P2P transmission, which is referred to as P2P TWT for short. When one or more P2P links exist, the AP reasonably allocates the P2P TWT SP based on resource information in the current BSS and resource information used by the P2P link. Within the P2P TWT SP, multiple pairs of P2P links may be allowed to transmit P2P traffic using an AP scheduling manner, or the P2P STAs may be allowed to preferentially transmit the P2P traffic using a non-triggered manner.

In this way, the following effects are achieved.

The AP schedules P2P traffic transmissions, enabling the simultaneous transmission of multiple pairs of P2P links through either the trigger-enabled manner or the non-trigger-enabled manner, thus WLAN media resources can be efficiently utilized, and more media resources can be used for the BSS transmission.

The transmissions of the P2P traffic are limited within the P2P TWT SP, thus the transmissions of the BSS traffic outside the P2P TWT SP are not interfered with by the P2P traffic.

When there are enough P2P direct links, a "P2P network" exists objectively. Through the P2P TWT mode, the AP can coordinate the resources of the "P2P network" and the WLAN, thus the two networks can coexist in coordination and resources can be utilized efficiently.

In addition, embodiments of the disclosure further provide a feasible method for simultaneously establishing multiple TDLS direct links.

Preferred embodiments of the present disclosure have been described in detail with reference to the accompanying drawings, but the present disclosure is not limited to the specific details of the above embodiments. Within the scope of the technical conception of the present disclosure, various simple modifications can be made to the technical solutions of the present disclosure, and these simple modifications all fall within the scope of protection of the present disclosure. For example, various specific technical features described in the above specific embodiments may be combined in any suitable manner without conflict. Various possible combinations are not further described in the present disclosure to avoid unnecessary repetition. For another example, various different implementations of the present disclosure can also be combined arbitrarily, which should also be considered as the content disclosed by the present disclosure as long as they do not violate the conception of the present disclosure. For another example, various embodiments described in the present disclosure and/or the technical features in various embodiments can be arbitrarily combined with the related technologies without conflict, and the technical solution obtained after the combination should also fall within the scope of protection of the present disclosure.

It should also be understood that in the various method embodiments of the present disclosure, the size of the serial numbers of the above-mentioned various processes do not indicate a sequence of execution. The sequence of execution of the processes should be determined by their functions and inherent logics, and should not constitute a limitation on the implementation process of the embodiments of the present disclosure. Further, in embodiments of the present disclosure, the terms "downlink", "uplink" and "sidelink" are used to indicate transmission directions of signals or data. The term "downlink" is used to denote that the transmission direction of the signals or the data is a first direction from a station to user equipment in a cell. The term "uplink" is used to denote that the transmission direction of the signals or the data is a second direction from the user equipment in the cell to the station. The term "sidelink" is used to denote that the transmission direction of the signals or the data is a third direction from first user equipment to second user equipment. For example, "downlink signal" means that the transmission direction of the signal is the first direction. In addition, in the embodiments of the present disclosure, the term "and/or" refers to only an association relationship for describing associated objects and indicates that three relationships may exist. Specifically, A and/or B may indicate three cases: i.e., only A exists, both A and B exist, and only B exists. Furthermore, character "/" in the disclosure usually indicates that previous and next associated objects form an "or" relationship.

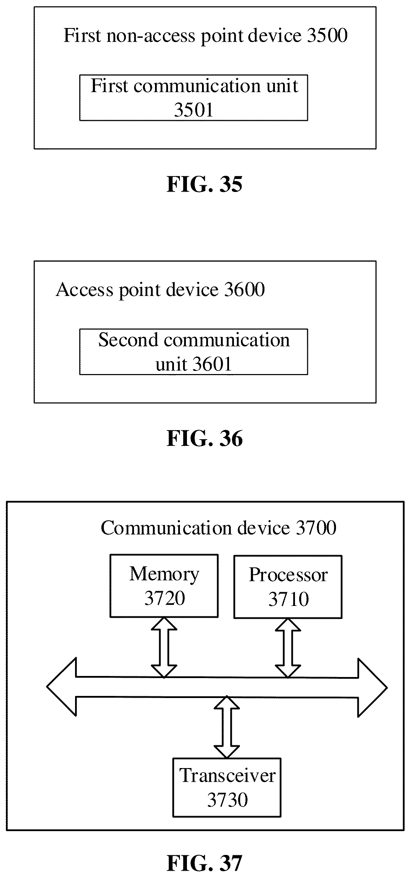

FIG. 35 is a structural diagram of a first non-access point device provided in an embodiment of the disclosure. As illustrated in FIG. 35, the first non-access point device 3500 includes a first communication unit 3501.

The first communication unit 3501 is configured to receive first information transmitted by an access point device, where the first information is used for indicating a first TWT SP. During the first TWT SP, P2P transmission is prioritized on at least one P2P link including a first P2P link between the first non-access point device and a second non-access point device.

In some embodiments, the first TWT SP is included in a first frame transmitted by the access point device to the first non-access point device. The first frame includes at least one of: a TWT setup response frame; a beacon frame; an association frame or a re-association frame; or a probe response frame.

In some embodiments, the first TWT SP is included in a first TWT element of the first frame.

In some embodiments, the first TWT element further includes at least one of: first indication information for indicating that the first TWT SP is used for P2P link(s); a parameter of a peer device of the first P2P link; or channel information of the first P2P link.

In some embodiments, the first indication information is included in a request type subfield of a TWT parameter information field of the first TWT element.

In some embodiments, wherein the first indication information is broadcast TWT recommendation information with a value set to a first value in the request field.

In some embodiments, a condition that the first TWT element includes the parameter of the peer device of the first P2P link and/or the channel information of the first P2P link includes that: the first TWT element includes the first indication information.

In some embodiments, a parameter of the second non-access point device is contained in a peer subfield of a TWT parameter information field of the first TWT element.

In some embodiments, the channel information of the first P2P link is contained in a channel subfield of a TWT parameter information field of the TWT element.

In some embodiments, when at least two P2P links are established between the first non-access point device and the second non-access point device, and the first frame is a TWT setup response frame, the first frame includes at least two TWT elements. One of the at least two TWT elements is used for one P2P link, and the first TWT element is used for the first P2P link in the at least two P2P links.

In some embodiments, the first TWT element further includes a first TID of the first P2P link.

In some embodiments, the first TID is contained in a restricted TWT downlink or uplink TID bitmap subfield of a TWT parameter information field of the first TWT element.

In some embodiments, the first TWT SP is determined based on a first communication requirement, where the first communication requirement includes a communication requirement of the first P2P link, and the first P2P link is a P2P link between the first non-access point device and the second non-access point device.

In some embodiments, the communication requirement of the first P2P link is a resource for the first P2P link.

In some embodiments, the first communication requirement further includes a communication requirement of a first BSS, where the first BSS is a BSS to which the first non-access point device belongs.

In some embodiments, the communication requirement of the first BSS is a resource used by the first BSS.

In some embodiments, when a transmission on the first P2P link and a transmission on a second P2P link do not interfere with each other, the first TWT SP overlaps with a second TWT SP corresponding to the second P2P link in time domain and/or frequency domain. The second P2P link is a P2P link between a third non-access point device and a fourth non-access point device.

In some embodiments, when a transmission on the first P2P link and a transmission on a second P2P link do not interfere with each other, the first TWT SP is a TWT SP corresponding to the second P2P link, where the second P2P link is a P2P link between a third non-access point device and a fourth non-access point device.

In some embodiments, whether the transmission on the first P2P link and the transmission on the second P2P link interfere with each other is determined based on the first communication requirement and a second communication requirement, where the second communication requirement is a communication requirement of the second P2P link.

In some embodiments, the communication requirement of the second P2P link is a resource for the second P2P link.

In some embodiments, the first communication unit 3501 is further configured to: transmit a link report frame to the access point device. The link report frame includes first indication information, where the second indication information is used for indicating the communication requirement of the first P2P link.

In some embodiments, the second indication information is contained in an event report field of an event report element of the link report frame.

In some embodiments, the first P2P link is a first TDLS direct link.

In some embodiments, the first communication unit 3501 is further configured to: receive or transmit a TDLS setup confirm frame. The TDLS setup confirm frame contains third indication information, where the third indication information is used for indicating the communication requirement of the first P2P link.

In some embodiments, the third indication information is carried in a first Per-STA profile element of the TDLS setup confirm frame.

In some embodiments, the first communication unit 3501 is further configured to: receive or transmit a TDLS setup request frame. The TDLS setup request frame contains fourth indication information, where the fourth indication information indicates a communication requirement of an initiator of the first P2P link for the first P2P link.

In some embodiments, the fourth indication information is carried in a first Per-STA profile element of the TDLS setup request frame.

In some embodiments, the first communication unit 3501 is further configured to: transmit or receive a TDLS setup response frame. The TDLS setup response frame contains fifth indication information, where the fifth indication information is used for indicating a communication requirement of a responder of the first P2P link for the first P2P link.

In some embodiments, the fifth indication information is carried in a first Per-STA profile element of the TDLS setup response frame.

In some embodiments, a STA information field of the first Per-STA profile element includes an available window subfield, where the available window subfield includes indication information indicating a corresponding resource.

In some embodiments, when a second frame including the first Per-STA profile element is used for establishing at least two P2P links, the second frame includes at least two Per-STA profile elements. One of the at least two Per-STA profile elements is used for one P2P link, and the at least two Per-STA profile elements includes the first Per-STA profile element corresponding to the first P2P link.

In some embodiments, a STA control field of the first Per-STA profile element includes an available window present subfield, where the available window present subfield is used for indicating whether the available window subfield includes the indication information.

In some embodiments, the first non-access device and/or the second non-access device are member STAs of the first TWT SP.

In some embodiments, when the at least one P2P link includes at least two second P2P links, a transmission on one of the at least two P2P links and a transmission on another of the at least two P2P links do not interfere with each other.

In some embodiments, transmissions on different P2P links in the at least two P2P links overlap in time domain and/or frequency domain.

In some embodiments, a transmission opportunity used by the first P2P link for P2P transmission includes one of: a transmission opportunity shared by the access point device to the first non-access point device; or a transmission opportunity obtained by the first non-access point device through contention.

In some embodiments, the first communication unit 3501 is further configured to: when the transmission opportunity used by the first P2P link for the P2P transmission is shared by the access point device to the first non-access point device, and the first non-access point device is a member STA of the first TWT SP, receive a first trigger frame transmitted by the access point device during the first TWT SP, where the first trigger frame is used for instructing the first non-access point device to perform the P2P transmission.

In some embodiments, the first trigger frame is used for triggering at least one member STA of the first TWT SP to perform the P2P transmission using the transmission opportunity shared by the access point device.

In some embodiments, the first trigger frame includes a MU-RTS TXS Trigger frame.

In some embodiments, the first trigger frame includes at least one user information field. The user information field includes sixth indication information, where the sixth indication information is used for indicating one member STA of the first TWT SP.

In some embodiments, the first trigger frame includes a common information field, the common information field includes seventh indication information, and the seventh indication information is used for indicating that a transmission opportunity obtained by the access point device through contention is shared for the P2P transmission.

In some embodiments, when the transmission opportunity used by the first P2P link for the P2P transmission is shared by the access point device to the first non-access point device, during the first TWT SP, at least one of the following is met: a member STA of the first TWT SP does not contend for a transmission opportunity; a non-member STA of the first TWT SP is free to contend for a transmission opportunity, or contends for a transmission opportunity using a first channel access parameter, or is in a silent state during a first interval announced by the access point device, where the first interval partially or fully overlaps with the first TWT SP in time domain; or the access point device contends for a transmission opportunity using a second channel access parameter, where a priority of the second channel access parameter is higher than a priority of the first channel access parameter.

In some embodiments, when the transmission opportunity used by the first P2P link for the P2P transmission is obtained by the first non-access point device through contention, during the first TWT SP, at least one of the following is met: a member STA of the first TWT SP contends for a transmission opportunity using a third channel access parameter; or a non-member STA of the first TWT SP is free to contend for a transmission opportunity, or contends for a transmission opportunity using a first channel access parameter, or is in a silent state during a first interval announced by the access point device, where the first interval partially or fully overlaps with the first TWT SP in time domain, and a priority of the third channel access parameter is higher than a priority of the first channel access parameter.

In some embodiments, when the transmission opportunity used by the first P2P link for the P2P transmission is obtained by the first non-access point device through contention, a channel used by the first P2P link between the first non-access point device and the second non-access point device is a secondary channel of a first BSS, a transmission of traffic of the first BSS exists on a primary channel of the first BSS, and the first BSS is a BSS to which the first non-access point device belongs.

FIG. 36 is a structural diagram of an access point device provided in an embodiment of the disclosure. As illustrated in FIG. 36, the access point device 3600 includes a first communication unit 3601.

The second communication unit 3601 is configured to transmit first information to a first non-access point device, where the first information is used for indicating a first TWT SP. During the first TWT SP, P2P transmission is prioritized on at least one P2P link including a first P2P link between the first non-access point device and a second non-access point device.

In some embodiments, the first TWT SP is included in a first frame transmitted by the access point device to the first non-access point device. The first frame includes at least one of: a TWT setup response frame; a beacon frame; an association frame or a re-association frame; or a probe response frame.

In some embodiments, the first TWT SP is included in a first TWT element of the first frame.

In some embodiments, the first TWT element further includes at least one of: first indication information for indicating that the first TWT SP is used for P2P link(s); a parameter of a peer device of the first P2P link; or channel information of the first P2P link.

In some embodiments, the first indication information is included in a request type subfield of a TWT parameter information field of the first TWT element.

In some embodiments, wherein the first indication information is broadcast TWT recommendation information with a value set to a first value in the request field.

In some embodiments, a condition that the first TWT element includes the parameter of the peer device of the first P2P link and/or the channel information of the first P2P link includes that: the first TWT element includes the first indication information.

In some embodiments, a parameter of the second non-access point device is contained in a peer subfield of a TWT parameter information field of the first TWT element.

In some embodiments, the channel information of the first P2P link is contained in a channel subfield of a TWT parameter information field of the TWT element.

In some embodiments, when at least two P2P links are established between the first non-access point device and the second non-access point device, and the first frame is a TWT setup response frame, the first frame includes at least two TWT elements. One of the at least two TWT elements is used for one P2P link, and the first TWT element is used for the first P2P link in the at least two P2P links.

In some embodiments, the first TWT element further includes a first TID of the first P2P link.

In some embodiments, the first TID is contained in a restricted TWT downlink or uplink TID bitmap subfield of a TWT parameter information field of the first TWT element.

In some embodiments, the first TWT SP is determined based on a first communication requirement, the first communication requirement includes a communication requirement of the first P2P link, where the first P2P link is a P2P link between the first non-access point device and the second non-access point device.

In some embodiments, the communication requirement of the first P2P link is a resource for the first P2P link.

In some embodiments, the first communication requirement further includes a communication requirement of a first BSS, where the first BSS is a BSS to which the first non-access point device belongs.

In some embodiments, the communication requirement of the first BSS is a resource used by the first BSS.

In some embodiments, when a transmission on the first P2P link and a transmission on a second P2P link do not interfere with each other, the first TWT SP overlaps with a second TWT SP corresponding to the second P2P link in time domain and/or frequency domain. The second P2P link is a P2P link between a third non-access point device and a fourth non-access point device.

In some embodiments, when a transmission on the first P2P link and a transmission on a second P2P link do not interfere with each other, the first TWT SP is a TWT SP corresponding to the second P2P link, where the second P2P link is a P2P link between a third non-access point device and a fourth non-access point device.

In some embodiments, whether the transmission on the first P2P link and the transmission on the second P2P link interfere with each other is determined based on the first communication requirement and a second communication requirement, where the second communication requirement is a communication requirement of the second P2P link.

In some embodiments, the communication requirement of the second P2P link is a resource for the second P2P link.

In some embodiments, the second communication unit 3601 is further configured to: transmit a link report frame to the access point device. The link report frame includes first indication information, where the second indication information is used for indicating the communication requirement of the first P2P link.

In some embodiments, the second indication information is contained in an event report field in an event report element of the link report frame.

In some embodiments, the first P2P link is a first TDLS direct link.

In some embodiments, the second communication unit 3601 is further configured to: receive or transmit a TDLS setup confirm frame. The TDLS setup confirm frame contains third indication information, where the third indication information is used for indicating the communication requirement of the first P2P link.

In some embodiments, the third indication information is carried in a first Per-STA profile element of the TDLS setup confirm frame.

In some embodiments, the second communication unit 3601 is further configured to: receive or transmit a TDLS setup request frame. The TDLS setup request frame contains fourth indication information, where the fourth indication information indicates a communication requirement of an initiator of the first P2P link for the first P2P link.

In some embodiments, the fourth indication information is carried in a first Per-STA profile element of the TDLS setup request frame.

In some embodiments, the second communication unit 3601 is further configured to: transmit or receive a TDLS setup response frame. The TDLS setup response frame contains fifth indication information, where the fifth indication information is used for indicating a communication requirement of a responder of the first P2P link for the first P2P link.

In some embodiments, the fifth indication information is carried in a first Per-STA profile element of the TDLS setup response frame.

In some embodiments, a STA information field of the first Per-STA profile element includes an available window subfield, where the available window subfield includes indication information indicating a corresponding resource.

In some embodiments, when a second frame including the first Per-STA profile element is used for establishing at least two P2P links, the second frame includes at least two Per-STA profile elements. One of the at least two Per-STA profile elements is used for one P2P link, and the at least two Per-STA profile elements includes the first Per-STA profile element corresponding to the first P2P link.

In some embodiments, a STA control field of the first Per-STA profile element includes an available window present subfield, where the available window present subfield is used for indicating whether the available window subfield includes the indication information.

In some embodiments, the first non-access device and/or the second non-access device are member STAs of the first TWT SP.

In some embodiments, when the at least one P2P link includes at least two second P2P links, a transmission on one of the at least two P2P links and a transmission on another of the at least two P2P links do not interfere with each other.

In some embodiments, transmissions on different P2P links in the at least two P2P links overlap in time domain and/or frequency domain.

In some embodiments, a transmission opportunity used by the first P2P link for P2P transmission includes one of: a transmission opportunity shared by the access point device to the first non-access point device; or a transmission opportunity obtained by the first non-access point device through contention.

In some embodiments, the second communication unit 3601 is further configured to: when the transmission opportunity used by the first P2P link for the P2P transmission is shared by the access point device to the first non-access point device, and the first non-access point device is a member STA of the first TWT SP, transmit a first trigger frame to the first non-access point device during the first TWT SP, where the first trigger frame is used for instructing the first non-access point device to perform the P2P transmission.

In some embodiments, the first trigger frame is used for triggering at least one member STA of the first TWT SP to perform the P2P transmission using the transmission opportunity shared by the access point device.

In some embodiments, the first trigger frame includes a MU-RTS TXS Trigger frame.

In some embodiments, the first trigger frame includes at least one user information field. The user information field includes sixth indication information, where the sixth indication information is used for indicating one member STA of the first TWT SP.

In some embodiments, the first trigger frame includes a common information field, the common information field includes seventh indication information, the seventh indication information is used for indicating that a transmission opportunity obtained by the access point device through contention is shared for the P2P transmission.

In some embodiments, when the transmission opportunity used by the first P2P link for the P2P transmission is shared by the access point device to the first non-access point device, during the first TWT SP, at least one of the following is met: a member STA of the first TWT SP does not contend for a transmission opportunity; a non-member STA of the first TWT SP is free to contend for a transmission opportunity, or contends for a transmission opportunity using a first channel access parameter, or is in a silent state during a first interval announced by the access point device, where the first interval partially or fully overlaps with the first TWT SP in time domain; or the access point device contends for a transmission opportunity using a second channel access parameter, where a priority of the second channel access parameter is higher than a priority of the first channel access parameter.

In some embodiments, when the transmission opportunity used by the first P2P link for the P2P transmission is obtained by the first non-access point device through contention, during the first TWT SP, at least one of the following is met: a member STA of the first TWT SP contends for a transmission opportunity using a third channel access parameter; or a non-member STA of the first TWT SP is free to contend for a transmission opportunity, or contends for a transmission opportunity using a first channel access parameter, or is in a silent state during a first interval announced by the access point device, where the first interval partially or fully overlaps with the first TWT SP in time domain, and a priority of the third channel access parameter is higher than a priority of the first channel access parameter.

In some embodiments, when the transmission opportunity used by the first P2P link for the P2P transmission is obtained by the first non-access point device through contention, a channel used by the first P2P link between the first non-access point device and the second non-access point device is a secondary channel of a first BSS, a transmission of traffic of the first BSS exists on a primary channel of the first BSS, and the first BSS is a BSS to which the first non-access point device belongs.

Those skilled in the art would appreciate that the relevant description of the above wireless communication apparatuses according to the embodiments of the present disclosure may be understood with reference to the relevant description of the link control methods according to the embodiments of the present disclosure.

FIG. 37 is a structural diagram of a communication device 3700 provided in an embodiment of the disclosure. The communication device may be a non-access point device or an access point device. The communication device 3700 illustrated in FIG. 37 includes a processor 3710 configured to invoke and run a computer program from a memory to perform the methods in the embodiments of the disclosure.

Optionally, as illustrated in FIG. 37, the communication device 3700 may further include a memory 3720. The processor 3710 may invoke and run a computer program from the memory 3720 to perform the methods in the embodiments of the disclosure.

Herein, the memory 3720 may be a separate device independent of the processor 3710 or may be integrated in the processor 3710.

Optionally, as illustrated in FIG. 37, the communication device 3700 may further include a transceiver 3730, and the processor 3710 may control the transceiver 3730 to communicate with other devices. Specifically, the processor 3710 may control the transceiver 3730 to transmit information or data to other devices, or receive information or data from other devices.

Herein, the transceiver 3730 may include a transmitter and a receiver. The transceiver 3730 may further include one or more antennas.

Optionally, the communication device 3700 may specifically be the first non-access point device in the embodiments of the present disclosure, and the communication device 3700 may perform corresponding processes performed by the first non-access point device in various methods of the embodiments of the present disclosure, which are not elaborated here for the sake of brevity.

Optionally, the communication device 3700 may specifically be the access point device in the embodiments of the present disclosure, and the communication device 3700 may perform corresponding processes performed by the access point device in various methods of the embodiments of the present disclosure, which are not elaborated here for the sake of brevity.

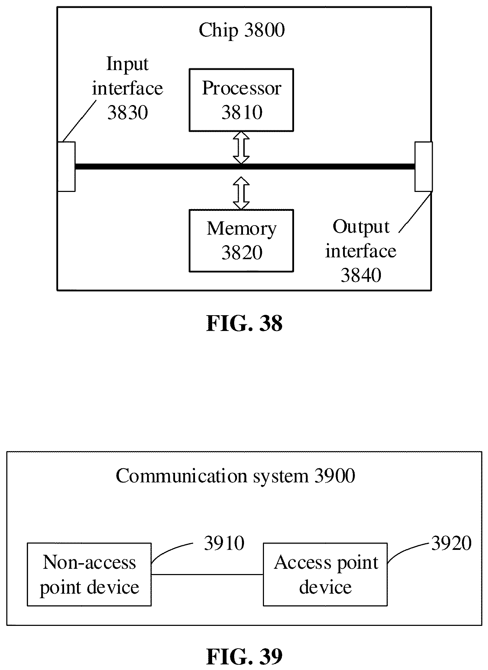

FIG. 38 is a structural diagram of a chip according to an embodiment of the disclosure. The chip 3800 illustrated in FIG. 38 includes a processor 3810 configured to invoke and run a computer program from a memory to perform the methods in the embodiments of the present disclosure.

Optionally, as illustrated in FIG. 38, the chip 3800 may further include a memory 3820, and the processor 3810 may invoke and run a computer program from the memory 3820 to perform the methods in the embodiments of the present disclosure.

Herein, the memory 3820 may be a separate device independent of the processor 3810, or may be integrated in the processor 3810.

Optionally, the chip 3800 may further include an input interface 3830. The processor 3810 may control the input interface 3830 to communicate with other devices or chips. Specifically, the processor 3810 may control the input interface 3830 to acquire information or data transmitted by other devices or chips.

Optionally, the chip 3800 may further include an output interface 3840. The processor 3810 may control the output interface 3840 to communicate with other devices or chips. Specifically, the processor 3810 may control the output interface 3840 to output information or data to other devices or chips.

Optionally, the chip may be applied to the first non-access point device in the embodiments of the present disclosure, and the chip may perform corresponding processes performed by the first non-access point device in various methods of the embodiments of the present disclosure, which are not elaborated here for the sake of brevity.

Optionally, the chip may be applied to the access point device in the embodiments of the present disclosure, and the chip may perform corresponding processes performed by the access point device in various methods of the embodiments of the present disclosure, which are not elaborated here for the sake of brevity.

It should be understood that the chip mentioned in the embodiments of the present disclosure may also be referred to as a system-level chip, a system chip, a chip system, or a system-on-chip chip, or the like.

FIG. 39 is a block diagram of a communication system provided in an embodiment of the disclosure. As illustrated in FIG. 39, the communication system 3900 includes a non-access point device 3910 and an access point device 3920.

Here, the non-access point device 3910 may be used to perform corresponding processes performed by the first non-access point device in above-mentioned methods, and the access point device 3920 may be used to perform corresponding processes performed by the access point device in above-mentioned methods, which are not elaborated here for the sake of brevity. The communication system 3900 may include one or more access point devices 3920, and one access point device 3920 may be associated with multiple non-access point devices, and a P2P link may be established between two non-access point devices.

It should be understood that the processor in the embodiments of the disclosure may be an integrated circuit chip having signal processing capability. In implementation, the various operations of the above method embodiments may be accomplished by integrated logic circuit of hardware or instructions in the form of software in a processor. The processor above may include: a general purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. The methods, operations and logic block diagrams disclosed in embodiments of the present disclosure may be implemented or performed. The general purpose processor may be a microprocessor or the processor may be any conventional processor or the like. The operations of the methods disclosed in combination with the embodiments of the present disclosure can be directly embodied as execution of a hardware decoding processor or combined execution of hardware and software modules in the decoding processor. The software module may be located in a Random-Access Memory (RAM), a flash memory, a Read-Only Memory (ROM), a Programmable ROM (PROM) or an Electrically Erasable EPROM (EEPROM), a register and/or other storage medium mature in the art. The storage medium is located in the memory, and the processor reads information in the memory and completes the operations of the above methods in combination with its hardware.

It can be understood that the memory in embodiments of the present disclosure may be volatile memory or non-volatile memory or may include both volatile and non-volatile memory. The non-volatile memory may be an ROM, a PROM, an Erasable PROM (EPROM), an EEPROM, or a flash memory. The volatile memory may be an RAM which serves as an external cache. By way of illustration but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include but not be limited to these and any other suitable types of memories.

It should be understood that the memory described above is exemplary but not limiting. For example, the memory in embodiments of the present disclosure may also be a SRAM, a DRAM, a SDRAM, a DDR SDRAM, an ESDRAM, an SLDRAM, a DR RAM, or the like. That is, the memory in embodiments of the present disclosure is intended to include but not be limited to these and any other suitable types of memories.

An embodiment of the disclosure also provides a computer-readable storage medium for storing a computer program.

Optionally, the computer-readable storage medium may be applied to the first non-access point device in the embodiments of the disclosure, and the execution of the computer program causes the computer to execute corresponding processes performed by the first non-access point device in various methods of the embodiments of the present disclosure, which are not elaborated here for the sake of brevity.

Optionally, the computer-readable storage medium may be applied to the access point device in the embodiments of the disclosure, and the execution of the computer program causes the computer to execute corresponding processes performed by the access point device in various methods of the embodiments of the present disclosure, which are not elaborated here for the sake of brevity.

An embodiment of the disclosure also provides a computer program product including computer program instructions.

Optionally, the computer program product may be applied to the first non-access point device in the embodiments of the disclosure, and the execution of the computer program instructions causes the computer to execute corresponding processes performed by the first non-access point device in various methods of the embodiments of the present disclosure, which are not elaborated here for the sake of brevity.

Optionally, the computer program product may be applied to the access point device in the embodiments of the disclosure, and the execution of the computer program instructions causes the computer to execute corresponding processes performed by the access point device in various methods of the embodiments of the present disclosure, which are not elaborated here for the sake of brevity.

An embodiment of the disclosure also provides a computer program.

Optionally, the computer program may be applied to the first non-access point device in the embodiments of the disclosure, and the computer program causes a computer to execute corresponding processes performed by the first non-access point device in various methods of the embodiments of the present disclosure when the computer program is run on the computer, which are not elaborated here for the sake of brevity.

Optionally, the computer program may be applied to the access point device in the embodiments of the disclosure, and the computer program causes a computer to execute corresponding processes performed by the access point device in various methods of the embodiments of the present disclosure when the computer program is run on the computer, which are not elaborated here for the sake of brevity.

Those of ordinary skill in the art will appreciate that the units and algorithmic operations of the various examples described in connection with the embodiments disclosed herein can be implemented in electronic hardware, or a combination of computer software and electronic hardware. Whether these functions are performed in hardware or software depends on the specific application and design constraints of the technical solution. Those skilled in the art may use a different method for implementing the described functions for each particular application, but such implementations should not be considered beyond the scope of the disclosure.

Those skilled in the art would clearly appreciate that for the specific operating processes of the above-described systems, devices and units, the references may be made to the corresponding processes in the aforementioned method embodiments and would not be repeated herein, for convenience and brevity of description.

In several embodiments provided herein, it should be understood that the disclosed systems, apparatuses, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other illustrated or discussed may be an indirect coupling or communication connection through some interfaces, devices or units, which may be electrical, mechanical or other forms.

The units illustrated as separate components may or may not be physically separate, and the components displayed as unit may or may not be physical units, that is, the units and the components may be located in one place, or may be distributed over multiple network units. Part or all of the units can be selected according to the actual needs to achieve the purpose of the embodiments.

In addition, various functional units in the embodiments of the present disclosure may be integrated in one processing unit, or various units may exist physically alone, or two or more units may be integrated in one unit.

The functions may be stored in a computer readable storage medium if implemented in the form of software functional units and sold or used as stand-alone products. In view of this understanding, the technical solutions of the present disclosure in essence, or the part that contributes to the related art, or the part of the technical solutions can be embodied in the form of a software product. The computer software product is stored in a storage medium and includes instructions that enables a computer device (which may be a personal computer, server, network device, or the like) to perform all or part of the operations of the methods described in various embodiments of the present disclosure. The aforementioned storage medium includes a USB flash disk, a removable hard disk, a Read-Only Memory (ROM), a Random Access Memory (RAM), a magnetic disk, or an optical disk that can store program code.

The above is merely a specific embodiment of the disclosure, but the scope of protection of the disclosure is not limited thereto. Any person skilled in the art can easily think of changes or substitutions within the technical scope disclosed in the disclosure, and the changes or substitutions should be covered within the scope of protection of the disclosure. Therefore, the scope of protection of the disclosure should be subject to the scope of protection of the claims.

## Claims

1. A transmission control method, comprising:
receiving, by a first non-access point device, first information transmitted by an access point device, the first information being used for indicating a first Target Wake Time (TWT) Service Period (SP), wherein during the first TWT SP, Peer-to-Peer (P2P) transmission is prioritized on at least one P2P link comprising a first P2P link between the first non-access point device and a second non-access point device.

2. The method of claim 1, wherein the first TWT SP is comprised in a first frame transmitted by the access point device to the first non-access point device, the first frame comprising at least one of:
a TWT setup response frame;
a beacon frame;
an association frame or a reassociation frame; or
a probe response frame.

3. The method of claim 2, wherein the first TWT SP is comprised in a first TWT element of the first frame.

4. The method of claim 3, wherein the first TWT element further comprises at least one of:
first indication information for indicating that the first TWT SP is used for P2P link(s);
a parameter of a peer device of the first P2P link; or
channel information of the first P2P link.

5. The method of claim 4, wherein the first indication information is comprised in a request type subfield of a TWT parameter information field of the first TWT element.

6. The method of claim 5, wherein the first indication information is broadcast TWT recommendation information with a value set to a first value in the request field.

7. The method of any one of claims 4 to 6, wherein a condition that the first TWT element comprises the parameter of the peer device of the first P2P link and/or the channel information of the first P2P link comprises: the first TWT element comprises the first indication information.

8. The method of claim 4 or 7, wherein a parameter of the second non-access point device is comprised in a peer subfield of a TWT parameter information field of the first TWT element.

9. The method of claim 4 or 7, wherein the channel information of the first P2P link is comprised in a channel subfield of a TWT parameter information field of the TWT element.

10. The method of any one of claims 3 to 9, wherein if at least two P2P links are established between the first non-access point device and the second non-access point device, and the first frame is a TWT setup response frame, the first frame comprises at least two TWT elements, one of the at least two TWT elements being used for one P2P link, and the first TWT element being used for the first P2P link among the at least two P2P links.

11. The method of claim 10, wherein the first TWT element further comprises a first Traffic Identifier (TID) of the first P2P link.

12. The method of claim 11, wherein the first TID is comprised in a restricted TWT downlink or uplink TID bitmap subfield of a TWT parameter information field of the first TWT element.

13. The method of any one of claims 1 to 12, wherein the first TWT SP is determined based on a first communication requirement, the first communication requirement comprising a communication requirement of the first P2P link, the first P2P link being a P2P link between the first non-access point device and the second non-access point device.

14. The method of claim 13, wherein the communication requirement of the first P2P link is a resource for the first P2P link.

15. The method of claim 13 or 14, wherein the first communication requirement further comprises a communication requirement of a first Basic Service Set (BSS), the first BSS being a BSS to which the first non-access point device belongs.

16. The method of claim 15, wherein the communication requirement of the first BSS is a resource used by the first BSS.

17. The method of any one of claims 13 to 16, wherein if a transmission on the first P2P link and a transmission on a second P2P link do not interfere with each other, the first TWT SP overlaps with a second TWT SP corresponding to the second P2P link in time domain and/or frequency domain, the second P2P link being a P2P link between a third non-access point device and a fourth non-access point device.

18. The method of any one of claims 13 to 16, wherein if a transmission on the first P2P link and a transmission on a second P2P link do not interfere with each other, the first TWT SP is a TWT SP corresponding to the second P2P link, the second P2P link being a P2P link between a third non-access point device and a fourth non-access point device.

19. The method of claim 17 or 18, wherein whether the transmission on the first P2P link and the transmission on the second P2P link interfere with each other is determined based on the first communication requirement and a second communication requirement, the second communication requirement being a communication requirement of the second P2P link.

20. The method of claim 19, wherein the communication requirement of the second P2P link is a resource for the second P2P link.

21. The method of any one of claims 13 to 20, further comprising:
transmitting, by the first non-access point device, a link report frame to the access point device, the link report frame comprising first indication information, the second indication information being used for indicating the communication requirement of the first P2P link.

22. The method of claim 21, wherein the second indication information is comprised in an event report field of an event report element of the link report frame.

23. The method of any one of claims 13 to 22, wherein the first P2P link is a first Tunneled Direct Link Setup (TDLS) direct link.

24. The method of claim 23, further comprising:
receiving or transmitting, by the first non-access point device, a TDLS setup confirm frame, the TDLS setup confirm frame comprising third indication information, the third indication information being used for indicating the communication requirement of the first P2P link.

25. The method of claim 24, wherein the third indication information is carried in a first per-Station (STA) profile element of the TDLS setup confirm frame.

26. The method of any one of claims 23 to 25, further comprising:
receiving or transmitting, by the first non-access point device, a TDLS setup request frame, the TDLS setup request frame comprising fourth indication information, the fourth indication information indicating a communication requirement of an initiator of the first P2P link for the first P2P link.

27. The method of claim 26, wherein the fourth indication information is carried in a first per-Station (STA) profile element of the TDLS setup request frame.

28. The method of any one of claims 23 to 27, further comprising:
transmitting or receiving, by the first non-access point device, a TDLS setup response frame, the TDLS setup response frame comprising fifth indication information, the fifth indication information being used for indicating a communication requirement of a responder of the first P2P link for the first P2P link.

29. The method of claim 28, wherein the fifth indication information is carried in a first per-Station (STA) profile element of the TDLS setup response frame.

30. The method of claim 25, 27 or 29, wherein a STA information field of the first per-STA profile element comprises an available window subfield, the available window subfield comprising indication information indicating a corresponding resource.

31. The method of claim 30, wherein if a second frame comprising the first per-STA profile element is used for establishing at least two P2P links, the second frame comprises at least two per-STA profile elements, one of the at least two per-STA profile elements being used for one P2P link, and the at least two per-STA profile elements comprising the first per-STA profile element corresponding to the first P2P link.

32. The method of claim 30 or 31, wherein a STA control field of the first per-STA profile element comprises an available window present subfield, the available window present subfield being used for indicating whether the available window subfield comprises the indication information.

33. The method of any one of claims 1 to 32, wherein the first non-access device and/or the second non-access device are member Stations (STAs) of the first TWT SP.

34. The method of any one of claims 1 to 33, wherein if the at least one P2P link comprises at least two second P2P links, transmissions on the at least two P2P links do not interfere with each other.

35. The method of claim 34, wherein transmissions on different P2P links among the at least two P2P links overlap in time domain and/or frequency domain.

36. The method of any one of claims 1 to 35, wherein a transmission opportunity used by the first P2P link for P2P transmission comprises one of:
a transmission opportunity shared by the access point device to the first non-access point device; or
a transmission opportunity obtained by the first non-access point device through contention.

37. The method of claim 36, further comprising: if the transmission opportunity used by the first P2P link for the P2P transmission is shared by the access point device to the first non-access point device, the first non-access point device being a member Station (STA) of the first TWT SP,
receiving, by the first non-access point device, a first trigger frame transmitted by the access point device during the first TWT SP, the first trigger frame being used for instructing the first non-access point device to perform the P2P transmission.

38. The method of claim 37, wherein the first trigger frame is used for triggering at least one member STA of the first TWT SP to perform the P2P transmission using the transmission opportunity shared by the access point device.

39. The method of claim 37 or 38, wherein the first trigger frame comprises: a Multi-User Request to Send Transmission Status (MU-RTS TXS) trigger frame.

40. The method of any one of claims 37 to 39, wherein the first trigger frame comprises at least one user information field, the user information field comprising sixth indication information, the sixth indication information being used for indicating one member STA of the first TWT SP.

41. The method of any one of claims 37 to 40, wherein the first trigger frame comprises a common information field, the common information field comprising seventh indication information, the seventh indication information being used for indicating that a transmission opportunity obtained by the access point device through contention is shared for the P2P transmission.

42. The method of any one of claims 36 to 41, wherein if the transmission opportunity used by the first P2P link for the P2P transmission is shared by the access point device to the first non-access point device, during the first TWT SP, at least one of the following is met:
a member Station (STA) of the first TWT SP does not contend for a transmission opportunity;
a non-member STA of the first TWT SP is free to contend for a transmission opportunity, or contends for a transmission opportunity using a first channel access parameter, or is in a silent state during a first interval announced by the access point device, the first interval partially or fully overlapping with the first TWT SP in time domain; or
the access point device contends for a transmission opportunity using a second channel access parameter, wherein a priority of the second channel access parameter is higher than a priority of the first channel access parameter.

43. The method of claim 36, wherein if the transmission opportunity used by the first P2P link for the P2P transmission is obtained by the first non-access point device through contention, during the first TWT SP, at least one of the following is met:
a member Station (STA) of the first TWT SP contends for a transmission opportunity using a third channel access parameter; or
a non-member STA of the first TWT SP is free to contend for a transmission opportunity, or contends for a transmission opportunity using a first channel access parameter, or is in a silent state during a first interval announced by the access point device, the first interval partially or fully overlapping with the first TWT SP in time domain, wherein a priority of the third channel access parameter is higher than a priority of the first channel access parameter.

44. The method of claim 43, wherein if the transmission opportunity used by the first P2P link for the P2P transmission is obtained by the first non-access point device through contention,
a channel used by the first P2P link between the first non-access point device and the second non-access point device is a secondary channel of a first Basic Service Set (BSS), wherein transmission of traffic of the first BSS exists on a primary channel of the first BSS, and the first BSS is a BSS to which the first non-access point device belongs.

45. A transmission control method, comprising:
transmitting, by an access point device, first information to a first non-access point device, the first information being used for indicating a first Target Wake Time (TWT) Service Period (SP), wherein during the first TWT SP, Peer-to-Peer (P2P) transmission is prioritized on at least one P2P link comprising a first P2P link between the first non-access point device and a second non-access point device.

46. The method of claim 45, wherein the first TWT SP is comprised in a first frame transmitted by the access point device to the first non-access point device, the first frame comprising at least one of:
a TWT setup response frame;
a beacon frame;
an association frame or a reassociation frame; or
a probe response frame.

47. The method of claim 46, wherein the first TWT SP is comprised in a first TWT element of the first frame.

48. The method of claim 47, wherein the first TWT element further comprises at least one of:
first indication information for indicating that the first TWT SP is used for P2P link(s);
a parameter of a peer of the first P2P link; or
channel information of the first P2P link between the first non-access point device and the second non-access point device.

49. The method of claim 48, wherein the first indication information is comprised in a request type subfield of a TWT parameter information field of the first TWT element.

50. The method of claim 49, wherein the first indication information is broadcast TWT recommendation information with a value set to a first value in the request field.

51. The method of any one of claims 48 to 50, wherein a condition that the first TWT element comprises the parameter of the peer of the first P2P link and/or the channel information of the first P2P link comprises: the first TWT element comprises the first indication information.

52. The method of claim 48 or 51, wherein a parameter of the second non-access point device is comprised in a peer subfield of a TWT parameter information field of the first TWT element.

53. The method of claim 48 or 51, wherein the channel information of the first P2P link is comprised in a channel subfield of a TWT parameter information field of the TWT element.

54. The method of any one of claims 47 to 53, wherein if at least two P2P links are established between the first non-access point device and the second non-access point device, and the first frame is a TWT setup response frame, the first frame comprises at least two TWT elements, one of the at least two TWT elements being used for one P2P link, and the first TWT element being used for the first P2P link among the at least two P2P links.

55. The method of claim 54, wherein the first TWT element further comprises a first Traffic Identifier (TID) of the first P2P link.

56. The method of claim 55, wherein the first TID is comprised in a restricted TWT downlink or uplink TID bitmap subfield of a TWT parameter information field of the first TWT element.

57. The method of any one of claims 45-56, wherein the first TWT SP is determined based on a first communication requirement, the first communication requirement comprising a communication requirement of the first P2P link, the first P2P link being a P2P link between the first non-access point device and the second non-access point device.

58. The method of claim 57, wherein the communication requirement of the first P2P link is a resource for the first P2P link.

59. The method of claim 57 or 58, wherein the first communication requirement further comprises a communication requirement of a first Basic Service Set (BSS), the first BSS being a BSS to which the first non-access point device belongs.

60. The method of claim 59, wherein the communication requirement of the first BSS is a resource used by the first BSS.

61. The method of any one of claims 57 to 60, wherein if a transmission on the first P2P link and a transmission on a second P2P link do not interfere with each other, the first TWT SP overlaps with a second TWT SP corresponding to the second P2P link in time domain and/or frequency domain.

62. The method of any one of claims 57 to 60, wherein if a transmission on the first P2P link and a transmission on a second P2P link do not interfere with each other, the first TWT SP is a TWT SP corresponding to the second P2P link.

63. The method of claim 61 or 62, wherein whether the transmission on the first P2P link and the transmission on the second P2P link interfere with each other is determined based on the first communication requirement and a second communication requirement, the second communication requirement being a communication requirement of the second P2P link.

64. The method of claim 63, wherein the communication requirement of the second P2P link is a resource for the second P2P link.

65. The method of any one of claims 57 to 64, further comprising:
receiving, by the access point device, a link report frame transmitted by the first non-access point device, the link report frame comprising second indication information, the second indication information being used for indicating the communication requirement of the first P2P link.

66. The method of claim 65, wherein the second indication information is comprised in an event report field of an event report element of the link report frame.

67. The method of any one of claims 57 to 66, wherein the first P2P link is a first Tunneled Direct Link Setup (TDLS) direct link.

68. The method of claim 67, further comprising:
receiving or transmitting, by the access point device, a TDLS setup confirm frame, the TDLS setup confirm frame comprising third indication information, the third indication information being used for indicating the communication requirement of the first P2P link.

69. The method of claim 68, wherein the third indication information is carried in a first per-Station (STA) profile element of the TDLS setup confirm frame.

70. The method of any one of claims 67 to 69, further comprising:
receiving or transmitting, by the access point device, a TDLS setup request frame, the TDLS setup request frame comprising fourth indication information, the fourth indication information being used for indicating a communication requirement of an initiator of the first P2P link for the first P2P link.

71. The method of claim 70, wherein the third indication information is carried in a first per-Station (STA) profile element of the TDLS setup request frame.

72. The method of any one of claims 67 to 71, further comprising:
transmitting or receiving, by the access point device, a TDLS setup response frame, the TDLS setup response frame comprising fifth indication information, the fifth indication information indicating a communication requirement of a responder of the first P2P link for the first P2P link.

73. The method of claim 72, wherein the fifth indication information is carried in a first per-Station (STA) profile element of the TDLS setup response frame.

74. The method of claims 69, 71, 73, wherein a STA information field of the first per-STA profile element comprises an available window subfield, the available window subfield comprising indication information indicating a corresponding resource.

75. The method of claim 74, wherein if a second frame comprising the first per-STA profile element is used for establishing at least two P2P links, the second frame comprises at least two per-STA profile elements, one of the at least two per-STA profile elements being used for one P2P link, and the at least two per-STA profile elements comprising the first per-STA profile element corresponding to the first P2P link.

76. The method of claim 74 or 75, wherein a STA control field of the first per-STA profile element comprises an available window present subfield, the available window present subfield being used for indicating whether the available window subfield comprises the indication information.

77. The method of any one of claims 45 to 76, wherein the first non-access device and/or the second non-access device are member Stations (STAs) of the first TWT SP.

78. The method of any one of claims 45 to 77, wherein if the at least one P2P link comprises at least two P2P links, transmissions on the at least two P2P links do not interfere with each other.

79. The method of claim 78, wherein transmissions on different P2P links among the at least two P2P links overlap in time domain and/or frequency domain.

80. The method of any one of claims 45 to 79, wherein a transmission opportunity used by the first P2P link for P2P transmission comprises one of:
a transmission opportunity shared by the access point device to the first non-access point device; or
a transmission opportunity obtained by the first non-access point device through contention.

81. The method of claim 80, further comprising: if the transmission opportunity used by the first P2P link for the P2P transmission is shared by the access point device to the first non-access point device, the first non-access point device being a member Station (STA) of the first TWT SP,
transmitting, by the access point device, a first trigger frame to the first non-access point device during the first TWT SP, the first trigger frame being used for instructing the first non-access point device to perform the P2P transmission.

82. The method of claim 81, wherein the first trigger frame is used for triggering at least one member STA of the first TWT SP to perform the P2P transmission using the transmission opportunity shared by the access point device.

83. The method of claim 81 or 82, wherein the first trigger frame comprises: a Multi-User Request to Send Transmission Status (MU-RTS TXS) trigger frame.

84. The method of any one of claims 81 to 83, wherein the first trigger frame comprises at least one user information field, the user information field comprising sixth indication information, the sixth indication information being used for indicating one member STA of the first TWT SP.

85. The method of any one of claims 81 to 84, wherein the first trigger frame comprises a common information field, the common information field comprising seventh indication information, the seventh indication information being used for indicating that a transmission opportunity obtained by the access point device through contention is shared for the P2P transmission.

86. The method of any one of claims 80 to 85, wherein if the transmission opportunity used by the first P2P link for the P2P transmission is shared by the access point device to the first non-access point device, during the first TWT SP, at least one of the following is met:
a member Station (STA) of the first TWT SP does not contend for a transmission opportunity;
a non-member STA of the first TWT SP is free to contend for a transmission opportunity, or contends for a transmission opportunity using a first channel access parameter, or is in a silent state during a first interval announced by the access point device, the first interval partially or fully overlapping with the first TWT SP in time domain; or
the access point device contends for a transmission opportunity using a second channel access parameter, wherein a priority of the second channel access parameter is higher than a priority of the first channel access parameter.

87. The method of claim 80, wherein if the transmission opportunity used by the first P2P link for the P2P transmission is obtained by the first non-access point device through contention, during the first TWT SP, at least one of the following is met:
a member Station (STA) of the first TWT SP contends for a transmission opportunity using a third channel access parameter; or
a non-member STA of the first TWT SP is free to contend for a transmission opportunity, or contends for a transmission opportunity using a first channel access parameter, or is in a silent state during a first interval announced by the access point device, the first interval partially or fully overlapping with the first TWT SP in time domain, wherein a priority of the third channel access parameter is higher than a priority of the first channel access parameter.

88. The method of claim 87, wherein if the transmission opportunity used by the first P2P link for the P2P transmission is obtained by the first non-access point device through contention,
a channel used by the first P2P link between the first non-access point device and the second non-access point device is a secondary channel of a first Basic Service Set (BSS), wherein transmission of traffic of the first BSS exists on a primary channel of the first BSS, and the first BSS is a BSS to which the first non-access point device belongs.

89. A first non-access point device, comprising:
a first communication unit, configured to receive first information transmitted by an access point device, the first information being used for indicating a first Target Wake Time (TWT) Service Period (SP), wherein during the first TWT SP, Peer-to-Peer (P2P) transmission is prioritized on at least one P2P link comprising a first P2P link between the first non-access point device and a second non-access point device.

90. An access point device, comprising:
a second communication unit, configured to transmit first information to a first non-access point device, the first information being used for indicating a first Target Wake Time (TWT) Service Period (SP), wherein during the first TWT SP, Peer-to-Peer (P2P) transmission is prioritized on at least one P2P link comprising a first P2P link between the first non-access point device and a second non-access point device.

91. A first non-access point device, comprising: a processor and a memory, wherein the memory is configured to store a computer program, and the processor is configured to call the computer program stored in the memory and run the computer program, to cause the first non-access point device to perform the method of any one of claims 1 to 44.

92. An access point device, comprising: a processor and a memory, wherein the memory is configured to store a computer program, and the processor is configured to call the computer program stored in the memory and run the computer program, to cause the access point device to perform the method of any one of claims 45 to 88.

93. A chip, comprising a processor, configured to call a computer program from a memory and run the computer program, to cause a device installed with the chip to perform the method of any one of claims 1 to 44 or perform the method of any one of claims 45 to 88.

94. A computer readable storage medium for storing a computer program that, when executed, causes a computer to perform the method of any one of claims 1 to 44 or perform the method of any one of claims 45 to 88.

95. A computer program product, comprising computer program instructions that, when executed, cause a computer to perform the method of any one of claims 1 to 44 or perform the method of any one of claims 45 to 88.

96. A computer program that, when executed, causes a computer to perform the method of any one of claims 1 to 44 or perform the method of any one of claims 45 to 88.
